(19) Europäisches Patentamt
European Patent Office
Office européen des brevets

(11) EP 0 700 229 B1

(12) # EUROPEAN PATENT SPECIFICATION

(45) Date of publication and mention of the grant of the patent:
**28.06.2006 Bulletin 2006/26**

(51) Int Cl.:
***H04Q 11/04*** *(2006.01)*

(21) Application number: **95113111.9**

(22) Date of filing: **21.08.1995**

(54) **Connectionless communications system, test method, and intra-station control system**

Verbindungsloses Kommunikationssystem, Testmethode und Intra-Station-Steuerungssystem

Système de communication sans connection, méthode de test et système de gestion intra-station

(84) Designated Contracting States:
**DE FR GB**

(30) Priority: **22.08.1994 JP 25512094**

(43) Date of publication of application:
**06.03.1996 Bulletin 1996/10**

(73) Proprietor: **FUJITSU LIMITED**
**Kawasaki-shi,**
**Kanagawa 211 (JP)**

(72) Inventors:
- **Kobayasi, Yasusi, Fujitsu Limited Kawasaki-shi, Kanagawa, 211 (JP)**
- **Watanabe, Yoshihiro, Fujitsu Limited Kawasaki-shi, Kanagawa, 211 (JP)**
- **Nishida, Hiroshi, Fujitsu Limited Kawasaki-shi, Kanagawa, 211 (JP)**
- **Izawa, Naoyuki, Fujitsu Limited Kawasaki-shi, Kanagawa, 211 (JP)**
- **Murayama, Masami, Fujitsu Limited Kawasaki-shi, Kanagawa, 211 (JP)**
- **Abe, Jin, Fujitsu Limited Kawasaki-shi, Kanagawa, 211 (JP)**
- **Uchida, Yoshihiro, Fujitsu Limited Kawasaki-shi, Kanagawa, 211 (JP)**
- **Yamanaka, Hiromi, Fujitsu Limited Kawasaki-shi, Kanagawa, 211 (JP)**
- **Aso, Yasuhiro, Fujitsu Limited Kawasaki-shi, Kanagawa, 211 (JP)**
- **Tsuruta, Yoshihisa, Fujitsu Limited Kawasaki-shi, Kanagawa, 211 (JP)**
- **Kato, Yoshiharu, Fujitsu Limited Kawasaki-shi, Kanagawa, 211 (JP)**
- **Kakuma, Satoshi, Fujitsu Limited Kawasaki-shi, Kanagawa, 211 (JP)**
- **Uriu, Shiro, Fujitsu Limited Kawasaki-shi, Kanagawa, 211 (JP)**
- **Samejima, Noriko, Fujitsu Limited Kawasaki-shi, Kanagawa, 211 (JP)**
- **Ishioka, Eiji, Fujitsu Limited Kawasaki-shi, Kanagawa, 211 (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

- **Sekine, Shigeru,**
  **Fujitsu Limited**
  **Kawasaki-shi,**
  **Kanagawa, 211 (JP)**
- **Karakawa, Yoshiyuki,**
  **Fujitsu Kyushu Communication**
  **Hakataekimae,**
  **Hakata-ku,**
  **Fukuoka, 812 (JP)**
- **Kagawa, Atsushi,**
  **c/o Fujitsu Communication**
  **Yokohama-shi,**
  **Kanagawa, 222 (JP)**
- **Nakayama, Mikio,**
  **Fujitsu Limited**
  **Kawasaki-shi,**
  **Kanagawa, 211 (JP)**
- **Kawataka, Miyuki,**
  **Fujitsu Limited**
  **Kawasaki-shi,**
  **Kanagawa, 211 (JP)**

(74) Representative: **von Fischern, Bernhard et al**
**Hoffmann Eitle,**
**Patent- und Rechtsanwälte,**
**Arabellastrasse 4**
**81925 München (DE)**



(56) References cited:

| | |
|---|---|
| **EP-A- 0 260 043** | **EP-A- 0 347 754** |
| **EP-A- 0 406 759** | **EP-A- 0 477 553** |
| **EP-A- 0 479 478** | **EP-A- 0 482 551** |
| **EP-A- 0 484 940** | **EP-A- 0 498 967** |
| **EP-A- 0 524 316** | **EP-A- 0 552 385** |
| **EP-A- 0 566 241** | **EP-A- 0 570 630** |
| **WO-A-92/17014** | **WO-A-93/06675** |
| **FR-A- 2 701 618** | **US-A- 4 993 015** |
| **US-A- 5 170 394** | **US-A- 5 251 204** |
| **US-A- 5 278 977** | **US-A- 5 331 637** |
| **US-A- 5 339 318** | |

- **YOKOTANI T ET AL: "BANDWIDTH ALLOCATION FOR CONNECTIONLESS SERVICE IN PRIVATE NETWORKS BASED ON ATM TECHNOLOGY" IEICE TRANSACTIONS ON COMMUNICATIONS, vol. E77-B, no. 3, 1 March 1994, pages 386-395, XP000451013**
- **YIH-KANG MAURICE LIN ET AL: "SCOTS - A SYSTEM FOR TESTING EQUIPMENT CONFORMANCE TO SMDS GENERIC REQUIREMENTS" COMMUNICATION FOR GLOBAL USERS, INCLUDING A COMMUNICATIONS THEORY MINI CONFERENCE ORLANDO, DEC. 6 - 9, 1992, vol. 2, 6 December 1992, pages 1035-1039, XP000357713 INSTITUTE OF ELECTRICAL AND ELECTRONICS ENGINEERS**
- **GIDDY D ET AL: "AN EXPERIMENTAL ATM NETWORK FEATURING DE-COUPLED MODULAR CONTROL" COMMUNICATION FOR GLOBAL USERS, INCLUDING A COMMUNICATIONS THEORY MINI CONFERENCE ORLANDO, DEC. 6 - 9, 1992, vol. 1, 6 December 1992, pages 118-122, XP000357771 INSTITUTE OF ELECTRICAL AND ELECTRONICS ENGINEERS**
- **TURNER J: "Design of a Broadcast Packet Switching Network" IEEE TRANSACTIONS ON COMMUNICATIONS, vol. 36, no. 6, June 1988, pages 734-743, XP002086046 New York**
- **SALLBEERG K ET AL: "ATM TRAFFIC MANAGEMENT AT THE INITIAL DEPLOYMENT OF B-ISDN" ERICSSON REVIEW, vol. 71, no. 4, 1 January 1994, pages 150-159, XP000478223**

## Description

## Background of the Invention

### Field of the Invention

The present invention relates to a connectionless communications system for transmitting data at a high speed, to a method of testing the system, and to an intra-station control system of a switching station for transmitting data at a high speed.

### Description of the Related Art

Recently, high-performance information processing devices such as work stations, personal computers, etc. have been developed to perform a distribution process in which a number of information processing devices are interconnected through a high speed local area network (LAN). The network connecting such LANs should also be provided with high speed processing capabilities.

One of the services to realize the above described high speed data communications is a switched multi-megabit data service (SMDS). The SMDS is a connectionless data switching service based on the transfer speed of 1.5 Mbps and 45 Mbps.

An asynchronous transfer mode (ATM) system is well known as a method of realizing a broadband ISDN, and the SMDS can be provided through an ATM network-In this case, an SMDS processing server (SMDS message handler) is supplied for a predetermined ATM switch, and a permanent virtual circuit or a permanent virtual channel (PVC) connects an SMDS subscriber with the SMDS processing server accommodating the SMDS subscriber. The connectionless data output from the SMDS subscriber is transferred to the SMDS processing server to perform a routing process, etc. at the server.

The connectionless data normally refers to a variable packet (data frame). However, since the above described PVC is a path to be established in a network, the connectionless data is transferred after being converted (decomposed) into an ATM cell format before it is input to the ATM switch. The cell is a 53-byte structure consisting of a 48-byte payload and a 5-byte header.

The ATM cell format data is temporarily structured as the layer-3 protocol data unit (L3-PDU) or in a data format of a higher-level layer in the SMDS processing server as shown in Figure 35 to analyze routing information, etc. according to a destination address DA, a source address SA, etc. stored in the L3-PDU. Then, the data is decomposed again into cells to route the data according to the analyzed information.

As described above, the conventional SMDS is limited in its speed because input cells are structured in a higher level layer data format (for example, in L3-PDUs) when the SMDS processing server performs a routing process through software of a microcomputer program, etc. Additionally, such processes as a data copying process performed when a group address is specified as a destination address DA, a traffic smoothing process, an action against no reception of an end-of-message cell (EOM: a cell storing the last portion of data when an L3-PDU is decomposed into a plurality of cells) have been processed through software by microcomputers, etc.

Thus, the conventional SMDS has been limited in its process speed because the processes in the SMDS processing server are performed through various software. Therefore, when connectionless communications data is transmitted using an SMDS, the operations of the transmission line and switch are sped up with the SMDS processing server processes interfering as a bottleneck, thereby preventing an actual high-speed process from being successfully realized. Furthermore, when the above described structuring process in the SMDS processing server, all cells forming each L3-PDU should be temporarily stored. Therefore, the necessary buffer capacity undesirably becomes very large.

In the SMDS, protocol performance is monitored when a service is offered as follows. That is, the formats of various parameters are checked in the data, and counted is the data which has been rejected by the check (the data which cannot be recognized as valid). A predetermined specific type of check is followed by a counting process performed on the rejected data based on a predetermined algorithm. If the resultant value exceeds a predetermined threshold, then output is a threshold crossing alert (TCA) indicating that the threshold is exceeded. Furthermore, an error log is collected each time data is rejected.

The following parameters are collected in the error log.

(1) Destination address DA
(2) Source address SA
(3) SNI number (subscriber network interface No.)
(4) Error type

In the PVC between the user (subscriber) and the SMDS processing server,

In the PVC between the user (subscriber) and an SMDS processing server, data is transferred in the cell format as described above (actually, the data is transmitted in the ATM cell format and processed in the L2-PDU in the SMDS processing server. The ATM cell and L2-PDU are based on the 53-byte configuration and simply referred to as cells. However, since the above described error log collection is mostly related to the layer 3, the data is received in the cell format and then reassembled into the L3-PDU in the SMDS processing server.

As described above, input cells are reassembled in the data format of the higher order layer (for example, L3-PDU) in the conventional SMDS. This prevents the processes from being performed at a high speed in the SMDS.

The above described services are based on the high reliability of the physical quality of the transmission lines forming the network. Therefore, it is important to test and evaluate the transmission quality of the network.

The test and evaluation of the transmission lines are activated from the OS center (operation center for managing the network) in the connectionless communications service network, and an inter-station loopback test is conducted to confirm the normality of any inter-station link (path between switches). The inter-station loopback test is described below by referring to Figure 36. In this embodiment, the test is conducted to check the link between SW station 3 and SW station 6.

The test is started by issuing a test connectionless packet transmission request message (test start request) from the OS center 1 to SW station 3. The request message contains an identification information ID indicating terminal SW station 6. SW station 3 generates a test packet with the identification address of terminal SW station 6 set as its destination address DA and the identification address of its home station (SW station 3) set as its source address SA. The test packet is output to terminal SW station 6. In SW stations 4 and 5, test packets are processed as normal packets and transferred to terminal SW station 6. On receipt of the test packet, terminal SW station 6 outputs the packet with its DA and SA inverted. That is, the packet is returned from terminal SW station 6 to SW station 3, and it is reported to the OS center 1 upon re-arrival of the packet at the source SW station 3.

Thus, the OS center 1 checks whether or not the packet is normally transmitted in the network, that is, checks the normality of the transmission line (the link between SW station 3 and terminal SW station 6 in this embodiment). In the procedure, since the source SW station 3 and the terminal SW station 6 mark the time stamp onto the payload field of the packet, the OS center 1 is informed of the transmission time of packets according to the information.

However, in the above described test method, the information obtained by the test is to be provided for the OS center (operation center), and no method has been provided for the subscriber (terminal unit 2 in Figure 36) to be autonomously informed of the transmission quality in the network (transmission delay time, etc.). Therefore, if a packet is not normally transmitted from a source subscriber to a destination subscriber, the subscribers cannot detect in which the factor of the fault resides, the subscriber terminal unit or the network transmission line. Thus, the OS center is invoked to recover from the fault, thereby requiring much time and cost.

Figure 37 shows an embodiment of the SMDS. In Figure 37, the SMDS support module analyzes a destination address DA and makes various checks. An SMDS support module S accommodates a plurality of source SMDS subscribers (a) and (b) to analyze a DA and make various checks. The SMDS support module R accommodates a plurality of destination SMDS subscribers (x) and (y) to make various checks. The modules comprising these S and R correspond to the above described SMDS processing server (SMDS message handler).

Each of the source SMDS subscribers (a) and (b) is connected to the SMDS support module S through the PVCs 1 and 2. The SMDS support module S is connected to the SMDS support module R through the PVC 3. The SMDS support module R is connected to each of the destination SMDS subscribers (x) and (y) through the PVC 4 and 5.

If the SW shown in Figure 37 comprises an ATM switch, the connectionless data (SMDS message) output from the source SMDS subscribers (a) and (b) is converted into the cell format in the interface not shown in Figure 37. The cell is transferred to the SMDS support module S by assigning to the header of the cell a specific VPI/VCI specifying the SMDS support module (VPI/VCI specifying the PVC 1 and 2) as its destination. In the transfer between the SMDS support modules S and R, the VPI/VCI value indicating the PVC 3 is assigned and output. The cell transferred from the SMDS support module R to the destination SMDS subscribers (x) and (y) with a specific VPI/VCI value indicating the PVCs 4 and 5 is output from the SMDS support module R, and arrives at the destination SMDS subscribers (x) and (y). Each of the PVCs is established at the system initialization.

Since the numbers of the source and destination SMDS subscribers accommodated in the SMDS support modules S and R are limited, a plurality of SMDS support modules are provided if a single SW station accommodates SMDS subscribers in excess of the maximum number. Figure 38 shows an example of this. In this case, each connection is made by the PVC. Figure 900 shows an example that SMDS subscribers (a), (b), (x), and (y) are accommodated in the SMDS support module 1 and SMDS subscribers (c), (d), (v), and (w) are accommodated in the SMDS support module 2. The PVC also connects SMDS support module 1 to SMDS support module 2.

As described above, the data transfer path is set at the system initialization in the SMDS. If the source SMDS subscribers (a) and (b) output SMDS messages, the messages are led to the SMDS support module S through the PVCs 1 and 2, and transferred to the destination SMDS subscribers (x) and (y) through the PVCs 3, 4, and 5. Therefore, it cannot be verified that the SMDS messages output from the source SMDS subscribers (a) and (b) have arrived at the destination SMDS subscribers (x) and (y) through the PVCs.

If the data cannot be successfully transferred, a complaint is expected from the source SMDS subscribers (a) and (b) or destination SMDS subscribers (x) and (y). The subscriber's complaint should be appropriately verified at the lowest possible cost.

The PVC test and the transmission time test are described above, and the SMDS needs confirming the normality of the transmitted SMDS data. The method of confirming the normality of data includes checking the BS-size of the L3-PDU, length of the L2-PDU, etc.

In the BA-size check, it is confirmed whether or not the value for use in checking the payload length of the L3-PDU (CPCS-PDU) is correct. In the BE-tag (beginning tag and end tag) check, the normality of the L3-PDU data can be confirmed by verifying the matching between the leading and trailing tags of the L3-PDU. In the length check, it is confirmed that the assembling and disassembling between the L3-PDU and L2-PDU are normally performed by verifying the relationship between the valid payload length value of the L2-PDU and the BA-size of the L3-PDU.

When the normality of the L3-PDU is confirmed in the disassembled L2-PDUs, the scale of the circuit becomes undesirably large. Since the BA-size and BE-tag of the L3-PDU and the length of the L2-PDU are checked as being closely related to one another, it is difficult to perform a process for each cell (for each L2-PDU). If the data in the format of the cell input to the SMDS processing server (L2-PDU) is processed after being assembled into the L3-PDU, a high-speed process is prohibited by the software process involved as described above.

When the connectionless communications service is realized in the ATM switch network, a connectionless data processing server (SMDS processing server in the SMDS) is provided to request the server to check the routing process on the connectionless data output from the subscriber terminal unit and to make various checks. Figure 39 shows an example of the method of realizing such connectionless communications services. The configuration shown in Figure 39 is the same as that shown in Figure 37. That is, a PVC 11 is set between the source SMDS subscriber (a) and the connectionless data processing server CLS 2. A PVC 13 is set between the destination SMDS subscriber (x) and the connectionless data processing server CLS 6. These PVCs are set using a call processor CPRs 3 and 7.

In the configuration shown in Figure 39, the connectionless data processing server CLS 2 accommodating the source subscriber (a) and the connectionless data processing server CLS 6 accommodating the destination subscriber (x) are provided in different switch stations. That is, the connectionless data processing server CLS 2 is provided in the SW station 1, while the connectionless data processing server CLS 6 is provided in the SW station 5. These connectionless data processing servers CLS 2 and 6 are connected to each other by the PVC 12. A large-scale relay switch 4, in which the PVC 12 is provided, has the configuration of relaying switches such as SW 1 or SW 5, or is an ATM interconnection switch (AISW).

When connectionless data is transferred from the source SMDS subscriber (a) to the destination SMDS subscribes (x) with the above described configuration, the data output from the source SMDS subscriber (a) is input to the connectionless data processing server CLS 2 through the PVC 11, and then transferred to the connectionless data processing server CLS 6 through the PVC 12. Then, it is transferred to the destination SMDS subscriber (x) from the connectionless data processing server CLS 6 through the PVC 13. The data is transferred thorugh the PVCs in cell units and routed by the connectionless data processing servers CLS 2 and 6.

In the conventional connectionless communications sevice, the connectionless data processing server CLS 2 accommodating the source SMDS subscriber (a) is connected to the connectionless data processing server CLS 6 accommodating the destination SMDS subscriber (x) through the PVC 12 as shown in Figure 39 if these servers are different from each other. The PVC 12 is set such that it passes through the SWs 1 and 5, and the large-scale relay switch 4. Therefore, the band resource for connectionless services should be preliminarily reserved in the switches to manage the services.

In the conventional systems, the band resource for each switch is used even when the connectionless service data is not being transmitted, and the band resource management is complicated.

By contrast, the switches for switching cells such as a B-ISDN (broadband ISDN) switch for providing broadband services, for example, ATM (asynchronous transfer mode) services, an SMDS switch for providing SMDS (switched megabit data service) services, etc. require considerably high performances and functions as compared with the conventional telephone switches or N-IDSN (narrowband ISDN) switches. Therefore, these switches require unique technology for intra-station control.

The prior art technology and the problems are clearly described below.

Described below is the problems related to the intra-station control communications technology for communicating the control information between the intra-station devices such as various transmission line interface device (trunk), etc. and the switch processor.

In controlling the intra-station devices in the conventional switching system, each of the intra-station devices 6 and 7 for operating with an ATM switch 5 is connected through an input control device 4 to a system bus 3 to which a switch processor $(CC)_1$ is connected as shown in Figure.40 to transfer the control information between the intra-station device and a main storage memory (MM) 2 connected to the CC 1 by the direct memory access (DMA) system.

In this system, however, all the intra-station devices 6 and 7 should be connected to the system bus 3, and the cable should be mounted to connect the intra-station devices 6 and 7 to the system bus 3. Thus, the farther the intra-station devices 6 and 7 are located from the system bus 3, the longer the cable should be, thereby causing the problem of complicated connection.

Connecting all the intra-station devices 6 and 7 to the system bus 3 causes a conflict for the acquisition of an access right required to access the bus, thereby resulting in the congestion of bus access.

Furthermore, extending the system bus 3 to each of the intra-station devices 6 and 7 lowers the transmission quality, and may generate a transmission error such as a data error and parity error in the DMA procedure which includes no error control procedure.

Described next is the problem related to the technology for communicating control information such as call setting information, etc. between a terminal unit and a control device such as a switch processor.

Controlling a terminal interface device in the ATM switch system, etc. requires communicating control information with a control system device such as a switch processor, etc.

The conventional technology to communicate control information can be the system in which a physical interface is connected to a terminal unit (TERM) 4 connected from the control system device (MPR1 and PRIF2) to the switch (SW) 3 as shown in Figure 41 as in the case shown in Figure 40.

Since a physical interface is required for each terminal 4 in this system, the entire system configuration is complicated and the problem occurs that the terminal units 4 cannot easily added.

Described below is the subject related to the technology of testing a switch as an intra-station control system.

In the ATM switch, etc, a test is conducted whether or not a cell transmission highway is faulty by connecting to a highway a test device for sending cells and retrieving and collecting received cells. In this case, a test cell is transmitted after setting the destination information VPI (virtual path identifier), VCI (virtual channel identifier), cell loopback in the test device, and other LSIs through the test device.

However, such a system requires a complicated configuration of a test device, and takes time in setting a test device.

Described below is the loopback test in the technology of testing switches.

With an increasing use of ATM switches and ATM switch network in which the information of different traffic characteristics such as voice, data, animation, etc. can be combined and switched, a test of confirming the normality of an inter-station path has been required. If a fault occurs between the two stations having a lot of stations existing between the two stations in an actual operation, it is required that faults should be detected and corrected at the earliest possible stage. The loopback test method of an ATM switch network is an effective test method for quickly detecting a fault between the stations.

The ATM switch has just been introduced in the market, and the ATM switch has never been tested between stations. However, the following test method is considered to be an effective inter-station ATM switch network test method based on the conventional electronic switch test method.

According to this method, if a number of stations exist in the ATM switch network, a test device should be provided for each test device.

If there are not sufficient test devices, a test device should be shared among stations for the test.

Furthermore, some stations are not constantly attended by operators and the operators should go to the stations to conduct the test.

Thus, in the above described method, operators are required to go to trouble in conducting an inter-station test.

Described next is the subject related to the technology of measuring the performance in a switch according to the intre-station control system.

The self routing module (SRM) switching method using the ATM is the condition for structuririg a broadband ISDN system. However, measuring the performance in the SRM has been a difficult-task.

Finally, the subject related to the control of a trailer in the PLCP, which is a physical layer conversion protocol interfaced in the DS3 format, that is, the digital signal level 3 format, is described below as one of the intra-station control system.

In the B-ISDN or SMDS service, the DS3 (digital signal level 3) format is used to realize the service of 44.736 MHz.

Figures 42 and 43 show examples of system configurations according to the present invention. Figure 42 shows the configuration in which the BISDN terminal unit is connected to the BISDN switch. Figure 43 shows the configuration in which the SMDS terminal unit is connected to the SMDS switch. The present invention is related to the transmitting units in the BISDN terminal unit and BISDN switch or the SMDS terminal unit and SMDS switch.

Figure 44 shows the configuration of the DS 3 multi-frames. The DS 3 frame comprises 85-bit basic frames. The basic frame comprises a 1-bit DS 3 header and an 84-bit DS3 payload. Eight basic frames form a subframe, and seven subframes form a single mult-frame. That is, one multi-frame consists of 56 (8 x 7) basic frames.

The ATM cell of the BISDN is a 53-octet cell, and the L2-PDU (level 2 protocol data unit cell) of the SMDS is a 53-byte cell. That is, they are similar in basic configuration, but different in contents of teh header and payload and in value of th HEC and HCS. Figure 45(a) and (b) show the configurations of the ATM cell and L2-PDU cell.

An ATM cell or L2-PDU cell are not directly stored in the payload of the DS3 reference frame, and transmitted through the frame of the PLCP (physical layer convergence protocol).

Figure 46 shows the configuration of the PLCP multiframe interfaced in the DS3 format.

Each of the ATM cell or L2-PDU cell is stored in a 53-octet PLCP payload in the PLCP frame. The PLCP multiframe is divided into 84-bit segments, and each segment is stored in an 84-octet DS3 payload in the DS3 frame and then transmitted.

The PLCP frame is a multiframe comprising 12 pairs of a 4-byte PLCP header and 53-byte PLCP payload and a trailer. The PLCP header comprises A1 and A2 bytes, POHI, and POH. The trailer length is 13 or nibbles. A nibble is 4 bits and refers to a half byte. The trailer data is 13 or 14 4-bit patterns "1100".

One PLCP multiframe is transmitted at an average of 125 μsec (8 KHz cycle). Variable trailer length defines an average value.

Described below is the trailer. Since the DS3 frame is transmitted at a speed of 44.736 MHz, 5592 bits are transmitted in the 125-μsec period according to the following equation.

[equation 1]

$$\text{number of bits} = 44.736 \times 10^{6}\ (\text{bit/sec}) \times 125 \times 10^{-6}(\text{sec}) = 5592\ \text{bits}$$

However, the data forming the DS3 frame comprises a 1-bit frame bit data and an 84-bit DS3 payload, the number of bits in the DS3 payload for the period of 125 μsec is 5592 x 84/85 = 5526.211... as not divisible.

The number of bits in the PLCP multiframe is 57 x 12 x 8 + 13 x 4 = 5524 bits when the trailer length is 13 nibbles, and 57 x 12 x 8 + 14 x 4 = 5528 bits when the trailer length is 14 nibbles. That is, there is a residue in the DS3 payload in the 125-μsec period when the trailer length is 13 nibbles, and there is a deficiency in the DS3 payload in the 125-μsec period when the trailer length is 13 nibbles.

To transmit PLCP multiframes at an average speed of 125 μsec (8 KHz cycle), the PLCP multiframes are transmitted with their trailer length changed between 13 and 14 nibbles.

A C1-byte cycle staff counter is used to display the trailer length (refer to Figure 46). Figure 47 shows the definition related to the cycle staff counter.

As shown in Figure 46, the C1 byte is cyclically changed on three multiframe cycles. In the first multiframe, C1 refers to $FF_H$ and the trailer length is 13 nibbles. In the second multiframe, C1 refers to $OO_H$ and the trailer length is 14 nibbles. In the third multiframe, C1 refers to $66_H$ or $99_H$ and the trailer length is 13 nibbles for C1=$66_H$ and 14 nibbles for C1=$99_H$. The trailer length of 13 or 14 nibbles is determined such that the PLCP multiframes are transmitted at an average speed of 125 μsec (8 KHz cycle).

Then, there arises a problem as to what the value of C1 of the third multiframe should be, that is, how to control the trailer. Described below is the conventional method of controlling the trailer.

Assuming that the pattern p refers to 13 nibbles for the third multiframe and the pattern Q refers to 14 nibbles for the third multiframe, the number of nibbles for the trailer changes 13 → 14 → 13 for the pattern P, and 13 → 14 → 14 for the pattern Q.

In the 125 μsec period, the number of bits of the DS3 payload is 5592 x 84/85 = 5526.211... The number of bits in the PLCP multiframes is 5524 when the trailer length is 13 nibbles, and 5528 when the trailer length is 14 nibbles. Therefore, the cycle of the PLCP multiframe is fast on the cycle of 125 μ sec when the PLCP multiframe pattern is P, and is behind on the cycle of 125 μ sec when the PLCP multiframe pattern is Q.

Conventionally, the cycle of a transmitted PLCP frame is monitored, and the phase of the extracted clock is compared with the phase of the 8 KHz clock obtained by dividing 44.736 MHz. If the phase of the PLCP multiframe to be transmitted is forward, the trailer pattern is switched to P. If it is behind, the trailer pattern is switched to Q. Thus, the transmission cycle of the PLCP multiframe is adjusted properly.

Figures 48 and 49 are timing charts showing the circuit configuration and the operation for realizing the above listed functions.

A PLCP frame cycle monitoring unit 7 monitors the transmission cycle of the PLCP frames to be transmitted from a selector 3 to output a phase comparison pulse S for every third PLCP frame. A dividing unit 6 generates 8 KHz clock by dividing 44.736 MHz clock by 5,592 generated by a clock generating unit 5. A phase comparing unit 8 compares the phase comparison pulse S with the phase of the 8 KHz clock, and outputs a pattern switch signal C as a value of 1 when the phase comparison pulse S is behind and a value of 0 when is forward.

The selector 3 selects input A1 and A2 according to the pattern switch signal C. That is, the selector 3 selects the pattern P when the pattern switch signal C indicates 0 and selects the pattern Q when it indicates 1.

The PLCP frame generating units 1 and 2 for the patterns P and Q store an ATM cell or an L2-PDU cell in the PLCP payload and add a PLCP header and trailer to assemble a PLCP frame.

The pattern P PLCP frame generating unit 1 adds a trailer for indicating the number of nibbles 13, 14, and 13 on three cycles. The pattern Q PLCP frame generating unit 2 adds a trailer for indicating the number of nibbles 13, 14, and 14 on three cycles.

The DS3 interface unit 4 inserts a PLCP frame into the DS3 payload and adds a DS3 header to assemble and transmit a DS3 frame.

However, the above described conventional technology selects a trailer pattern according to the phase comparison result, and the transmission order of the pattern P and Q is not fixed.

As a result, there arises a problem that the complicated operations generate a complicated circuit.

Additionally, there is a problem of a large deviation of transmission timing.

The following functions are required to realize the multicasting capabilities (point-to-multipoint connection) in the ATM switch.

1. Copying a cell
2. Reassigning a VPI/VCI

The efficiency in use of the resources as a switch is higher when cells are copied at a point nearer to the exit of the exchange station. The copied cells are distributed to each subscriber. The cells distributed to each subscriber has different VPI/VCIs. That is, the VPI/VCI depends on the destination subscriber. The number of bits of the VPI/VCI is equal to or larger than 22 bits. Simply converting the large number of bits undesirably results in large-scale hardware.

The ATM switch exchange cells in a self-routing system. If a large-capacity system performs a self-routing process, the efficiency of the switch is higher when the multicasting capabilities are supported in the switch. Thus, the entire system can be smaller in size with the cost reduced.

The services supported in the B-ISDN should include a large number of point-to-multipoint connection services as well as multicasting capabilities. To reduce the scale of the entire switch, the multicasting capabilities added to realize the point-to-multipoint connection should be minimized for smaller scale and cost. Furthermore, the future extension of the multicasting capabilities should be considered.

In the point-to-multipoint connection, such information as specifies the number of copied cells and the destination of each of the copied cells is required. The information is normally set as tag information added to the cell when it is input to the exchange station. However, since the amount of the above described information is not small, the tag information occupies about 10 bytes. Adding such tag information to a cell makes the entire cell length longer than in the exchange station. That is, when the tag information is longer, the ratio of the actual data to the entire cell becomes smaller, thereby lowering the throughput.

Figure 50 shows the configuration of the form of the conventional multicasting capabilities. In Figure 50, a source terminal 1 multicast-transfers data to destination terminals 4-1 - 4-5 through an ATM switch 2.

Line 3 connects the source terminal 1 with the ATM switch 2. The line 3 can multiplex and transmit a plurality of calls (paths). The ATM switch 2 is also connected to the destination terminals 4-1 - 4-5 through a subscriber line capable of multiplexing and transmitting data. In the ATM switch 2, a virtual path is set according to the destination information written in the cell transmitted by the source terminal 1. In the example shown in Figure 50, virtual paths 5-1 - 5-5 are set as paths for transferring cells to the destination terminals 4-1 - 4-5.

In the above described multicasting transfer, cells are copied for the destination terminals in the source terminal 1 and transferred through the paths set between the source terminal 1 and the destination terminals 4-1 - 4-5. At this time, 5 channels are multiplexed in the line 3 to transfer cells to the destination terminals 4-1 - 4-5. That is, the bands of 5 channels are occupied.

Thus, since N paths are set between the source terminal and destination terminal when 1:N multicast transfer is made according to the conventional method shown in Figure 50, the resources for the line 3 and ATM switch 2 have been used more than necessary and the load on the source terminal 1 has been heavy.

It is expected that the demand for dynamic images will greatly increase. For example, members of companies in the distance have a lot of opportunities to have things settled through conferences over telephone using dynamic images. These services not only satisfy individual subscribers but also promote business smoothly regardless of geographical disadvantages.

Nevertheless, these services have not been sufficiently offered. That is, the 1:1 communications are more popular than the private line services in the broadband communications network, and the method of controlling the multi-terminal connection, for example, a three-subscriber communications has not been put to practical use.

Described below is the problem related to the process performed in the event of a failure on a device in the exchange station which processes a transmission line.

With the ATM switch, a communications line system device in the exchange station processes a number of virtual lines (hereinafter referred to simply as lines) specified by individual VPI/VCIs. When a failure occurs on a communications line system device, how to handle the lines processed by the device is very important in maintaining the quality of the communications.

When a failure occurs on a communications line system device in the exchange station, a call connected through the line processed by the device is compulsorily terminated by a compulsory release process activated by the fault monitor process for the entire system. Therefore, the subscribers have the problem that the communications may be suddenly terminated.

The conventional systems have not provided the mechanism of managing the line processed by the communications line system device.

Described below is the problem relating to the process performed when a failure is detected on the line.

When a line failure is detected on a single-structured, not duplex, ATM switch, the transmission information such as subscriber information, billing information, traffic information, performance information, etc. is saved by a line switch process in physical line units using a reserved line, etc. conventionally.

Practically, if a failure is detected on one physical line when a remote concentrator 1 and an ATM switch 2 are connected through a plurality of physical lines as shown in Figure 51, then the faulty band or an idle band for other lines are not used, but the state of the faulty line is assigned to a new alternate line such as a spare line, etc.

Therefore, even though large idle bands exist in other lines, they are not utilized effectively, thereby lowering the use rate of the lines.

To perform a line switch process in physical line units, it is necessary either to reserve sufficient spare lines or to duplex each of the physical lines. As a result, the communications may cost high.

It is also necessary to duplex the intra-station device such as a communications system device, etc. in the exchange station to maintain the reliability of the communications. If a failure occurs on the intra-station device of the active system, then various communications control data are transferred to the intra-station device of a standby system to stop the operation of the intra-station device which has been a device in the active system and start the operation of the intra-station device which has been an intra-station device of the standby system.

In this case, various communications control data set in the intra-station device of the active system have been conventionally transferred to the intra-station device of a standby system by a processor controlling the intra-station device. However, since the amount of the various communications control data is large for the ATM switch, etc., a long time is required by the processor to transfer the data from the intra-station device of an active system to the intra-station device of a standby system, thereby disadvantageously affecting the reliability of the exchange station when a failure occurs on the exchange station.

In WO 93/06674 A there is disclosed a self-routing nonblocking multicast network which routes input messages to destined addresses by examining a routing tag combined in each message. The routing tag has a plurality of sections, each section corresponding to a level of a tree hierarchy related to the outputs of the switching network. The network sorts the messages by examining only one section of each routing tag and routes the sorted messages to the destined addresses based on the bits contained in the routing tags.

## SUMMARY OF THE INVENTION

According to the present invention there is provided a switching system, including a switch, provided in a network for autonomously routing a cell containing data and data control information according to the control information to provide a point-to-multipoint connection service, characterized in that the switching system is adapted to make said point-to-multipoint connection by use of a bit map through internal functions of the switch and adapted to add bit map information about a path of an input cell to the input cell.

## BRIEF DESCRIPTION OF THE DRAWINGS

[Figure 1]
shows the configuration of the switch for realizing the point-to-multipoint function. (a) indicates a trunk system; (b) indicates an input copy system; and (c) indicates an internal copy system.
[Figure 2]
is a table showing the features of the three systems shown in Figure 1.
[Figure 3]
shows the configuration for realizing the point-to-multipoint connection using the internal copy system.
[Figure 4]

shows the system for realizing the above described bit map without extending the cell length.
[Figure 5]
shows the VPI/VCI decoding circuit.
[Figure 6]
shows the configuration of a point-to-multipoint connection.
[Figure 7]
shows the configuration of the buffer and output unit VCCT provided for each output line.
[Figure 8]
is a table of the contents of the output unit VCCT set by the firmware according to the software settings.
[Figure 9]
shows an example of a table on which an output VPI/VCI is set.
[Figure 10]
is a flowchart explaining the process of the VCCT of the output unit.
[Figure 11]
shows the configuration of the switching system whose switch is equipped with a VCCT at its entry point.
[Figure 12]
shows the configuration of the switching system according to the present embodiment.
[Figure 13]
shows the format of a cell in the switch.
[Figure 14]
shows the configuration of the exchange station according to the present embodiment.
[Figure 15]
shows an example of the configuration of the control information for a point-to-multipoint connection.
[Figure 16A]
shows the configuration of the buffer of a switch.
[Figure 16B]
shows an example of the switching bit map in the point-to-multipoint connection control information.
[Figure 17]
shows another characteristic configuration of the present invention.
[Figure 18]
shows an example in which the multicast function of the present embodiment is applied to the video distribution service.
[Figure 19]
shows the configuration of the multicast device 130.
[Figure 20]
shows the configuration of the system for communications among a plurality of communicators through a multiple communications trunk built in the exchange station.
[Figure 21]
shows the configuration of the system for multiple subscriber communications using a multiple termination unit in the subscriber line.
[Figure 22]
is a process flowchart showing the 3-subscriber communications service in the system shown in Figure 851.
[Figure 23]
is a flowchart showing the process of the multiple subscriber communications service in the system shown in Figure 20.
[Figure 24]
is a flowchart showing the process of the multiple subscriber communications service using a group identification number.
[Figure 25]
shows the flowchart of the process in the 3-subscriber communications service in the system shown in Figure 21.
[Figure 26]
is a flowchart showing the multiple subscriber communications service in the system shown in Figure 21.
[Figure 27]
is a flowchart of the call waiting service in the system shown in Figure 20.
[Figure 28]
is a flowchart (1) of a call transfer service in the system shown in Figure 20.
[Figure 29]
is a flowchart (2) of a call transfer service in the system shown in Figure 20.

[Figure 30]
is a flowchart showing the point-to-multipoint connection service in the system shown in Figure 851.
[Figure 31]
is a flowchart of the call waiting service provided by the system shown in Figure 21.
[Figure 32]
is a flowchart (1) of the call transfer service provided by the system shown in Figure 21.
[Figure 33]
is a flowchart (2) of the call transfer service provided by the system shown in Figure 21.
[Figure 34]
is a flowchart of the point-to-multipoint connection service provided by the system shown in Figure 21.
[Figure 35] shows the relationship between the L3-PDU and a cell.
[Figure 36] shows the conventional inter-station loopback test method.
[Figure 37] shows the configuration (1) of a common SMDS system.
[Figure 38] shown the configuration (2) of a common SMDB system.
[Figure 39] shows the method of realizing the conventional connectionless services.
[Figure 40] shows another conventional technology.
[Figure 41] shows another conventional technology.
[Figure 42] shows the configuration in which the BISDN terminal unit is connected to the BISDN switch.
[Figure 43] shows the configuration in which the SMDS terminal unit is connected to the SMDS switch.
[Figure 44] shows the configuration of the DS3 multiframe.
[Figure 45] shows the configuration of the ATM cell and L2-PDU cell.
[Figure 46] shows the configuration of the PLCP frame interfaced in the DS3 format.
[Figure 47] shows the restrictions related to the cycle stuff counter.
[Figure 48] shows the conventional circuit for transmitting a PLCP multiframe.
[Figure 49] is a timing chart showing the operation of the conventional transmission circuit of a PLCP multiframe.
[Figure 50]
shows the configuration of a conventional multicast connection.
[Figure 51]
shows the problems of the conventional technology in which lines are switched in physical line units when a failure occurs on the line itself.

DESCRIPTION OF THE PREFERRED EMBODIMENTS

Described below is the switch having multicasting capabilities.

The switch according to the present embodiment is based on the ATM switch for switching an ATM cell. In the ATM switch, the following functions are required to realize the multicasting capabilities.

1. Copying a cell
2. Reassigning a VPI/VCI

When a cell is copied, the two following processes are required.

1. Copying in a switch
2. Copying on the same line

Figure 1 shows the configuration of the switch for realizing the point-to-multipoint function. (a) indicated a trunk system; (b) indicates an input unit copy system; and (c) indicates an internal copy system.

(1) Trunk system: A point-to-multipoint connection cell which is output from a source terminal and distributed to a plurality of subscribers temporarily enters a trunk (for example, a message handler in the SMDS) through a switch. After copying cells and reassigning their VPI/VCIs in the trunk, the cells are transferred again to the switch and distributed to a plurality of destination subscribers.
(2) Input unit copy system: A block is provided before.a switch to copy cells to. A point-to-multipoint cell is copied to the block. The switch only has the function of switching (connecting) a copied cell.
(3) Internal copy system: A cell is copied in the multistage self-routing (MSSR) configuration.

In the point-to-multipoint connection cell, information indicating that the cell is a point-to-multipoint connection cell is set. The point-to-multipoint connection cell represents a plurality of destination subscribers by, for example, the VPI/VCI of the cell.

Figure 2 is a table showing the features of the three systems shown in Figure 1.

If there are a small number (10 - 100) of point-to-multipoint connections supported in the system, the trunk system is recommended. If there are a large number (100 or more) of point-to-multipoint connections supported in the system, the input unit copy system or the internal copy system is recommended. If the number of sources requesting the point-to-multipoint transfer is almost equal to that of the lines (channels) of the cell destination subscribers, then the input unit copy system is recommended. If these numbers are quite different, then the internal copy system is recommended.

As a switch network, even if there is a small difference in number of channels of lines between the source and destination subscribers, there can be a case in which internal copy system is recommended. That is, when a point-to-multipoint connection is provided, a source device does not have to provide a plurality of sources. However, in consideration of available bands, the same band as the point-to-multipoint connection is used. As a result, the input copy system does not have advantageous points as a switching network. If there is large difference between the source and subscriber lines in a switch, the internal copy system is advantageous because it does not require adding blocks (copy function shown in Figure 1. Thus, an internal copy system is advantageous especially it is used in a large scale system.

Figure 3 shows the configuration for realizing the point-to-multipoint connection using the internal copy system.

When the point-to-multipoint connection is realized by the internal copy system, a bit map is used. Assuming that there are 64 output paths and the concentration ratio is 4 : 1 in the MSSR, the output paths to individual lines are 16 x 4 x 64 = 6496 in excess of the number displayed by the bit-map representation. Therefore, the multicast connection system according to the present embodiment is configured as follows.

1. 1st stage in the MSSR: point-to-multipoint connection
2. 2nd state in the MSSR: bit map for point-to-multipoint connection
3. 3rd stage in the MSSR: bit map for point-to-multipoint connection
4. DMUX unit: bit map through decoding the VPI/VCI

The number of bits used in the bit map in the point-to-multipoint connection is defined as follows.

1. 1st stage in the MSSR: 3 bits (for an 8x8 switch for instance)
2. 2nd stage in the MSSR: 8 bits
3. 3rd stage in the MSSR: 8 x 8 bits

Each bit in the above described bit map is written to a tag area added to each cell in the switch. In the case above, 9 octets are required for a tag area. However, the size of the tag area in the switch can be optionally set for each switch, and the above described bit map can be realized with the tag information set for 9 octets and the length of each cell set for 64 octets. If the cell length is set to a larger value, the clock should be sped up in performing processes in the switch. For example, if 54-octet cells are normally processed, the clock speed should be 64/54 times sped up.

Figure 4 shows the system or realizing the above described bit map without extending the cell length.

In this case, the bit map processed by the 3rd stage of the MSSR with the configuration shown in Figure 4 is processed by the external trunk 2. That is, the point-to-multipoint connection cell transmitted to the switch 1 is input to the trunk 2 and copied the number of connections for the 3rd stage of the MSSR in the switch 1. A VCCT 3 is provided at the output unit of the trunk 2 for adding an 8-bit bit map to each of the copied cells and transferring it to the switch 1. Thus, the bit map for the point-to-multipoint bit map can be realized without extending the cell length.

Figure 5 shows the VPI/VCI decoding circuit. The VPI/VCI decoding circuit shown in Figure 5 is provided in, for example, the DMUX unit shown in Figure 3.

The table 11 provided in the VPI/VCI decoding circuit is searched using the VPI/VCI of an input cell as an address. The retrieved data is a bit map of 16 x 4 = 64 bits.

The C bit check unit 12 retrieves the bits (C bits) set at a predetermined position in the tag information of an input cell. When the value is 1, it is determined that the input cell is a point-to-multipoint connection cell. The determination result of the C bit check unit 12 is reported to the processor and used when the table 11 is searched.

The point-to-multipoint connection on the same line is described below. The process on the same line requires the two following functions.

1. VPI/VCI decoding function as the copying function on the same line
2. VPI/VCI reassigning function at an output terminal

Reassigning a VPI/VCI at an output terminal requires a VPI/VCI conversion table (VCCT). The VCCT is required for a point-to-point connection and a point-to-multipoint connection. The VCCT is a table from which information (output VPI/VCI, etc.) is retrieved using a VPI/VCI of a cell. If information is to be assigned to all VPI/VCI, the memory of storing $2^{24}$ pieces of information is required when the number of bits of the VPI/VCI is, for example, 24 bits. Providing such memory is not practical, and the switch according to the present embodiment is configured as follows.

At the input terminal, a process of reassigning a VPI/VCI of an input cell and a process of assigning tag information are performed. At this time, the path of a newly assigned VPI/VCI only has to identify a path on an output line or each line, and does not have to identify all VPI/VCI. Therefore, an address value much smaller than the number of bits of the VPI/VCI is used as a VPI/VCI at the input terminal. The actual VPI/VCI is retrieved using the address value as a key. Thus, a smaller size of memory is obtained in the switch by using a degenerated VPI/VCI.

Figure 6 shows the configuration of a point-to-multipoint connection.

In the following explanation, the VPI/VCI of a cell input to the switch is referred to as an I VPI/VCI, the VPI/VCI used in the switch is referred to as an S VPI/VCI, and the VPI/VCI set for the cell output from the switch is referred to as an O VPI/VCI.

The VPI/VCI for which a point-to-point connection is set indicates the following settings. That is, an S VPI/VCI, tag information, and the information (C bit is set to 0) indicating a point-to-point connection are set in the input unit VCCT (IVCC) 21 for each I VPI/VCI as a path set for the I VPI/VCI of an input cell. At the output unit VCCT (OVCC) 22, O VPI/VCI is set for each S VPI/VCI. The decoding table23 has no settings.

In a point-to-multipoint connection, an S VPI/VCI, tag information, and the information (C bit is set to 1) indicating the point-to-multipoint are set for each I VPI/VCI in the input unit VCCT (IVCC) 21. The decoding table 23 has a bit map in the DMUX 24 for each SVPI/VCI. The bit map can have one or more output units VCCT (OVCC) 22 in the plurality of output units VCCT. In the output unit VCCT (OVCC) 22, the number of copies for each line and the O VPI/VCI are set for each SVPI/VCI.

Figure 7 shows the configuration of the buffer and output unit VCCT provided for each output line.

With the configuration shown in Figure 7, the copy process for point-to-multipoint cells is performed using a buffer, and the VPI/VCI reassigning process is performed using a table provided for a point-to-point connection. With the configuration, the hardware can be greatly reduced.

Upon receipt of a cell output from the DMUX 24, the C bit set at a predetermined position of the tag information of a cell is referred to. If the C bit is O, it refers to a point-to-point connection. If the line number set in the tag information refers to the number of the VCCT of the output unit, the cell is written to a predetermined class (for example, 0) in the buffer 31.

If the C bit is 1, it refers to a point-to-point connection. In this case, the bit map set in the decode table 23 shown in Figure 6 is referred to.
If the number of the VCCT of the output unit (line number) is specified, the cell is written to the buffer 31. At this time, the cell is written to more than 1 class in classes 0 ~ 3 according to the class identification information set in the tag information in the cell.

The cell read process from the buffer 31 is performed according to the information set by the software for managing the switch when a path is set. The software sets the following information.

1. Band assigned to each class (contents of the scheduler of the DMUX controller)
2. Contents of the table of the VCCT of the output unit (in case of a point-to-point connection, O VPI/VCI for S VPI/VCI: in case of a point-to-multipoint connection, the number of copies, a value of S VPI/VCI for reserving a path, and O VPI/VCI)

Figure 8 is a table of the contents of the output unit VCCT set by the firmware according to the software settings.

In the case of the point-to-point connection, the E-F bit is set to 1. In the case of the poirit-to-multipoint connection, one of the O VPI/VCIs corresponding to the destinations is set. Then, the values of S VPI/VCI for reserving the paths of the O VPI/VCI are sequentially set to Q-ADD, and O VFI/VCI is set at the address for the S VPI/VCI. At the last address, the E-F bit is set to 1. Otherwise, the E-F bit is set to 0.

Figure 9 shows an example of a table on which an output VPI/VCI is set.

In the example shown in Figure 9, multicasting transfer is performed for 4 paths (to destinations 1 - 4) on the same line. The value of S VPI/VCI is a; the value of O VPI/VCI is b0 ~ b3; and the band assigned to each path is c0 c3.

Figure 10 is a flowchart explaining the process of the. VCCT of the output unit: The VCCT of the output unit extracts the tag information and VPI/VCI, etc. added to each cell, copies the cell by referring to the table shown in Figure 9, and writes the output VPI/VCI for each of the copied cells.

A class number (i) for use in identifying a class whose cells are next read is determined. The Q-address and E-F bit identified by the determined class number are read from the class process memory, and cells are read from class i in the QCP buffer (step S1 - S3).

If the E-F bit is 0, the S VPI/VCI of the cell read in the above step S3 is set as the Q-address read from the class process memory (steps S4 and S5).

The 0 VPI/VCI, Q-address, and E-F bit are read from the output unit VCCT using the S VPI/VCI as an address. For example, if a cell is addressed to the destination 2 in the example shown in Figure 840, b1, c1, and 0 are retrieved according to the address c0 (step S6).

The O VPI/VCI read in step S6 is written to the cell and output, and then the Q-address and E-F bit are written to the class process memory (steps S7 and S8).

The processes in steps S1 - S8 are repeatedly performed until the E-F bit indicates 1. When the E-F bit indicates 1, the buffer address, etc. related to class i is released. In the example shown in Figure 9, the processes in steps S1 - S8 are repeatedly performed until the cell addressed to destination 4 is, output (steps S9 and S10).

The self-routing module (SRM) forming part of the MSSR of the switch identifies a path according to the VPI/VCI of a cell input by the switch. The routing in the switch is performed in path units according to the tag information added to a cell. Therefore, at the entry point of the cell, the information designating the routing in the switch of the cell is retrieved according to the VPI/VCI set in the cell. The function of adding the retrieved routing information to the cell as tag information is required. In the switching process, the function of reassigning the VPI/VCI set in the input cell as an output VPI/VCI is also required.

For the switch of the MSSR configuration, the above described function (VCCT) may be provided in each SRM. However, the number of bits of a VPI/VCI is 28 for the network-to-network interface and 24 for the user-to-network interface. Providing a plurality of a large table (memory) in which tag information and output VPI/VCI are set for all VPI/VCIs undesirably requires large-scale hardware.

Therefore, a VCI conversion table (VCCT) for use in realizing the above described functions is provided at the entry point of the switch. According to the VCCT, the tag is added and the VPI/VCI is rewritten.

Figure 11 shows the configuration of the switching system whose switch is equipped with a VCCT at its entry point.

Assume that the table is searched using the VPI/VCI as is with the VCCT. As described above, the VPI/VCI is 28 or 24 bits. Setting the tag information and output VPI/VCI for all the VPI/VCI requires the memory (VCC table) having $2^{28}$ or $2^{24}$ addresses. Such large memory is undesirably accompanied by a large-scale hardware configuration. Likewise, the use amount parameter control/network parameter control (UPC/NPC) is searched using a VPI/VCI. In this case, the table searching system using the VPI/VCI as is requires undesirably large memory.

The switching system according to the present embodiment has the function of converting (degenerating) a VPI/VCI into a memory retrieving address of a smaller number of bits. In the point-to-multipoint connection, cells are copied in a switch and a VCCT is required for each output line.

Figure 12 shows the configuration of the switching system according to the present embodiment.

As shown in Figure 12, an I VPI/VCI converting unit 41 is provided at the entrance (UPC, before the tag assigning unit) of the exchange station. The I VPI/VCI converting unit 41 converts the VPI/VCI (I VPI/VCI) of an input cell into the VPI/VCI (S VPI/VCI) in the exchange station to be used as a memory retrieving address. An S VPI/VCI converting unit 42 for converting the S VPI/VCI into an output VPI/VCI (O VPI/VCI) is provided at the output unit of the exchange station.

In the ATM communications service, VP service and VC service are provided. In the VP service, data is transferred in the unit of virtual paths VP accommodating a plurality of virtual channels VC. Therefore, a communications lines can be identified by a VPI only without using a VCI in the VP service. This helps reducing the size of the VCCT.

First, the service identification information is set to output tag information of each cell indicating the VP service or VC service. The exchange station provides a table for use in the VP service and a table for use in the VC service. An output VPI is set for an input VPI on the table for the VP service. An output VPI/VCI is set for an input VPI/VCI on the table for the VC service. When- a cell enters the exchange station, the cell's service identification information recognizes the service type and performs a VPI/VCI conversion according to one of these tables. The process is performed by the I VPI/VCI converting unit 41.

The cell that has passed the switch recognizes the service type according to the service identification information in the S VPI/VCI converting unit 42. The O VPI/VCI table 43 referred to by the S VPI/VCI converting unit 42 comprises a table for the VP service and a table for the VC service. One of these tables are accessed depending on the service type.

If the tables for the VP service and VC service are provided individually as in the configuration above, the size of the hardware can be reduced because the table for the VP service is comparatively small.

Thus, there are various method of degenerating the VPI/VCI. The method of limiting the number of bits used for a VPI/VCI may generate a problem about system operations. Therefore, the memory can be reduced in size by limiting the number of paths that are set simultaneously.

As described above, a point-to-multipoint connection can be realized without an external device according to the exchange station of the present embodiment.

Described below is the embodiment of a system of transferring information necessary for the point-to-multipoint connection in parallel with the cell in the exchange station.

As described above, the functions of copying a cell and reassigning the VPI/VCI of the copied cell are required to realize the point-to-multipoint connection. These functions are performed in cell units.

Figure 13 shows the format of a cell in the switch. As shown in Figure 13, a cell comprises, in a switch, tag information, header, and payload, and is processed in the 8-bit parallel format. The tag information contains routing information in the exchange station, etc. and is added at the entrance of the exchange station according to the VPI/VCI of each cell. In the switch, the cell is controlled (routing control, copy instruction, etc.) by the tag information only. According to the system of the present embodiment, the control information necessary for the point-to-multipoint connection is transferred in parallel with the cell in the exchange station, and is processed in the 9-bit parallel format.

Figure 14 shows the configuration of the exchange station according to the present embodiment.

The cell transferred through the user-to-network interface or network-to-network interface (UNI/NNI) is terminated by the line interface unit 51 provided for each line. The VPI/VCI converting unit (VCCT) 52 rewrites the VPI/VCI of an input cell. The multiplexing unit MUX 53 multiplexes a cell input through a plurality of lines. The switch 54 is an 8x8 buffer type switch. The demultiplexing unit DMUX 5 distributes a cell output from the switch 54 to a predetermined line interface unit 51.

Figure 15 shows an example of the configuration of the control information for a point-to-multipoint connection.

The point-to-multipoint connection control information comprises a switching bit map, DMUX bit map, and subscriber ID. In the switching bit map, the switch has an 8x8 configuration and refers to 8-bit information. In the DMUX bit map, the number of lines distributed by the demultiplexing unit DMUX 55 is 16, and is assigned 16 bits. The subscriber ID identifies a destination subscriber and is assigned 8 bits.

The point-to-multipoint connection control information in the above described configuration is provided in the VPI/VCI converting unit (VCCT) 52 corresponding to the VPI/VCI stored in the header of the input cell. The information is set when a call is connected. It is not set for a point-to-point connection. The VPI/VCI converting unit (VCCT) 52 transfers the point-to-multipoint connection control information in parallel with an input cell when the cell is transferred to a switch with tag information added. The synchronization is established between a cell and point-to-multipoint connection control information, and they are transferred in the 9-bit parallel format.

The point-to-multipoint connection according to the present embodiment has the two important functions as follows.

1. Copying in the switching unit and DMUX unit.
2. Copying and VPI/VCI reassigning in the line interface unit

First, the copying capabilities in a switch unit are explained. When a cell enters the exchange station, tag information is added to the cell in the VPI/VCI converting unit (VCCT) 52 shown in Figure 14. In the tag information, the information indicating that the cell is a point-to-point connection cell or a point-to-multipoint cell is set as C bit information. If the C bit information is 0, it refers to a point-to-point connection and the cell is processed according to the routing information set in the tag information added to the cell in the exchange station.

Figure 16A shows the configuration of the buffer of a switch. Figure' 16B shows an example of the switching bit map in the point-to-multipoint connection control information.

If the C bit information is 1, it refers to a point-to-multipoint connection, and the point-to-multipoint connection control information transferred in parallel with the cell in the exchange station is referred to. In the switch unit, the switching bit map is referred to. At this stage, a cell whose C bit information is set to 1 enters the switch from the input highway 61, and the switching bit map is shown in Figure 16B. In this case, the cell is written to buffers $12^1$, $13^1$, $15^1$, and $16^1$. Accordingly, the cell input from the input highway 61 is output to the output highway 2, 3, 5, and 6. Thus, the function of copying cells can be realized in the switch unit. Cells can be copied likewise in the DMUX unit.

Described below are the copying function and VPI/VCI reassigning function.

Upon receipt of a cell whose C bit is 1, the line interfacing unit 51 determines a point-to-multipoint connection and retrieves a subscriber ID in the point-to-multipoint connection control information. The line interface unit 51 is provided with a table searched using a subscriber ID as a key. The table contains the number of copies and a VPI/VCI assigned to each cell generated by a copying process. The line interface unit 51 accesses the table by the retrieved subscriber ID, copies a cell, and reassigns the VPI/VCI.

The process of the software of the exchange station related to the point-to-multipoint connection is explained below. Upon receipt of a point-to-multipoint connection request in response to a path setting request (call connection request), the software of the exchange station sets the C bit to 1 corresponding to the VPI/VCI to be assigned to the path. In setting the path, the destination subscriber ID is specified, and the software of the exchange station writes to the table provided in the line interfacing unit 51 according to the specification the number of copies and the VPI/VCI set for each cell generated by the copy.

When a cell enters the exchange station, the above described hardware made a point-to-multipoint connection according to the information set by the software of the exchange station.

With the above configuration, a point-to-multipoint connection can be realized in the switch without providing a device for copying a cell external to the switch. Since the point-to-multipoint control information is transferred not as a tag information, but in parallel with the cell in the exchange station, the throughput is not degraded.

Figure 17 shows another characteristic configuration of the present invention. Figure 17 shows an example in which a source terminal 61 multicast-transfers data to destination terminals 64-1 - 64-5 through an exchange station 62.

When the source terminal 61 makes a multicast connection, the transfer data (hereinafter referred to as a cell) is transferred to a multicast device 66. That is, the source terminal 61 transmits the cell to the ATM exchange station 62 using the destination address of the multicast device 66. The ATM exchange station 62 connects the path 65 according to the destination address and transfers the cell to the multicast device 66. At this time, the transmission lines between the source terminal 1 and the multicast device 66, that is, the line 63 and path 65 are in the communications state of connection of 1:1.

Upon receipt of the cell transmitted by the source terminal 61, the multicast device 66 transfers the cell to the destination terminal 64-1. That is, the multicast device 66 transmits the cell to the ATM exchange station 62 with the destination terminal 64-1 set as the destination address of the cell. The ATM exchange station 62 connects the path 67-1 according to the destination address and transfers the cell to the destination 64-1 through the path 67-1.

Then, the multicast device 66 transfers the cell transmitted by the source terminal 61 to the destination terminals 64-2 - 64-5 sequentially. At this time, ATM exchange station 2 connects the paths 67-2 - 67-5.

The multicast device66 is provided in the exchange station, and the destination information, etc. is set for each multicast service request from the user. A plurality of multicast services are processed.

As mentioned above, the multicast device 66 has the ability to copy cells. When the copied cells are distributed to N destination terminals (5 terminal in Figure 17), the multicast device 66 transfers the cells to each destination terminal sequentially. The amount of the resources is the same as that in the 1:1 connection.

Figure 18 shows an example in which the multicast function of the present embodiment is applied to the video distribution service. In Figure 18, shows an example in which video data stored in the video server 111 is distributed to the subscriber terminals 120-1 - 120-3.

The controller 112 controls video data and transfers a video signal to the B-ISDN adapter 113. The B-ISDN adapter 113 transmits the video signal transferred from the controller 112 to the network interface device 115 according to the protocol of the subscriber line interface 114.

The network interface device 115 converts the transfer data including the video signal into the data in the format processed by the exchange station 116. The exchange station 116 is hereinafter referred to as an ATM exchange station. In this case, the network interface device 115 converts the transfer data including the video signal into an ATM cell. The network interface device 115 sets in each cell the VPI/VCI identifying the multicast device 130 as the destination address, and transmits the cells to the exchange station 116. The VPI/VCI identifying the multicast device 130 is reported by the controller 127 as described later.

Upon receipt of the cell, the exchange station 116 connects the path 117 for connecting the network interface device 115 with the multicast device 130 according to the VPI/VCI set in the cell to transfer the cell through the path 117.

Figure 19 shows the configuration of the multicast device 130.

The VPI/VCI conversion table 131 is written when a multicast connection requesting call is connected. For example, if a call connection request is issues to multicast-distribute video data stored in the video server 111 to the subscriber terminals 120-1 - 120-3, then the controller 127 first obtains a VPI/VCI (VPI/VCI 117) specifying the path (path 117) for connecting the network interface device 115 with the multicast device 130. Then, the controller 127 reports the VPI/VCI 117 to the network interface device 115 and reserves the area for the VPI/VCI 117 on the VPI/VCI conversion table 131.

Then, the controller 127 obtains the VPI/VCIs (VPI/VCIs 1 - 3) specifying the paths (paths 122-1 - 122-3) for connecting the multicast device 130 with the network interface devices 123-1 - 123-3. Then, it writes the VPI/VCIs 1 - 3 to the area reserved for the VPI/VCI 117 on the VPI/VCI conversion table 131.

Described below is the operation of the multicast device 130 when it receives a cell. The cell is transferred from the network interface device 115 through the exchange station 116, and is temporarily stored in the receiving unit 132. The control unit 133 searches the VPI/VCI conversion table 131 according to the VPI/VCI set in the cell stored in the receiving unit 132. Since the VPI/VCI set in the input cell is VPI/VCI 117, the VPI/VCIs 1 through 3 are retrieved as output VPI/VCIs. These output VPI/VCIs are passed to the VPI/VCI assigning unit 134. The control unit 133 recognizes the number of the destination subscribers from the retrieved VPI/VCIs.

Then, the copying unit 135 copies the cell stored in the receiving unit 132 according to the instruction of the control unit 133 and writes it to the output buffer 136. At this time, the VPI/VCI assigning unit 134 sets "VPI/VCI 1" for the cell copied by the copying unit 135. The copying unit 135 copies two cells stored in the receiving unit 132, and the cells are assigned VPI/VCI 2 and VPI/VCI 3 and written to the output buffer 136.

The control unit 133 first transfers the cell assigned VPI/VCI 1 to the exchange station 121. The exchange station 121 is an ATM exchange station comprising a self-routing module. Upon receipt of the cell, the exchange station 121 connects the path 122-1 between the multicast device 130 and the network interface device 123-1. Therefore, the video data read from the video server 111 is transferred to the network interface device 123-1 through the path 122-1.

Then, the data received by the network interface device 123-1 is transferred to the subscriber terminal 120-1 through the controller 125.

Likewise, the control unit 133 sequentially transfers the cells assigned VPI/VCI 2 and VPI/VCI 3 to the exchange station 121. Upon receipt of the cell, the exchange station 121 establishes the paths 122-2 and 122-3 according to the VPI/VCI values. The cells assigned VPI/VCI 2 and VPI/VCI 3 are transferred to the paths 122-2 and 122-3 respectively, and reach the subscriber terminals 120-2 and 120-3.

The controller 127 recognizes the use state of the exchange stations 116 and 121 through the connection admission control (CAC) function. The control unit 133 receives from the controller 127 a notification about the use state of the exchange stations 116 and 121. If the exchange station 121 is in the congestion state, the control unit 133 stops the cell read process from the output buffer 136. With the configuration, cells may be discarded in the output buffer 136 when the congestion state of the exchange station 121 continues. However, the entire exchange station can recover from the congestion state.

As described above, the multicast connection system can reduce the load on the source terminal and the use rate of the line between the source terminal and the exchange station and the operations of the exchange station can be successfully reduced because the data transmitter has only to transmit the same amount of data as the case of the one-to-one connection regardless of the number of the destinations. Therefore, the hardware resources which becomes in an idle state with the configuration (above described lines and exchange stations) can be usefully assigned to other services.

When a multicast connection service is provided through the conventional exchange stations, it can be realized only by providing the above described multicast device. Since the ATM exchange station greatly depends on the hardware configuration, it is a large merit to realize a multicast connection service without design amendments to the exchange stations.

Figure 20 shows the configuration of the system for communications among a plurality of communicators through a multiple communications trunk built in the exchange station. In this example, subscriber A accommodated in the concentrator 71 communicates with subscribers B and C accommodated in the concentrator 72. The 3-subscriber communications are referred to as a TV-telephone conference through voice and images. The concentrators 71 and 72are connected to the host exchange Station 73. The host exchange station 73 is an ATM exchange station comprising a self-routing switch, and a path is set according to the VPI/VCI of each cell. The multiple subscriber communications trunk 74 is connected to the host exchange station 73 in, for example, a switching station, and edits and synthesizes image and voice data transferred in the cell format from each subscriber according to the VPI/VCI of the cell. Then, it adds the edited or synthesized data to the cell assigned the VPI/VCI specifying a destination subscriber and transmits them to the host exchange station 73. The multiple subscriber communications trunk 74 is provided for each multiple subscriber communication.

Subscriber A is connected to the multiple subscriber communications trunk 74 through the bi-directional virtual path 75 specified by the VPI/VCI = xa. Subscribers B and C are connected to the multiple subscriber communications trunk 74 through the bi-directional virtual paths 76 and 77 specified by the VPI/VCI = xb and VPI/VCI = xc respectively.

When subscribers A, B, and C start the 3-subscriber communications with the above described configuration, the transmission data from each subscriber is temporarily transferred to the multiple subscriber communications trunk 74 and then transmitted to the destination subscriber after being edited by the multiple subscriber communications trunk 74. Thus, with the above described configuration, the system provides multiple subscriber communications services through the functions of the exchange station.

Figure 21 shows the configuration of the system for multiple subscriber communications using a multiple termination unit in the subscriber line.

The system shown in Figure 21 uses the multiple termination unit 211 when subscribers A, B, and C enter the 3-subscriber communications. The multiple termination unit 211 is accommodated in the concentrator 71 through a subscriber line. The bi-directional virtual path 212 specified by VPI/VCI = yd connects subscriber A with the multiple termination unit 211. The bi-directional virtual paths 213 and 214 specified by VPI/VCI = ye and VPI/VCI = yf connect subscribers B and C with the multiple termination unit 211 respectively.

The multiple termination unit 211 can simultaneously process data transferred through a plurality of virtual paths specified by a plurality of VPI/VCIs, and adds the edited or synthesized data to the cell assigned the VPI/VCI specifying a destination subscriber and transmits'them to the host exchange station 73. Thus, with the above described configuration, the system provides a multiple subscriber communications through a.terminal provided in the subscriber line.

Described below is the procedure of providing a multiple subscriber communications service in the system shown in Figure 20 or 21.

Figure 22 is a process flowchart showing the 3-subscriber communications service in the system shown in Figure 20. In this example, subscriber C is called in the 2-subscriber communications state in which subscribers A and B communicate each other, and the 3-subscriber communications state is entered.

A predetermined VPI/VCI (for example, VPI/VCI = ab) connects subscriber A with subscriber B. In such a 2-subscriber communications state, one of the subscribers A and B issues a 3-subscriber communications request by specifying.. subscriber. C according to a predetermined procedure.

Upon receipt of the 3-subscriber communications request, the host exchange station 73 calls subscriber C if an unused multiple subscriber communications trunk 74 is available (step S1 and S2).

The host exchange station 73 receives the response from subscriber C and reports it to the multiple subscriber communications trunk 74 (step S3).

The VPI/VCIs of a predetermined number are assigned to the multiple subscriber communications trunk 74 to connect each of subscribers A, B, and C with the multiple subscriber communications trunk 74 The host exchange station 73 selects VPI/VCI = xa, xb, and xc as the VPI/VCI specifying the path between each of the subscribers A, B, and C and the multiple subscriber communications trunk 74. At this time, 3 is set as the number of subscribers being connected (steps S4 and 5).

Upon receipt of the response of subscriber C in step S3 above, the host exchange station 73 disconnects the path between subscribers A and B, and establishes the paths 75, 76 and 77 between the multiple subscriber communications trunk 74 and each of the subscribers A, B, and C (steps S6 and 7).

Then, the cells transmitted from each of the subscribers A, B, and C are first transferred to the multiple subscriber communications trunk 74, edited there, and then transferred to the destination subscriber. Thus, the 2-subscriber communications state is switched into the 3-subscriber communications state. If the image and sound data transmitted from the multiple subscriber communications trunk 74 can be contained in the band assigned to one subscriber, there is no need for a band check when the 3-subscriber communications state is entered.

Figure 23 is a flowchart showing the process of the multiple subscriber communications service in the system shown in Figure 20. Described below is the procedure of calling up a number of subscribers in a three or more subscriber communications state.

In the multiple subscriber communications state, one of the communicating subscribers requests to add the n-th subscriber (subscriber N) to the multiple subscriber communications. Upon receipt of the request, the host exchange station 73 checks if the value n is smaller than the number of users who can simultaneously use the multiple subscriber communications trunk 74. That is, the multiple subscriber communications trunk 74 determines whether or not the number of communicators exceeds the maximum value for the multiple subscriber communications (steps S11 and 12).

If the maximum value for the number of communicators is exceeded, the process of rejecting the request is performed (step S13).

If the number of the communicators is smaller than the maximum value, the host exchange station 3 calls the subscriber N and selects the VPI/VCI specifying the path between each of the subscriber N and the multiple subscriber communications trunk 74. At this time, the number of subscribers being connected is updated. That is, the number is set to n. Then, the path between each subscriber N and the multiple subscriber communications trunk 74 is established to enter an n-subscriber communications state (steps S14 - 18).

Figure 24 is a flowchart showing the process of the multiple subscriber communications service using a group identification number. Described below is the case where any subscriber (subscriber D) issues a request for multiple subscriber communications. The multiple subscriber communications service is given to a group of preliminarily designated subscribers, and a group identification number is assigned to each group. The multiple subscriber commuriications trunk 74 is assigned to the multiple subscriber communications of each group.

When the host exchange station 73 receives a special number of the multiple subscriber communications service request and a group identification number from a subscriber, it determines whether or not the multiple subscriber communications are being performed in a group designated by the group identification number (steps S21 and 22).

If the multiple subscriber communications are performed in a group, the host exchange station 73 recognizes the multiple subscriber communications trunk 74 which provides the multiple subscriber communications service, and checks whether or not the number of the communicators exceeds the maximum value for the multiple subscriber communications trunk 74 when one communicator is added to the currently communicating subscribers (step S23).

Unless the maximum value is exceeded, control is passed to step S26. If it is exceeded, then the process of rejecting the request is performed (step S24).

When it is determined in step S22 that the multiple subscriber communications are not performed in the group, the multiple subscriber communications trunk 74 in an idle state is obtained, and control is passed to step S26 (step S25).

The host exchange station 73 selects the VPI/VCI specifying the path between the subscriber D requesting the multiple subscriber communications in step S21 and the multiple subscriber communications trunk 74. At this time, the number of subscribers being connected is updated. Then, a path is established between the subscriber D and the multiple subscriber communications trunk 74. Thus, any subscriber can take part in the multiple subscriber communications in a specific group (steps S26 through 28).

Figure 25 shows the flowchart of the process in the 3-subscriber communications service in the system shown in Figure 21. In this system, a path is established between the multiple termination unit 211 in the subscriber circuit and each subscriber. The process order is fundamentally the same as that shown in Figure 22.

Figure 26 is a flowchart showing the multiple subscriber communications service in the system shown in Figure 21. In this system, a path is established between the multiple termination unit 11 in the subscriber circuit and the newly called subscriber. The process order is fundamentally the same as that shown in Figure 23.

Figure 27 is a flowchart of the call waiting service in the system shown in Figure 20. In this example, subscriber C (the third party) issues a connection request to subscriber A while the two-subscriber communications are performed between subscribers A and B.

Upon receipt of a connection request from subscriber C to subscriber A in the 2-subscriber communications state between subscribers A and B, then the host exchange station 73 selects the VPI/VCIs in the range where the multiple subscriber communications trunk 74 is available, and sets new virtual paths between the multiple subscriber communications trunk 4 and each of the subscribers A and C (steps S31 - 33).

The host exchange station 73notifies subscriber A that the connection request has been received from the third party. In response to this, subscriber A determines whether or not he or she requests to communicate with subscriber B again after the communication with the third party (subscriber C).

When the host exchange station 73 receives a request to communicate with subscriber B again after the communications with the third party, the host exchange station 73 sets subscriber B in a standby state and connects subscriber A with subscriber C through the multiple subscriber communications trunk 74 (steps S34 - S38).

When the host exchange station 73 receives a request to terminate the communications between subscribers A and C from subscriber A or C, the host exchange station 73 releases the virtual paths set between the multiple subscriber communications trunk 74 and subscribers A and C, and connects again subscriber A with subscriber B (steps S39 - S41).

When the host exchange station 73 receives a request to stop the communications with subscriber B after the communications with the third party, it disconnects subscriber B. Then, the host exchange station 73 releases the virtual paths set between the multiple subscriber communications trunk 74 and subscribers A and C, and directly connects subscriber A with subscriber C (steps S34, 42, and 43).

Figure 28 is a flowchart (1) of a call transfer service in the system shown in Figure 20. Described below is the connection made by subscriber A between subscriber B and subscriber C (third party) while subscribers A and B are in the 2-subscriber communications.

When the host exchange station 73 receives from subscriber A a call transfer request and a call transfer destination information indicating subscriber C, it selects the VPI/VCI identifying the range where the multiple subscriber communications trunk 74 is available, and sets new virtual paths between the multiple subscriber communications trunk 74 and subscribers B and C (steps S51 - S54).

The host exchange station 3 calls subscriber C. If subscriber C returns a response, the host exchange station 73 connects subscriber B with subscriber C through the multiple subscriber communications trunk 74 (steps S55 and S56).

Figure 29 is a flowchart (2) of a call transfer service in the system shown in Figure 20.

When the host exchange station 73 receives from subscriber A who transfers the call after steps S51 - S55 shown in Figure 28, the host exchange station releases the virtual paths set between the multiple subscriber communications trunk 74 and subscribers B and C to directly connect subscriber B with subscriber C (steps S61 - S63).

According to the system shown in Figure 28 or 29, a call from subscriber B to subscriber A can be transferred to subscriber C.

Figure 30 is a flowchart showing the point-to-multipoint connection service in the system shown in Figure 20. Described below is the case where subscribers B and C access subscriber A (information providing subscriber).

When the host exchange station 73 receives a point - to-multipoint connection request from subscriber A, it selects the VPI/VCI in the range where the multiple subscriber communications trunk 74 is available and sets a virtual path between subscriber A and the multiple subscriber communications trunk 74(steps S71 and S72).

When the host exchange station 73 receives a connection request from subscribers B and C to subscriber A, it selects two VPI/VCIs in the range where the multiple subscriber communications trunk 74 is available and sets virtual paths between the multiple subscriber communications trunk 74 and subscribers B and C. Afterwards, the point-to-multipoint communications can be established through the multiple subscriber communications trunk 74 (steps S73 - S75).

A multicast transfer can be made from subscriber A to subscribers B and C. In this case, subscriber A specifies subscribers B and C as connection-to information in step S73.

Figures 31 through 34 are flowcharts of various services provided by the system shown in Figures 21, and correspond to Figures 27 through 30 respectively. In the system shown in Figures 31 through 34, the multiple termination unit 211 processes virtual paths.

According to the above described embodiment, the multiple subscriber communications trunk provided for the exchange station or the multiple termination unit provided in the subscriber line give services such as multiple subscriber communications services, call waiting services, transfer services, etc.

## Claims

1. A switching system, including a switch (1), provided in a network for autonomously routing a cell containing data and data control information according to the control information to provide a point-to-multipoint connection service, **characterized in that**
the switching system is adapted to make said point-to-multipoint connection by use of a bit map through internal functions of the switch and adapted to add bit map information about a path of an input cell to the input cell.

2. The switching system according to claim 1, wherein
the switching system is adapted to make said point-to-multipoint connection by use of a small bit map and adapted to decode routing information set in the control information and sequentially to update the small bit map information.

3. The switching system according to claim 1, wherein
the switching system is adapted to make said point-to-multipoint connection on the same line and includes a table for use in converting routing information set in the control information on both input and output terminals of the switch.

4. The switching system according to claim 1, wherein
the switching system is adapted to make said point-to-multipoint connection on the same line by use of multiplexing/ demultiplexing functions provided on an output terminal of the switch.

5. The switching system according to claim 1 comprising:

   first converting means (41), provided at an input terminal of said switch, for converting routing information set in the control information of an input cell into intra-switch routing information; and
   second converting means (42), provided at an output terminal of said switch, for converting the intra-switch routing information into routing information for an output cell.

6. The switching system according to claim 5, wherein
said first converting means (41) is adapted to set the intra-switch routing information based on a number of paths connectable simultaneously.

7. The switching system according to claim 1, comprising:

   setting means for setting point-to-multipoint control information in response to the control information of an input cell;
   transferring means for transferring in parallel the cell and the point-to-multipoint control information; and
   control means for controlling the point-to-multipoint connection according to the point-to-multipoint control information.

## Patentansprüche

1. Vermittlungssystem, welches einen Vermittler (1) enthält, welches in einem Netzwerk zum autonomen Leiten von einer Zelle, welche Daten und eine Daten-Steuerinformation enthält, gemäß der Steuerinformation, bereitgestellt ist, um einen Punkt-zu-Mehrfachpunkt Verbindungsdienst bereitzustellen, **dadurch gekennzeichnet, dass**
das Vermittlungssystem dazu angepasst ist, die Punkt-zu-Mehrfachpunkt Verbindung unter Verwendung von einem Bit-Kennfeld durch interne Funktionen des Vermittlers zu erstellen, und dazu angepasst ist, eine Bit-Kennfeld Information über einen Pfad von einer eingegebenen Zelle der eingegebenen Zelle hinzuzufügen.

2. Vermittlungssystem nach Anspruch 1, bei welchem das Vermittlungssystem dazu angepasst ist, die Punkt-zu-Mehrfachpunkt Verbindung unter Verwendung von einem kleinen Bit-Kennfeld zu erstellen, und dazu angepasst ist, eine Leitinformation zu dekodieren, welche in der Steuerinformation eingestellt ist, und nachfolgend die kleine Bit-Kennfeld Information zu aktualisieren.

3. Vermittlungssystem nach Anspruch 1, bei welchem das Vermittlungssystem dazu angepasst ist, die Punkt-zu-Mehrfachpunkt Verbindung auf derselben Leitung zu erstellen, und eine Tabelle zur Verwendung beim Umformen von einer Leitinformation, welche in der Steuerinformation eingestellt ist, sowohl am Eingangsals auch Ausgangsanschluss des Vermittlers enthält.

4. Vermittlungssystem nach Anspruch 1, bei welchem das Vermittlungssystem dazu angepasst ist, die Punkt-zu-Mehrfachpunkt Verbindung auf derselben Leitung unter Verwendung von Multiplex-/Demultiplex-Funktionen zu erstellen, welche an einem Ausgangsanschluss des Vermittlers bereitgestellt sind.

5. Vermittlungssystem nach Anspruch 1, welches enthält:

ein erstes Umformungsmittel (41), welches an einem Eingangsanschluss des Vermittlers bereitgestellt ist, um eine Leitinformation, welche in der Steuerinformation von einer eingegebenen Zelle eingestellt ist, in eine Intra-Vermittlungs-Leitinformation umzuwandeln; und
ein zweites Umformungsmittel (42), welches an einem Ausgangsanschluss des Vermittlers bereitgestellt ist, um die Intra-Vermittlungs-Leitinformation in eine Leitinformation für eine ausgegebene Zelle umzuformen.

6. Vermittlungssystem nach Anspruch 5, bei welchem das erste Umformungsmittel (41) dazu angepasst ist, die Intra-Vermittlungs-Leitinformation basierend auf einer Anzahl von Pfaden, welche gleichzeitig verbindbar sind, einzustellen.

7. Vermittlungssystem nach Anspruch 1, welches enthält:

ein Einstellmittel zum Einstellen einer Punkt-zu-Mehrfachpunkt Steuerinformation in Ansprechen auf die Steuerinformation von einer eingegebenen Zelle;
ein Übertragungsmittel zum parallelen Übertragen der Zelle und der Punkt-zu-Mehrfachpunkt Steuerinformation; und
ein Steuermittel zum Steuern der Punkt-zu-Mehrfachpunkt Verbindung gemäß der Punkt-zu-Mehrfachpunkt Steuerinformation.

## Revendications

1. Système de commutation, comprenant un commutateur (1), prévu dans un réseau afin d'acheminer de manière autonome une cellule contenant des données et des informations de contrôle de données selon les informations de contrôle, afin d'assurer un service de connexion point à multipoint, **caractérisé en ce que**
le système de commutation est adapté afin d'effectuer ladite connexion point à multipoint en utilisant une représentation binaire par le biais des fonctions internes du commutateur, et adapté afin d'ajouter des informations de représentation binaire relatives à un trajet d'une cellule d'entrée à la cellule d'entrée.

2. Système de commutation selon la revendication 1, dans lequel le système de commutation est adapté afin d'effectuer ladite connexion point à multipoint en utilisant une représentation binaire de petite taille, et adapté afin de décoder des informations de routage définies dans les informations de contrôle, et de mettre à jour séquentiellement les informations de la représentation binaire de petite taille.

3. Système de commutation selon la revendication 1, dans lequel le système de commutation est adapté afin d'effectuer ladite connexion point à multipoint sur la même ligne, et comprend une table destinée à être utilisée pour la conversion des informations de routage définies dans les informations de contrôle, sur les bornes d'entrée et de sortie du commutateur.

4. Système de commutation selon la revendication 1, dans lequel le système de commutation est adapté afin d'effectuer ladite connexion point à multipoint sur la même ligne, en utilisant des fonctions de multiplexage/de démultiplexage prévues sur une borne de sortie du commutateur.

5. Système de commutation selon la revendication 1, comprenant :

un premier moyen de conversion (41), prévu au niveau d'une borne d'entrée dudit commutateur, afin de convertir les informations de routage définies dans les informations de contrôle d'une cellule d'entrée en informations de routage intra-commutateur ; et
un second moyen de conversion (42), prévu au niveau d'une borne de sortie dudit commutateur, afin de convertir les informations de routage intra-commutateur en informations de routage destinées à une cellule de sortie.

6. Système de commutation selon la revendication 5, dans lequel ledit premier moyen de conversion (41) est adapté afin de définir les informations de routage intra-commutateur sur la base d'un certain nombre de trajets pouvant être reliés simultanément.

**7.** Système de commutation selon la revendication 1, comprenant :

un moyen de définition destiné à définir des informations de contrôle point à multipoint en réponse aux informations de contrôle d'une cellule d'entrée ;
un moyen de transfert destiné à transférer en parallèle les informations de contrôle de cellule et point à multipoint ; et
un moyen de contrôle destiné à contrôler la connexion point à multipoint selon les informations de contrôle point à multipoint.

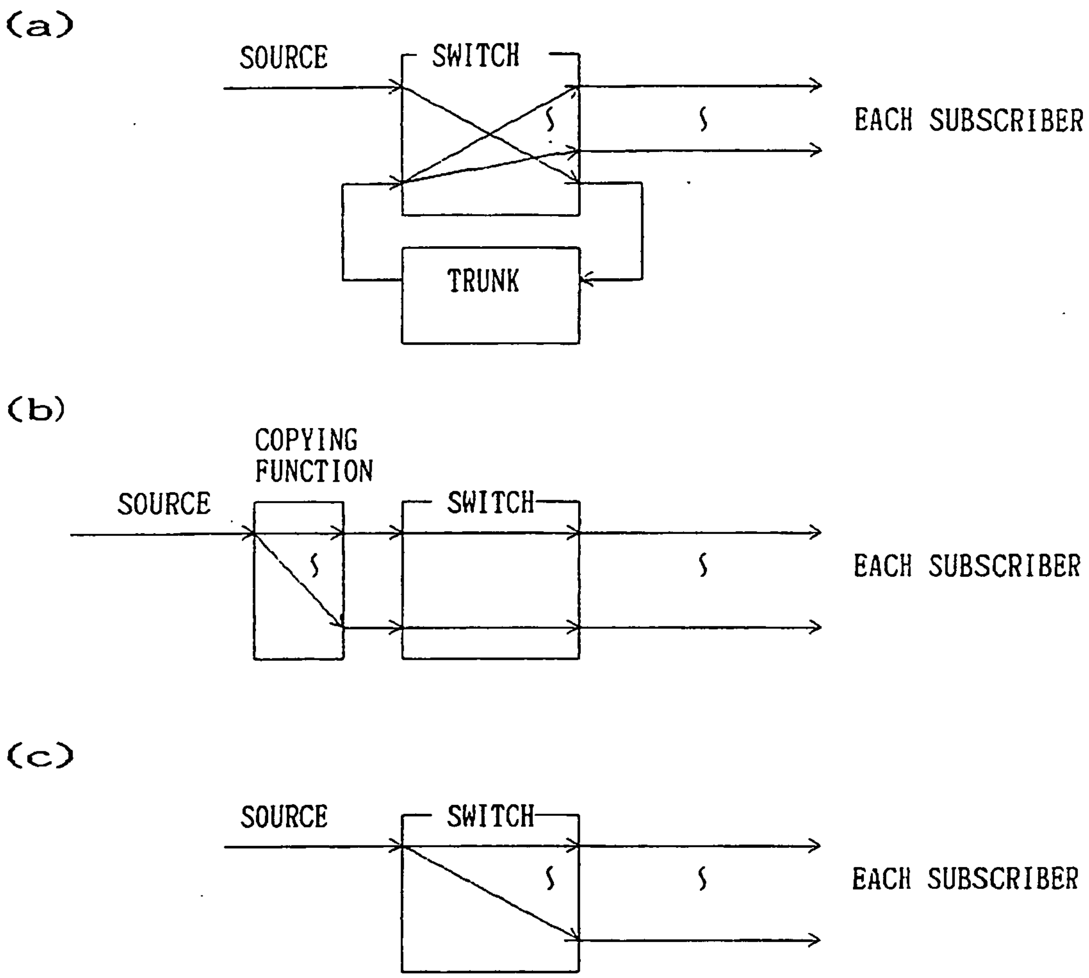
(a)
SOURCE
SWITCH
EACH SUBSCRIBER
TRUNK
(b)
COPYING
FUNCTION
SOURCE
SWITCH
EACH SUBSCRIBER
(c)
SOURCE
SWITCH
EACH SUBSCRIBER

FIG. 1

| SYSTEM | MERITS | DEMERITS |
|---|---|---|
| TRUNK SYSTEM | · EASY TO CONTROL SWITCHES ONLY POINT-TO-POINT CONNECTION<br>· REASSIGNMENT OF VPI/VCI IS NOT REQUIRED | · TRUNK IS REQUIRED<br>· NUMBER OF PATHS DEPENDS ON CAPACITY OF TRUNK<br>· BAND OF PATH SUPPORTED BY SYSTEM DECREASES FOR TRUNKS<br>· DOUBLE DELAY OVER POINT-TO-POINT CONNECTION BECAUSE OF TEMPORARY ACCOMMODATION IN TRUNK |
| INPUT COPY SYSTEM | · EASY TO CONTROL SWITCHES ONLY POINT-TO-POINT CONNECTION | · REASSIGNMENT OF VPI/VCI IS REQUIED<br>· COPYING FUNCTION SHOULD BE ADDED<br>· BAND OF PATH SUPPORTED BY SYSTEM DECREASES FOR COPY IN PREVIOUS STEP |
| INTERNAL COPY SYSTEM | · BAND OF PATH SUPPORTED BY SYSTEM IS ALLOWED FOR MAXIMUM CAPACITY OF SYSTEM | · REASSIGNMENT OF VPI/VCI IS REQUIRED<br>· COPYING FUNCTION SHOULD BE INCORPORATED.<br>· COMPLICATED SWITCH CONTROL |

FIG. 2

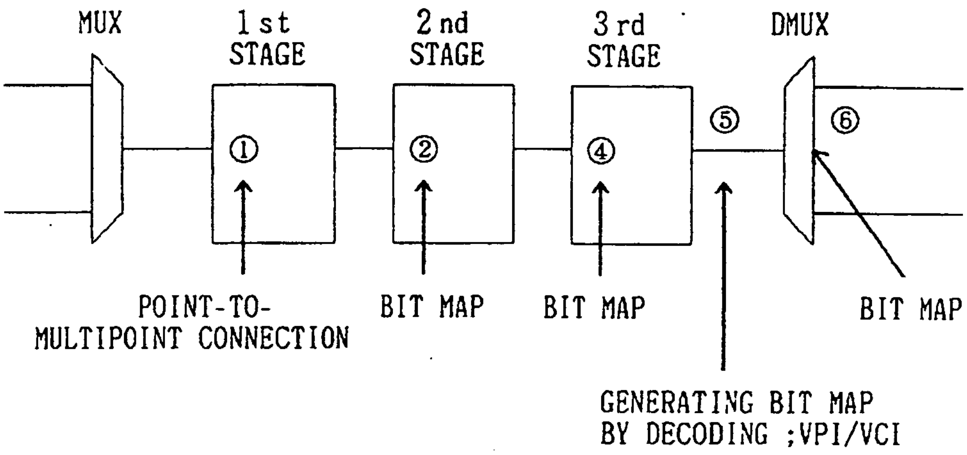
MUX
1st STAGE
2nd STAGE
3rd STAGE
DMUX
①
②
④
⑤
⑥
POINT-TO-MULTIPOINT CONNECTION
BIT MAP
BIT MAP
BIT MAP
GENERATING BIT MAP BY DECODING ;VPI/VCI

F I G. 3

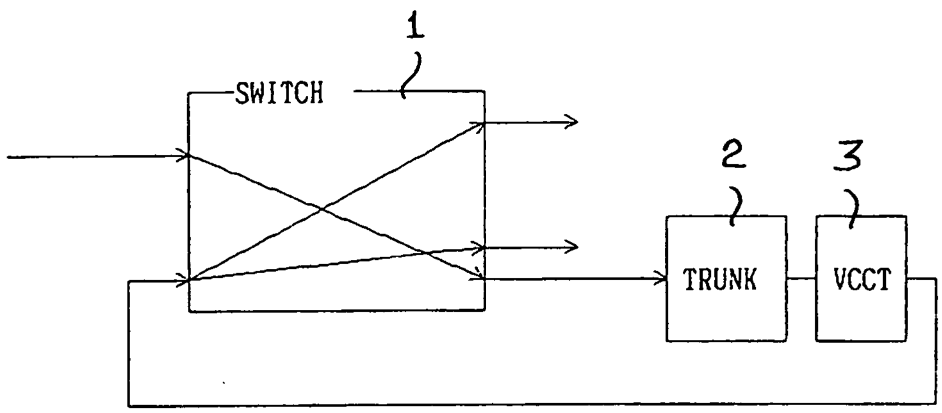


FIG. 4

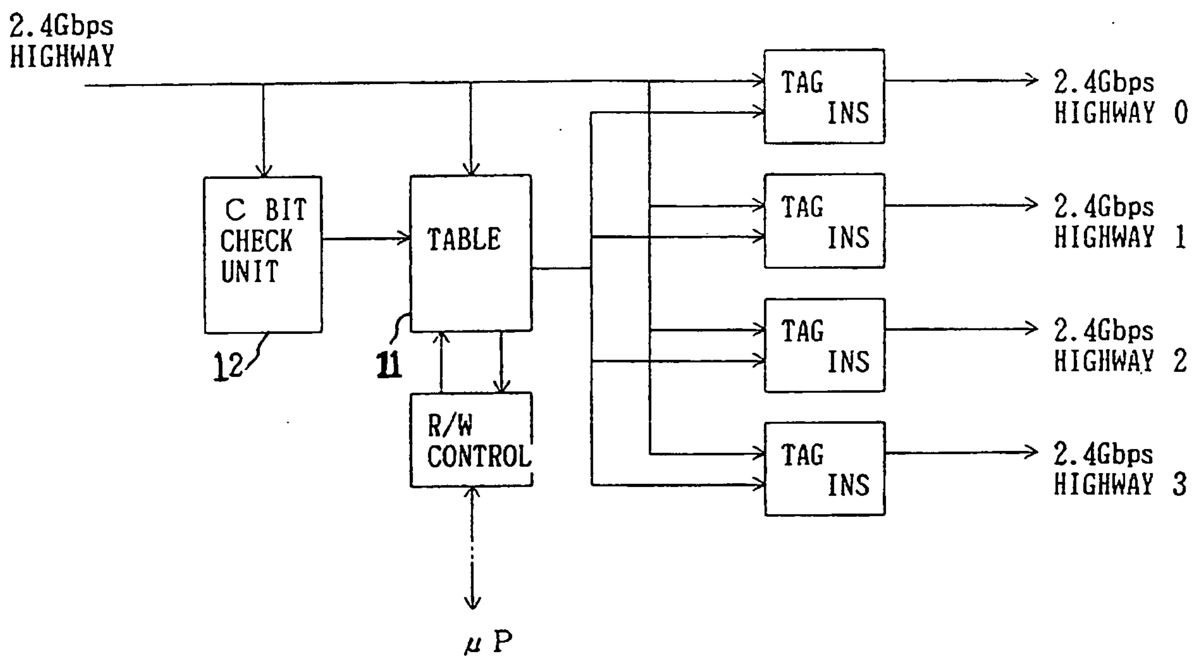
2.4Gbps HIGHWAY
C BIT CHECK UNIT
12
TABLE
11
R/W CONTROL
μP
TAG INS
TAG INS
TAG INS
TAG INS
2.4Gbps HIGHWAY 0
2.4Gbps HIGHWAY 1
2.4Gbps HIGHWAY 2
2.4Gbps HIGHWAY 3

FIG. 5

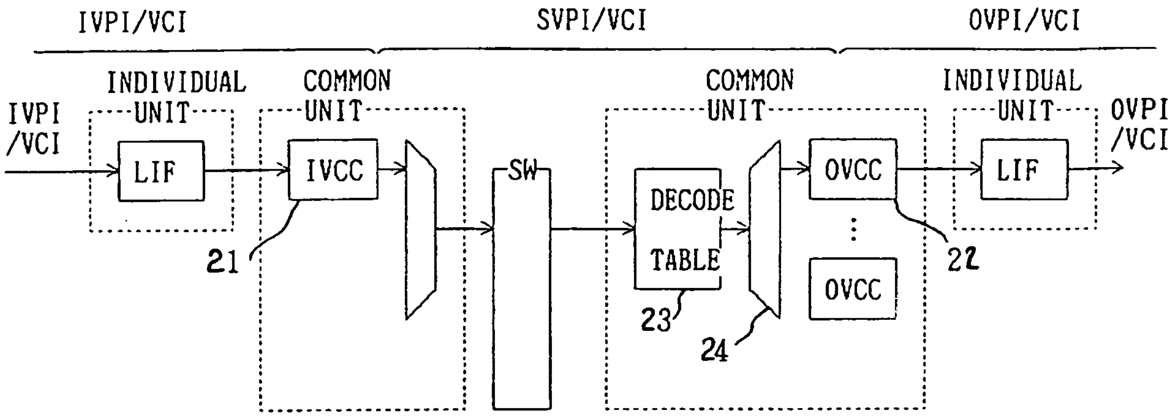
IVPI/VCI
SVPI/VCI
OVPI/VCI
INDIVIDUAL UNIT
COMMON UNIT
IVPI /VCI
LIF
IVCC
21
SW
COMMON UNIT
DECODE TABLE
23
24
OVCC
OVCC
22
INDIVIDUAL UNIT
LIF
OVPI /VCI

F I G. 6

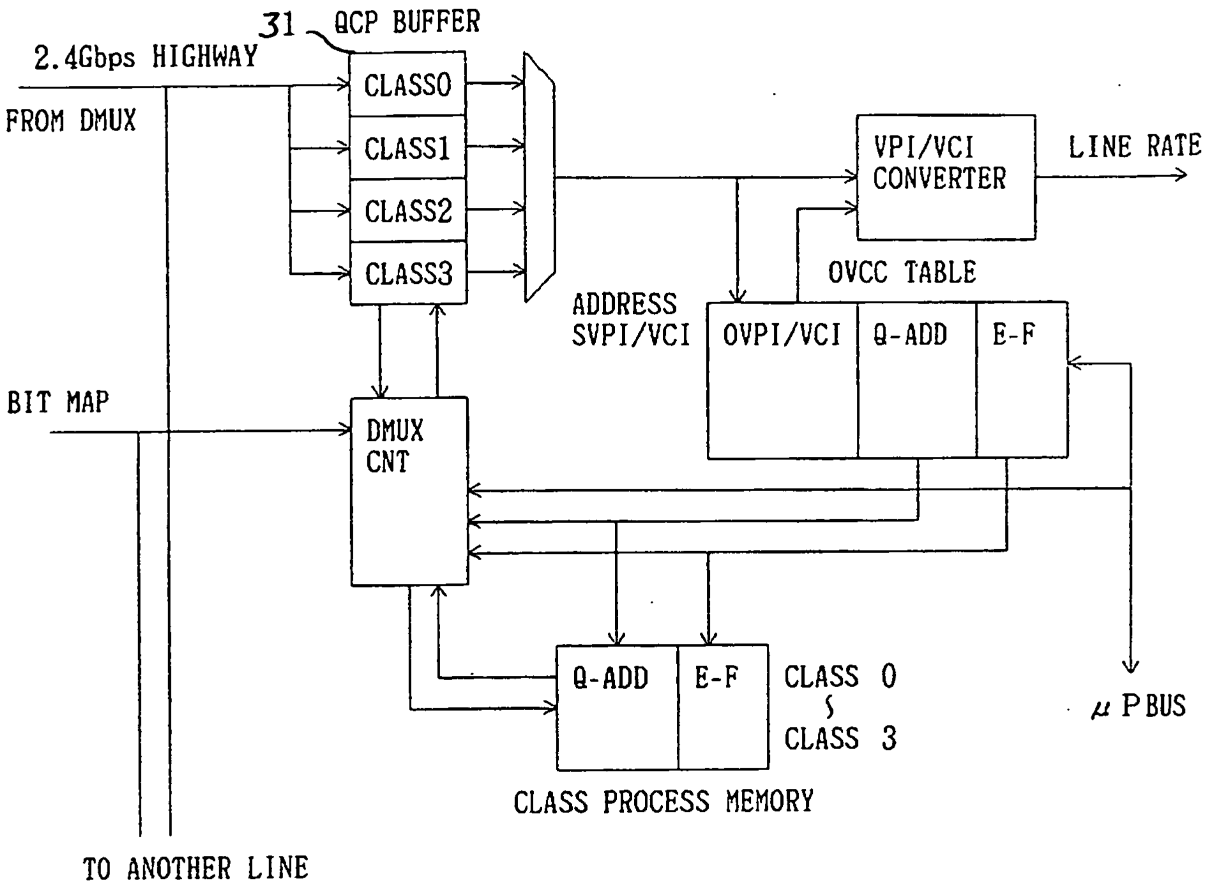
31
QCP BUFFER
2.4Gbps HIGHWAY
FROM DMUX
CLASS0
CLASS1
CLASS2
CLASS3
VPI/VCI
CONVERTER
LINE RATE
OVCC TABLE
ADDRESS
SVPI/VCI
OVPI/VCI
Q-ADD
E-F
BIT MAP
DMUX
CNT
Q-ADD
E-F
CLASS 0
∫
CLASS 3
μ P BUS
CLASS PROCESS MEMORY
TO ANOTHER LINE

FIG. 7

| | ADDRESS | CONTENTS OF OVCC TABLE OVPI/VCI | Q-ADD | E-F |
|---|---|---|---|---|
| POINT-TO POINT CONNECTION | SVPI/VCI | OVPI/VCI | D.C. | 1 |
| POINT-TO-MULTIPOINT CONNECTION | SVPI/VCI | OVPI/VCI | ADDRESS | x |

FIG. 8

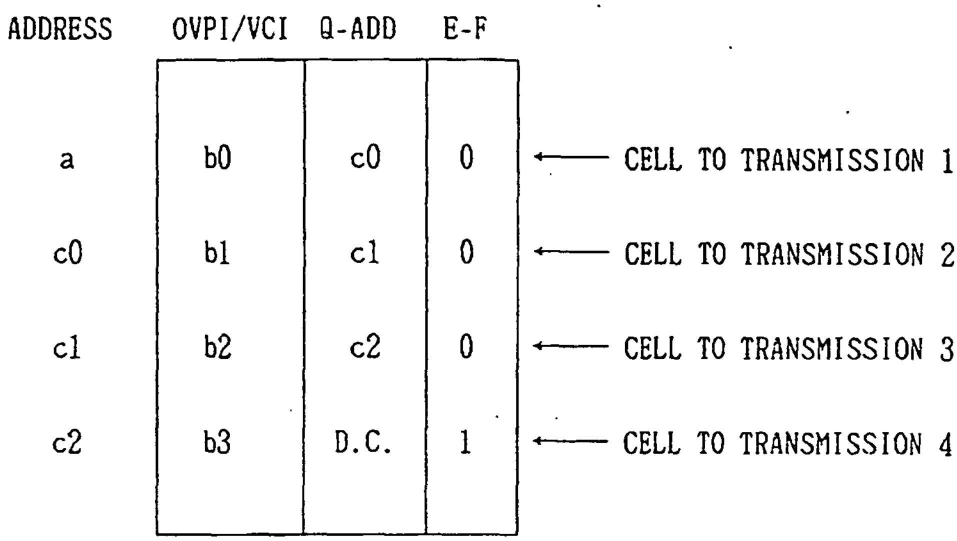
ADDRESS
OVPI/VCI
Q-ADD
E-F
a
b0
c0
0
CELL TO TRANSMISSION 1
c0
b1
c1
0
CELL TO TRANSMISSION 2
c1
b2
c2
0
CELL TO TRANSMISSION 3
c2
b3
D.C.
1
CELL TO TRANSMISSION 4

FIG. 9

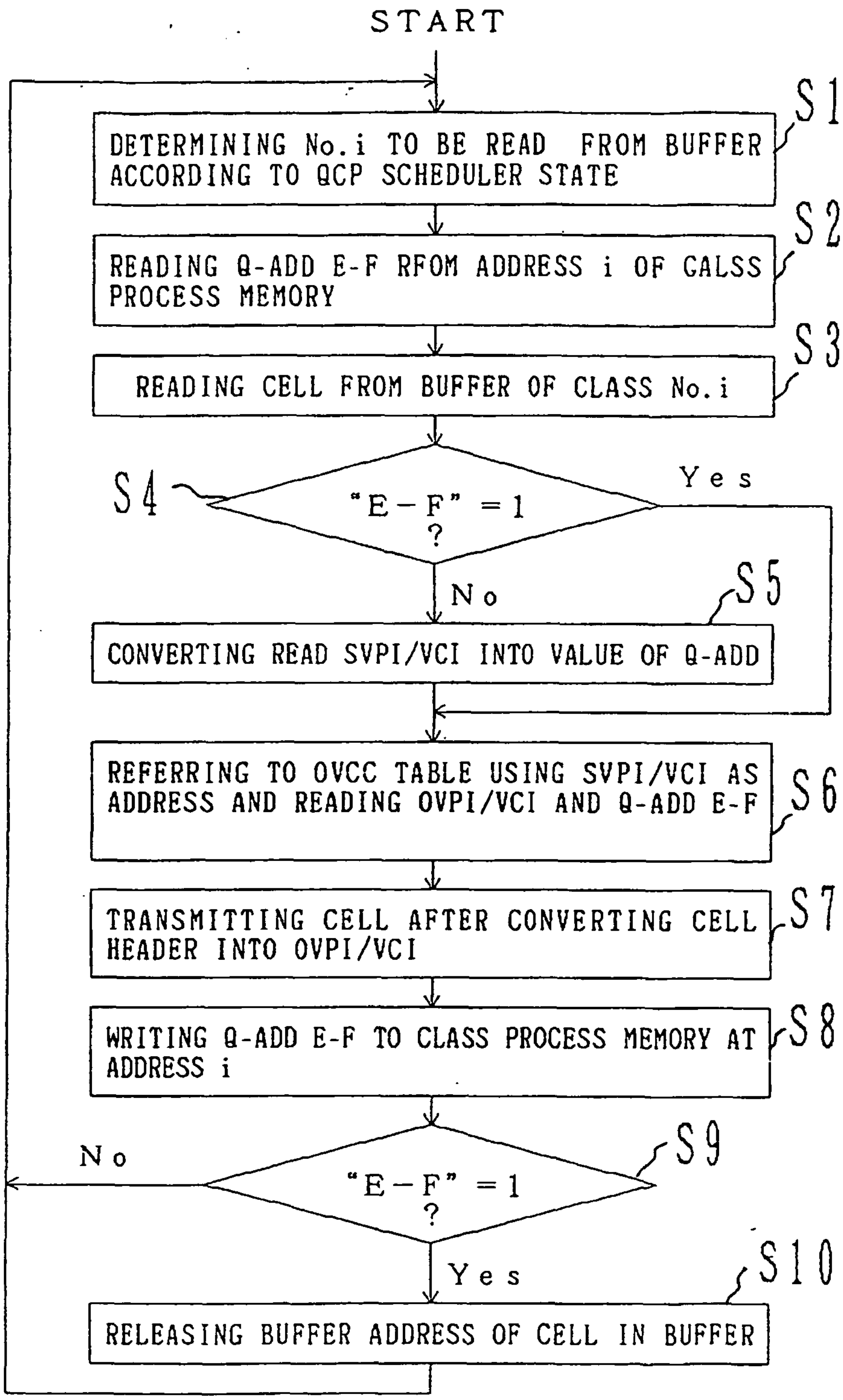
START
DETERMINING No.i TO BE READ FROM BUFFER ACCORDING TO QCP SCHEDULER STATE
S1
READING Q-ADD E-F RFOM ADDRESS i OF CALSS PROCESS MEMORY
S2
READING CELL FROM BUFFER OF CLASS No.i
S3
S4
"E-F" = 1 ?
Yes
No
S5
CONVERTING READ SVPI/VCI INTO VALUE OF Q-ADD
REFERRING TO OVCC TABLE USING SVPI/VCI AS ADDRESS AND READING OVPI/VCI AND Q-ADD E-F
S6
TRANSMITTING CELL AFTER CONVERTING CELL HEADER INTO OVPI/VCI
S7
WRITING Q-ADD E-F TO CLASS PROCESS MEMORY AT ADDRESS i
S8
No
"E-F" = 1 ?
S9
Yes
S10
RELEASING BUFFER ADDRESS OF CELL IN BUFFER

FIG. 10

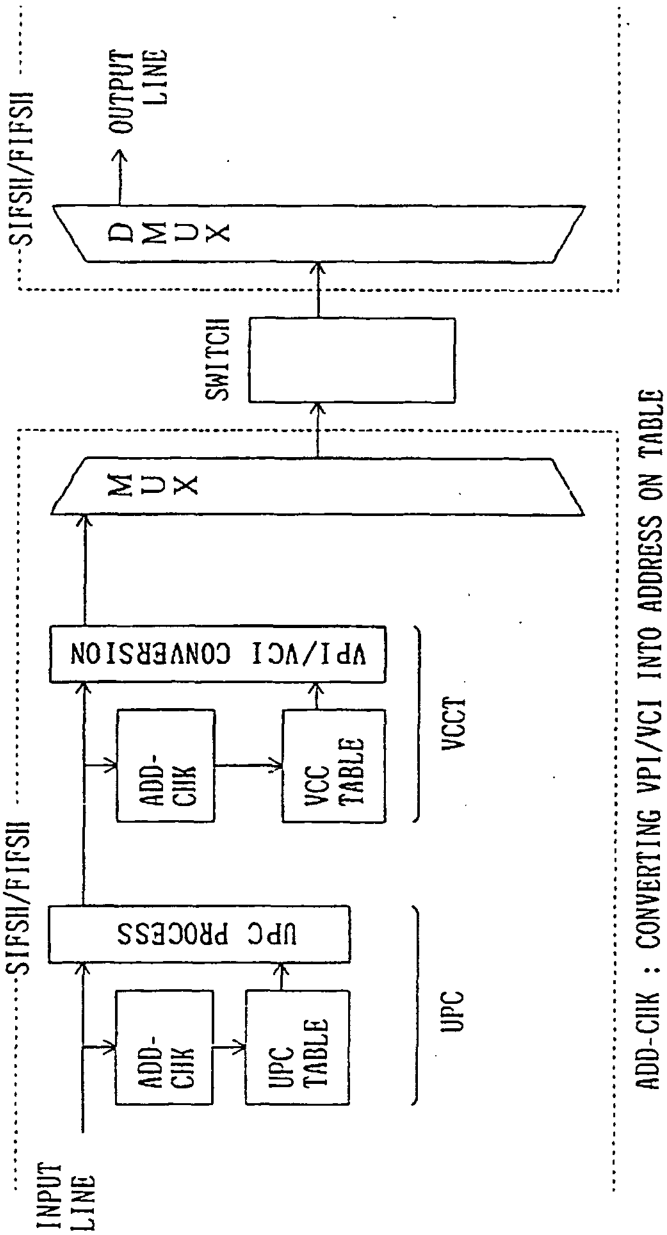
INPUT LINE
SIFSH/FIFSH
ADD-CHK
UPC TABLE
UPC PROCESS
UPC
ADD-CHK
VCC TABLE
VPI/VCI CONVERSION
VCCT
MUX
SWITCH
SIFSH/FIFSH
DMUX
OUTPUT LINE
ADD-CHK : CONVERTING VPI/VCI INTO ADDRESS ON TABLE

FIG. 11

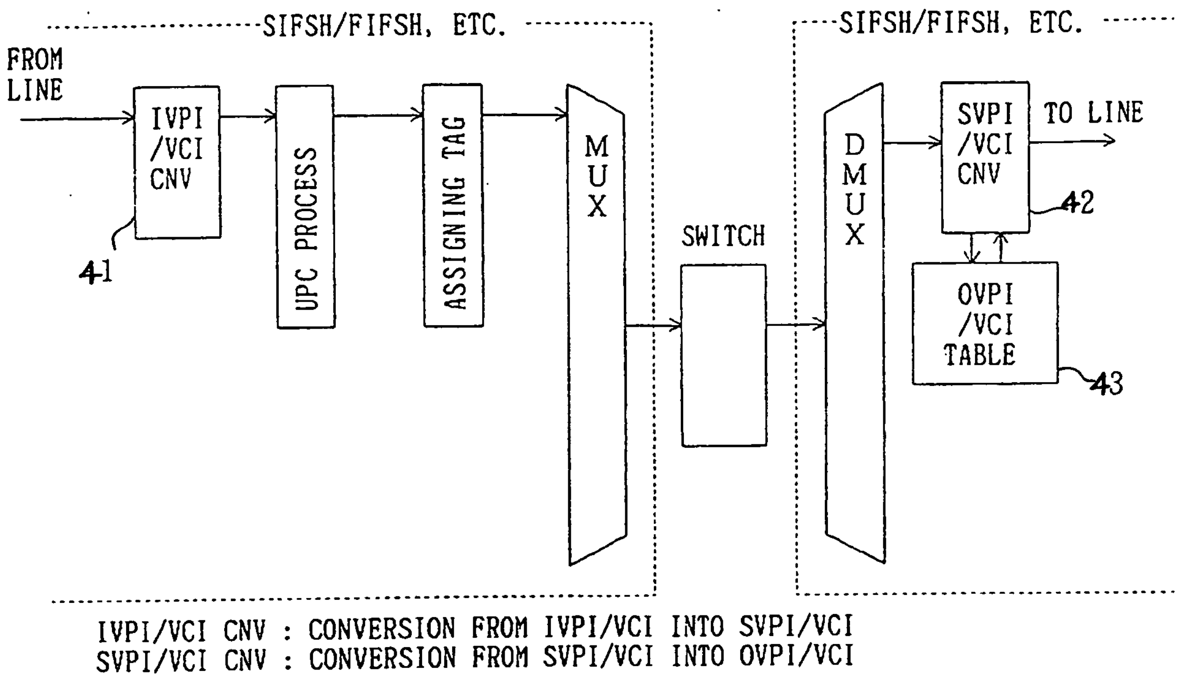
SIFSH/FIFSH, ETC.
FROM LINE
IVPI /VCI CNV
41
UPC PROCESS
ASSIGNING TAG
MUX
SWITCH
SIFSH/FIFSH, ETC.
DMUX
SVPI /VCI CNV
TO LINE
42
OVPI /VCI TABLE
43
IVPI/VCI CNV : CONVERSION FROM IVPI/VCI INTO SVPI/VCI
SVPI/VCI CNV : CONVERSION FROM SVPI/VCI INTO OVPI/VCI

FIG. 12

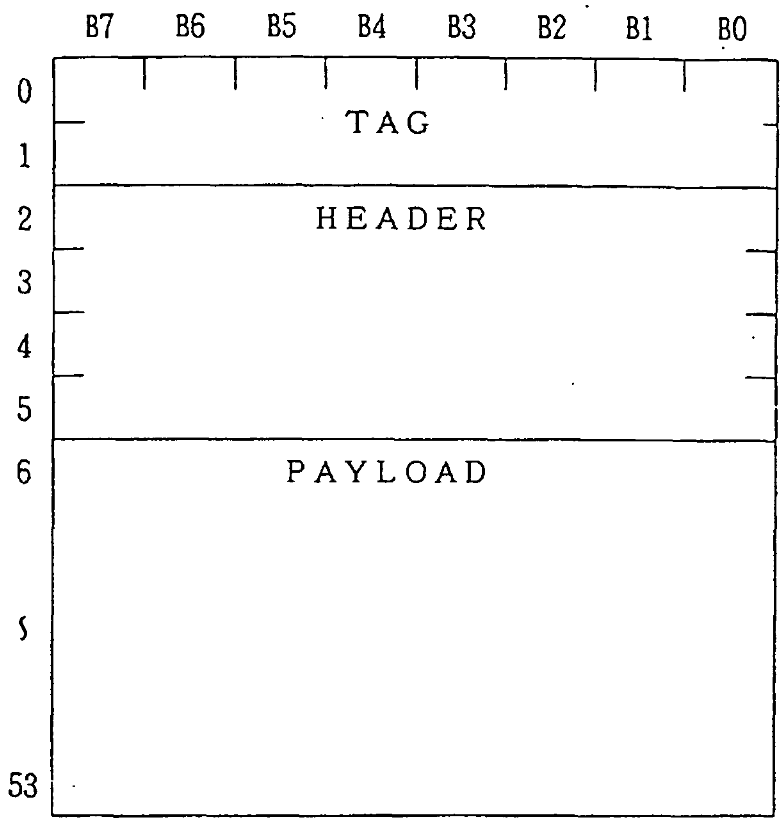


FIG. 13

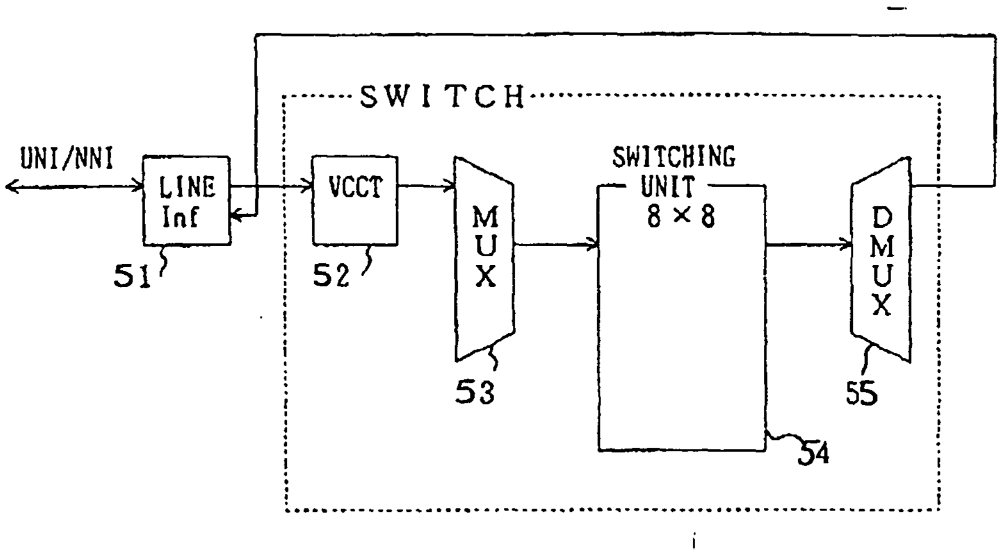
SWITCH
UNI/NNI
LINE Inf
VCCT
MUX
SWITCHING UNIT 8 × 8
DMUX
51
52
53
54
55

F I G. 14

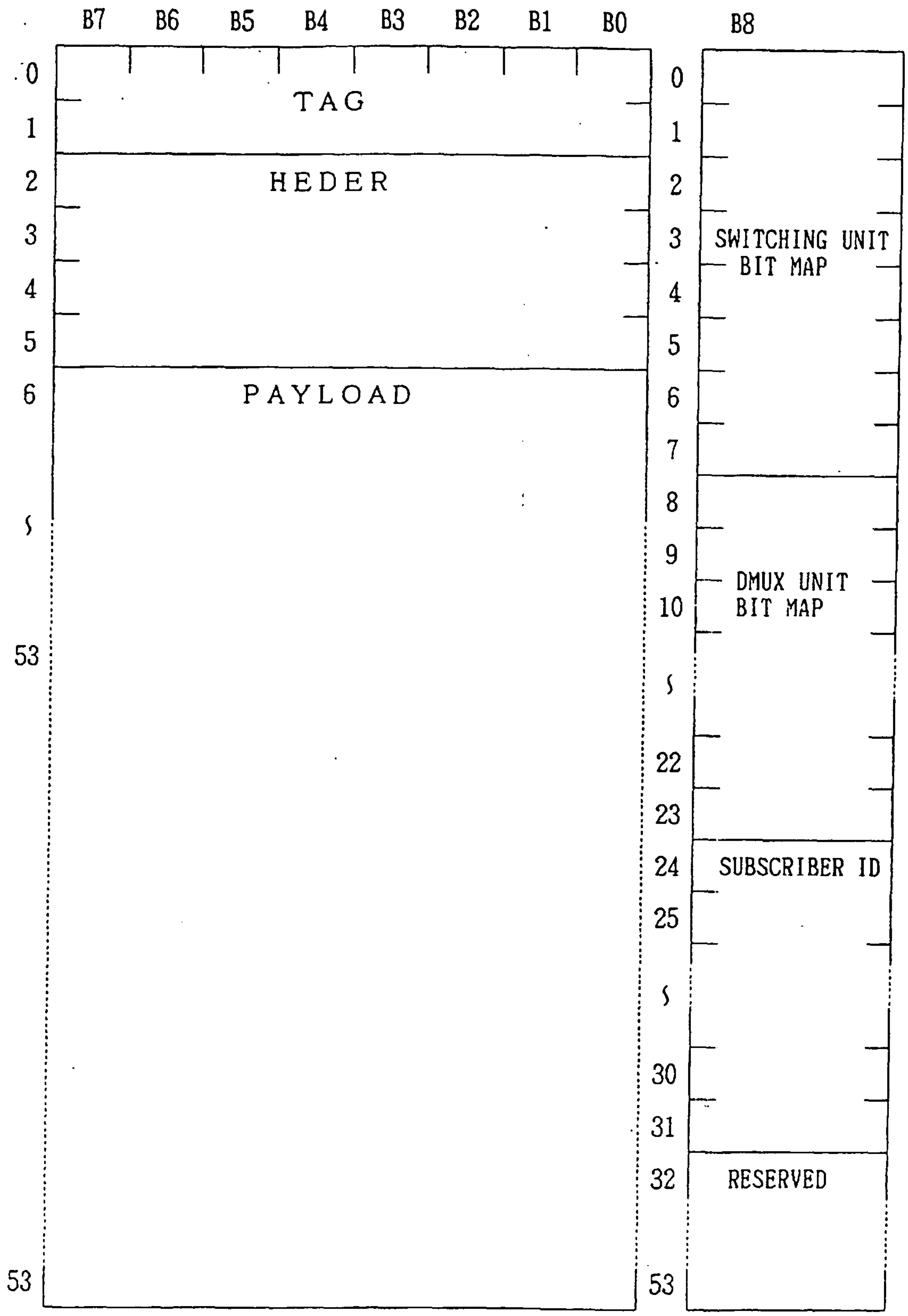
B7
B6
B5
B4
B3
B2
B1
B0
B8
TAG
HEDER
PAYLOAD
0
1
2
3
4
5
6
53
53
0
1
2
3
4
5
6
7
8
9
10
22
23
24
25
30
31
32
53
SWITCHING UNIT BIT MAP
DMUX UNIT BIT MAP
SUBSCRIBER ID
RESERVED

F I G. 15

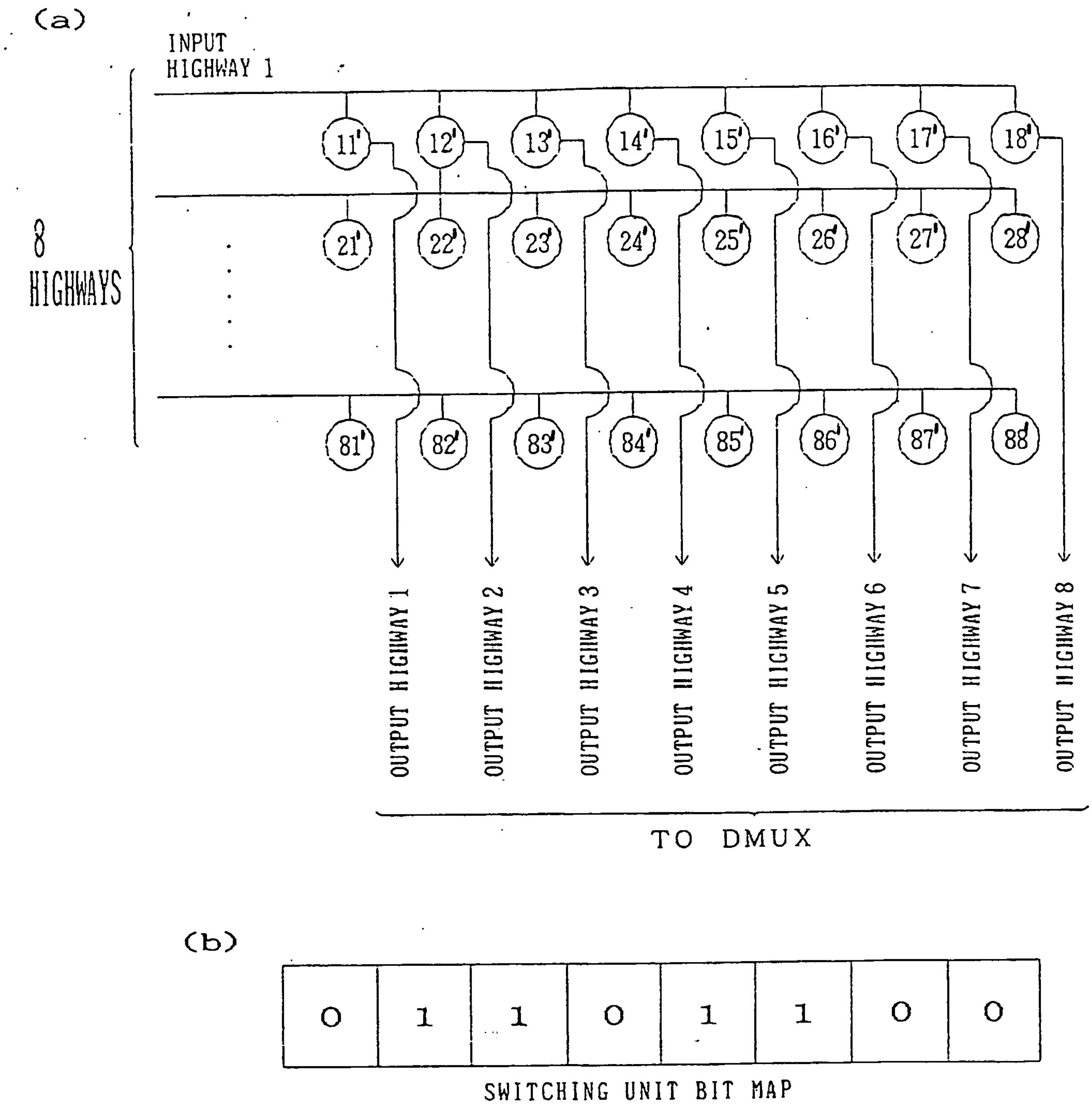
(a)
INPUT HIGHWAY 1
8 HIGHWAYS
11'
12'
13'
14'
15'
16'
17'
18'
21'
22'
23'
24'
25'
26'
27'
28'
81'
82'
83'
84'
85'
86'
87'
88'
OUTPUT HIGHWAY 1
OUTPUT HIGHWAY 2
OUTPUT HIGHWAY 3
OUTPUT HIGHWAY 4
OUTPUT HIGHWAY 5
OUTPUT HIGHWAY 6
OUTPUT HIGHWAY 7
OUTPUT HIGHWAY 8
TO DMUX
(b)
0
1
1
0
1
1
0
0
SWITCHING UNIT BIT MAP

F I G. 16

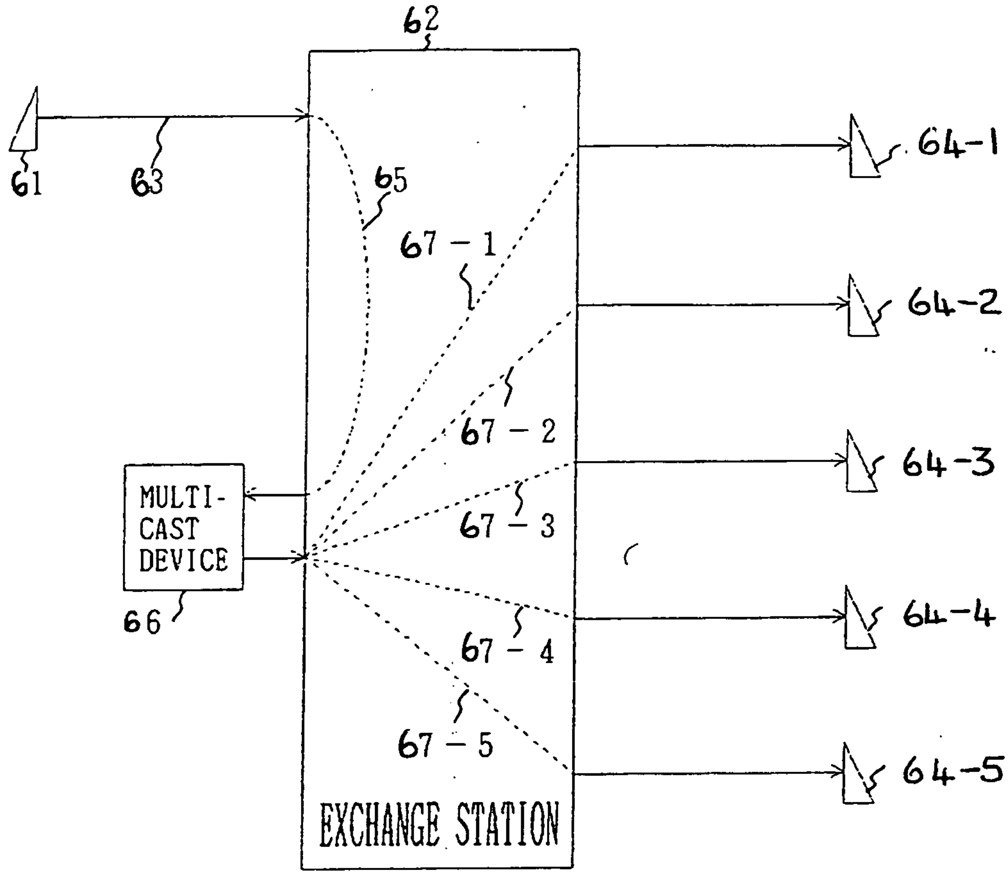
62
61
63
65
67 - 1
64-1
64-2
67 - 2
64-3
MULTI-
CAST
DEVICE
67 - 3
66
64-4
67 - 4
67 - 5
64-5
EXCHANGE STATION

F I G. 17

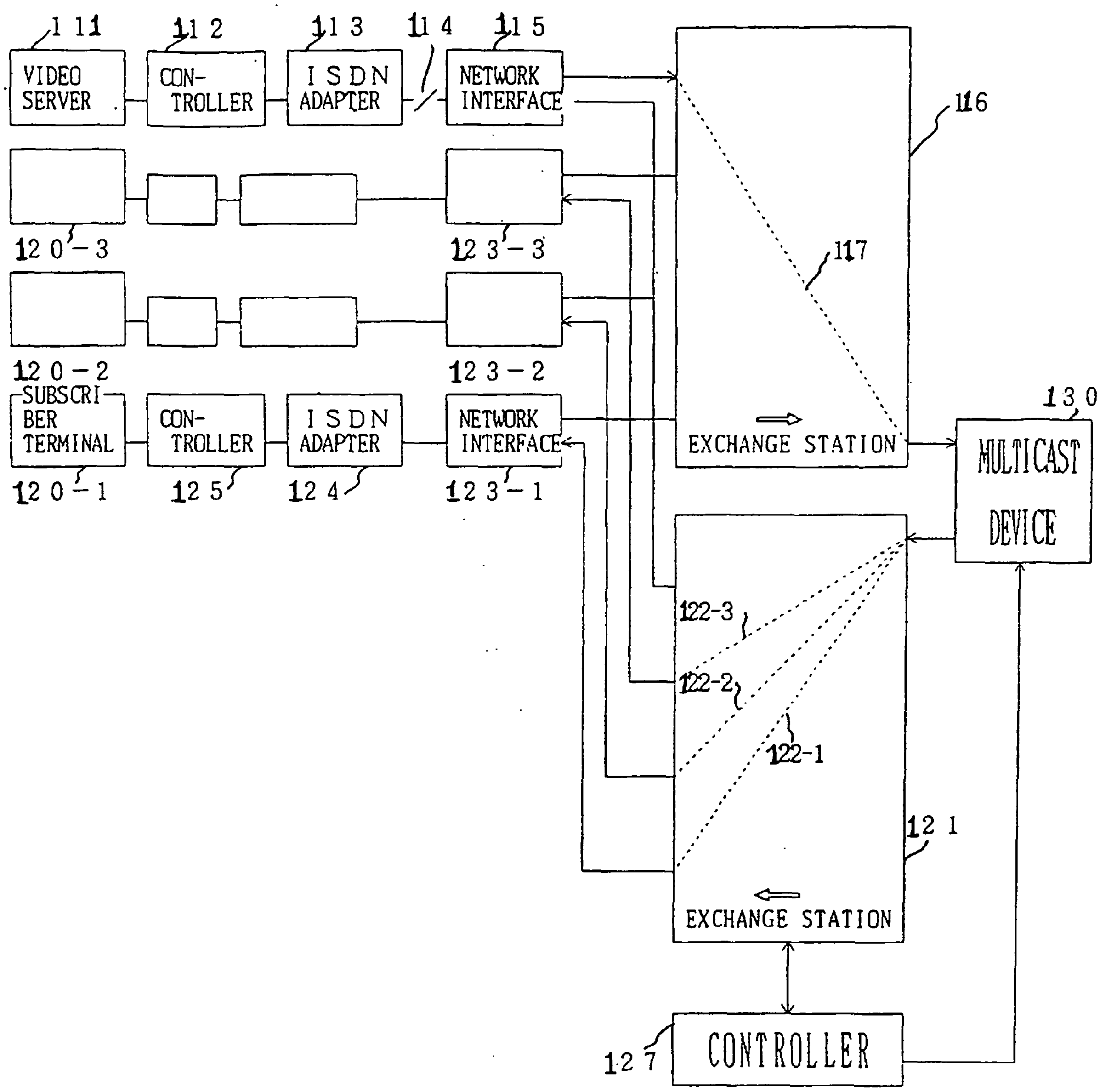

111
112
113
114
115
VIDEO SERVER
CON-TROLLER
ISDN ADAPTER
NETWORK INTERFACE
116
120-3
123-3
117
120-2
123-2
130
SUBSCRIBER TERMINAL
CON-TROLLER
ISDN ADAPTER
NETWORK INTERFACE
EXCHANGE STATION
MULTICAST DEVICE
120-1
125
124
123-1
122-3
122-2
122-1
121
EXCHANGE STATION
127
CONTROLLER


F I G. 18

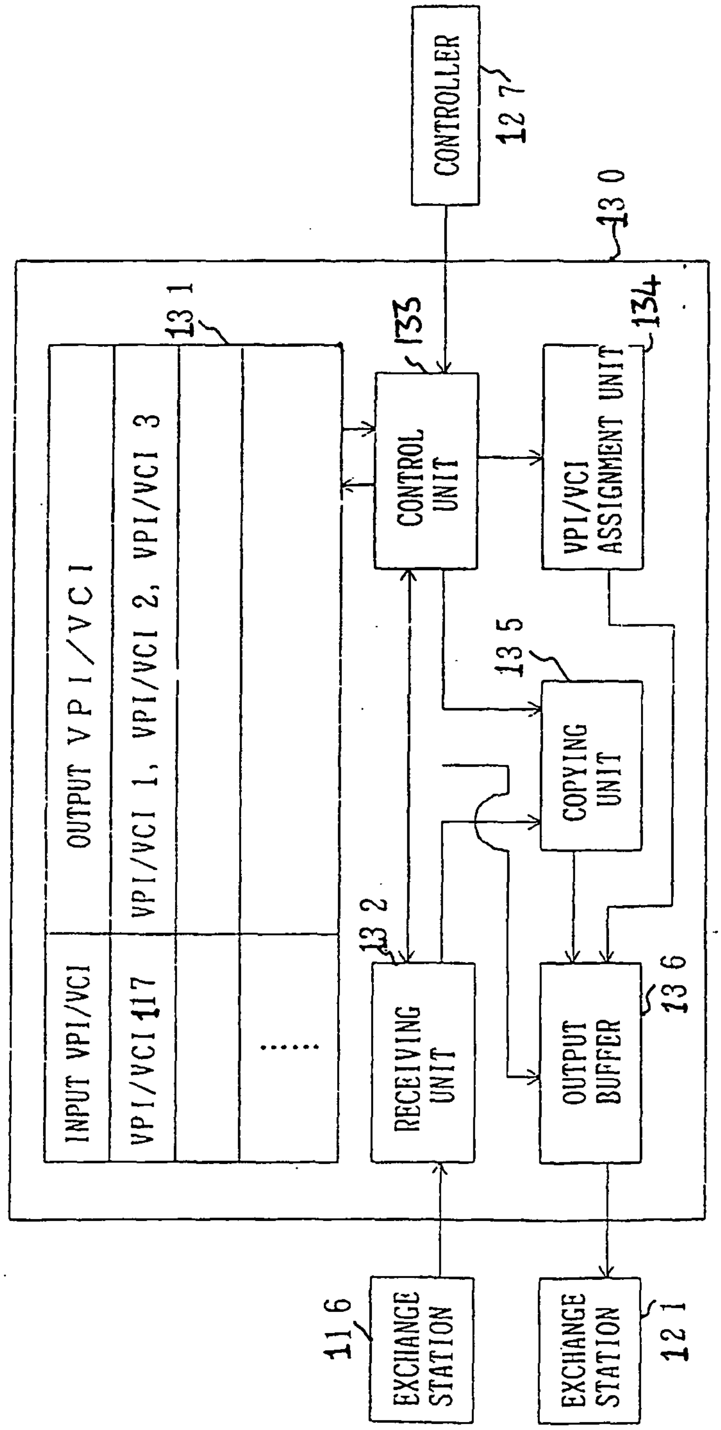
CONTROLLER
127
130
131
133
134
INPUT VPI/VCI
OUTPUT VPI/VCI
VPI/VCI 117
VPI/VCI 1, VPI/VCI 2, VPI/VCI 3
CONTROL UNIT
VPI/VCI ASSIGNMENT UNIT
135
COPYING UNIT
132
RECEIVING UNIT
OUTPUT BUFFER
136
116
EXCHANGE STATION
EXCHANGE STATION
121

FIG. 19

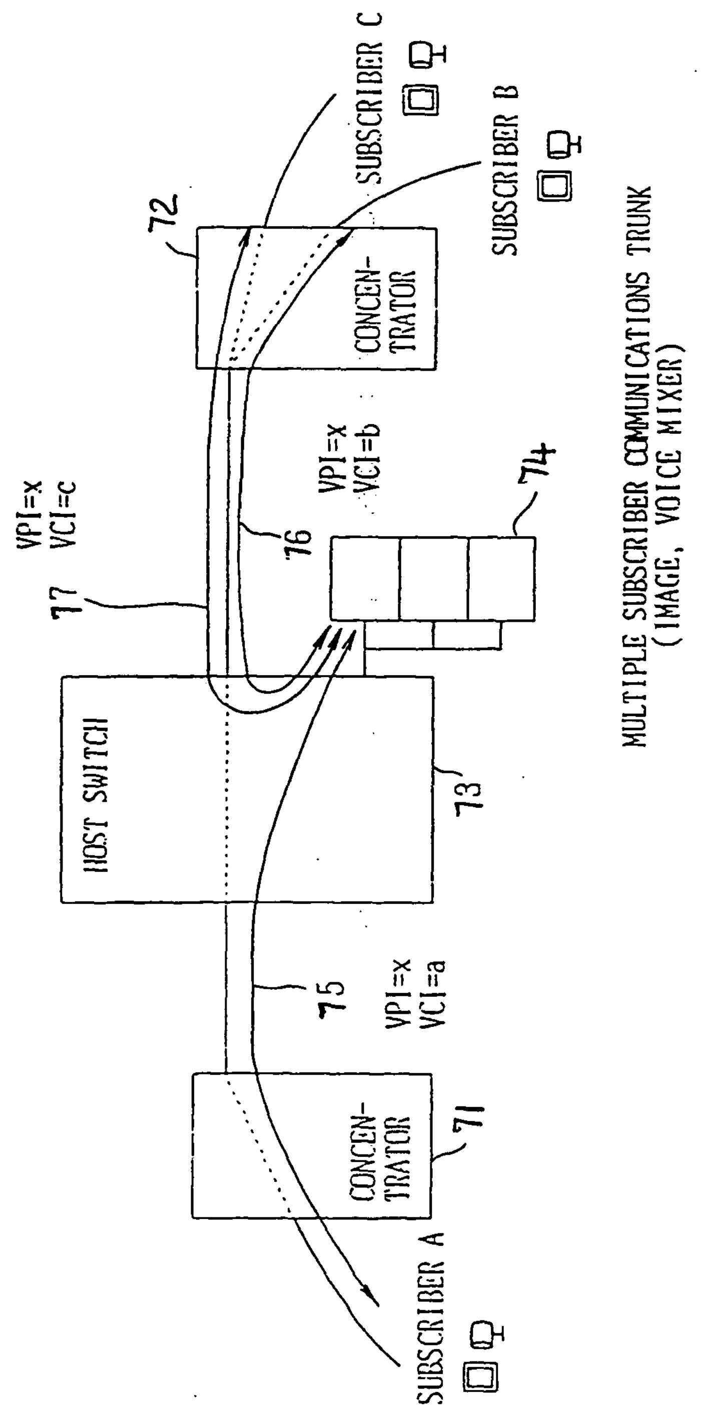
SUBSCRIBER C
SUBSCRIBER B
SUBSCRIBER A
72
CONCEN-
TRATOR
VPI=x
VCI=c
VPI=x
VCI=b
77
76
74
HOST SWITCH
73
75
VPI=x
VCI=a
CONCEN-
TRATOR
71
MULTIPLE SUBSCRIBER COMMUNICATIONS TRUNK
(IMAGE, VOICE MIXER)

FIG. 20

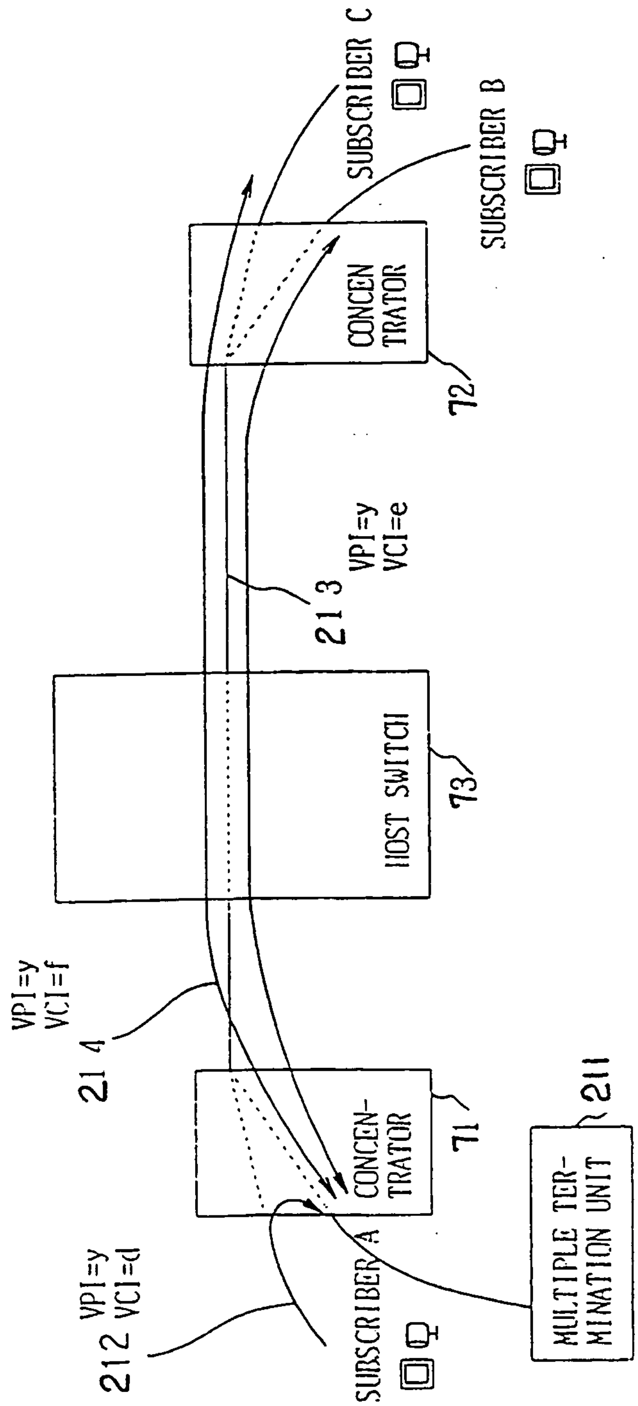
SUBSCRIBER C
SUBSCRIBER B
CONCEN
TRATOR
72
VPI=y
VCI=e
213
HOST SWITCH
73
VPI=y
VCI=f
214
CONCEN-
TRATOR
71
211
MULTIPLE TER-
MINATION UNIT
VPI=y
VCI=d
212
SUBSCRIBER A

FIG. 21

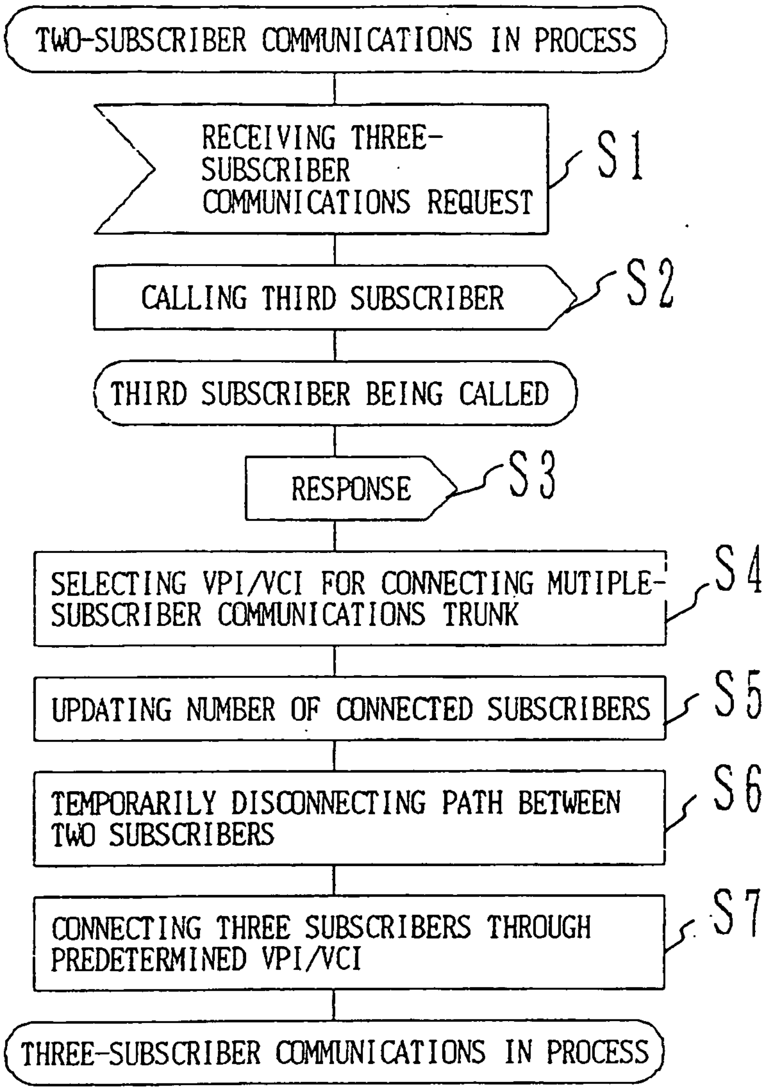
TWO-SUBSCRIBER COMMUNICATIONS IN PROCESS
RECEIVING THREE-SUBSCRIBER COMMUNICATIONS REQUEST
S1
CALLING THIRD SUBSCRIBER
S2
THIRD SUBSCRIBER BEING CALLED
RESPONSE
S3
SELECTING VPI/VCI FOR CONNECTING MUTIPLE-SUBSCRIBER COMMUNICATIONS TRUNK
S4
UPDATING NUMBER OF CONNECTED SUBSCRIBERS
S5
TEMPORARILY DISCONNECTING PATH BETWEEN TWO SUBSCRIBERS
S6
CONNECTING THREE SUBSCRIBERS THROUGH PREDETERMINED VPI/VCI
S7
THREE-SUBSCRIBER COMMUNICATIONS IN PROCESS

FIG. 22

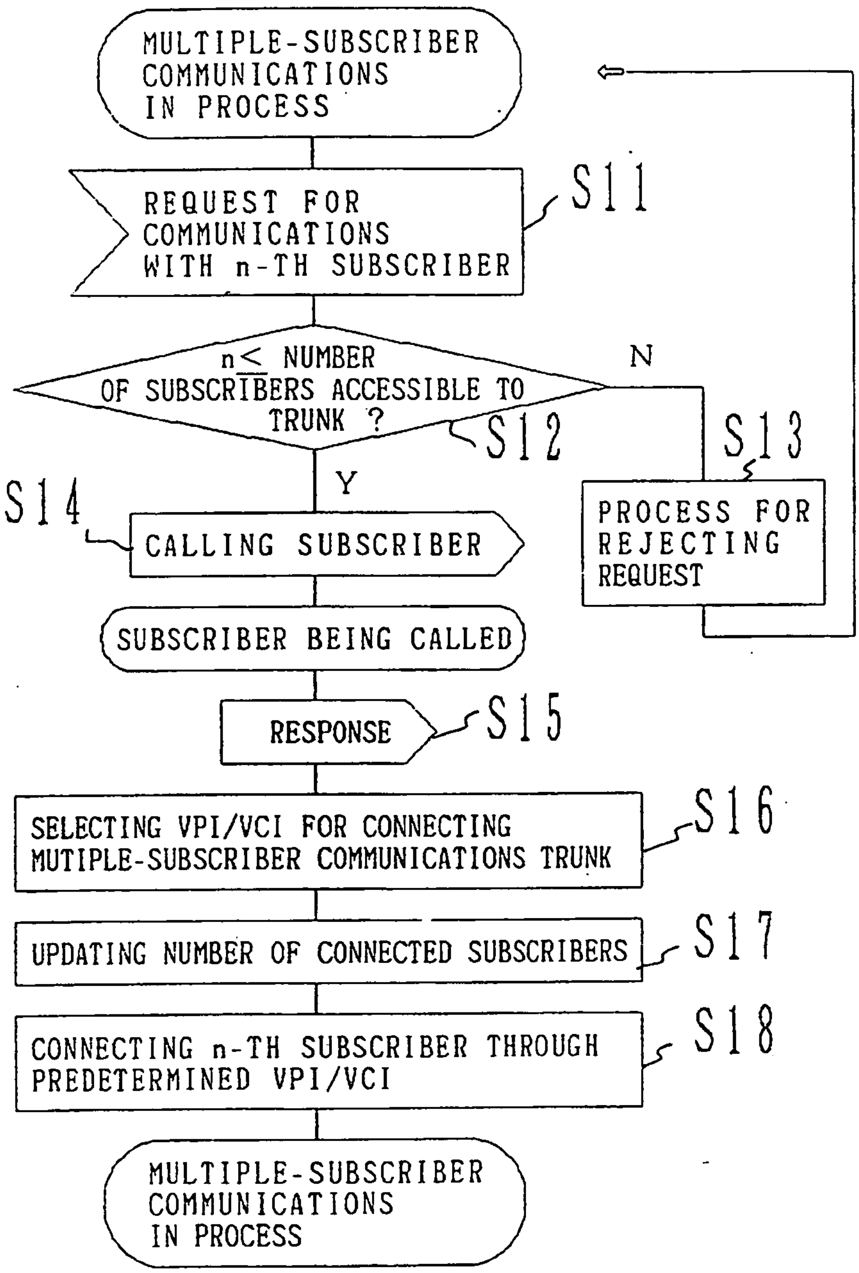
MULTIPLE-SUBSCRIBER COMMUNICATIONS IN PROCESS
REQUEST FOR COMMUNICATIONS WITH n-TH SUBSCRIBER
S11
n ≤ NUMBER OF SUBSCRIBERS ACCESSIBLE TO TRUNK ?
S12
N
S13
PROCESS FOR REJECTING REQUEST
Y
S14
CALLING SUBSCRIBER
SUBSCRIBER BEING CALLED
RESPONSE
S15
SELECTING VPI/VCI FOR CONNECTING MUTIPLE-SUBSCRIBER COMMUNICATIONS TRUNK
S16
UPDATING NUMBER OF CONNECTED SUBSCRIBERS
S17
CONNECTING n-TH SUBSCRIBER THROUGH PREDETERMINED VPI/VCI
S18
MULTIPLE-SUBSCRIBER COMMUNICATIONS IN PROCESS

FIG. 23

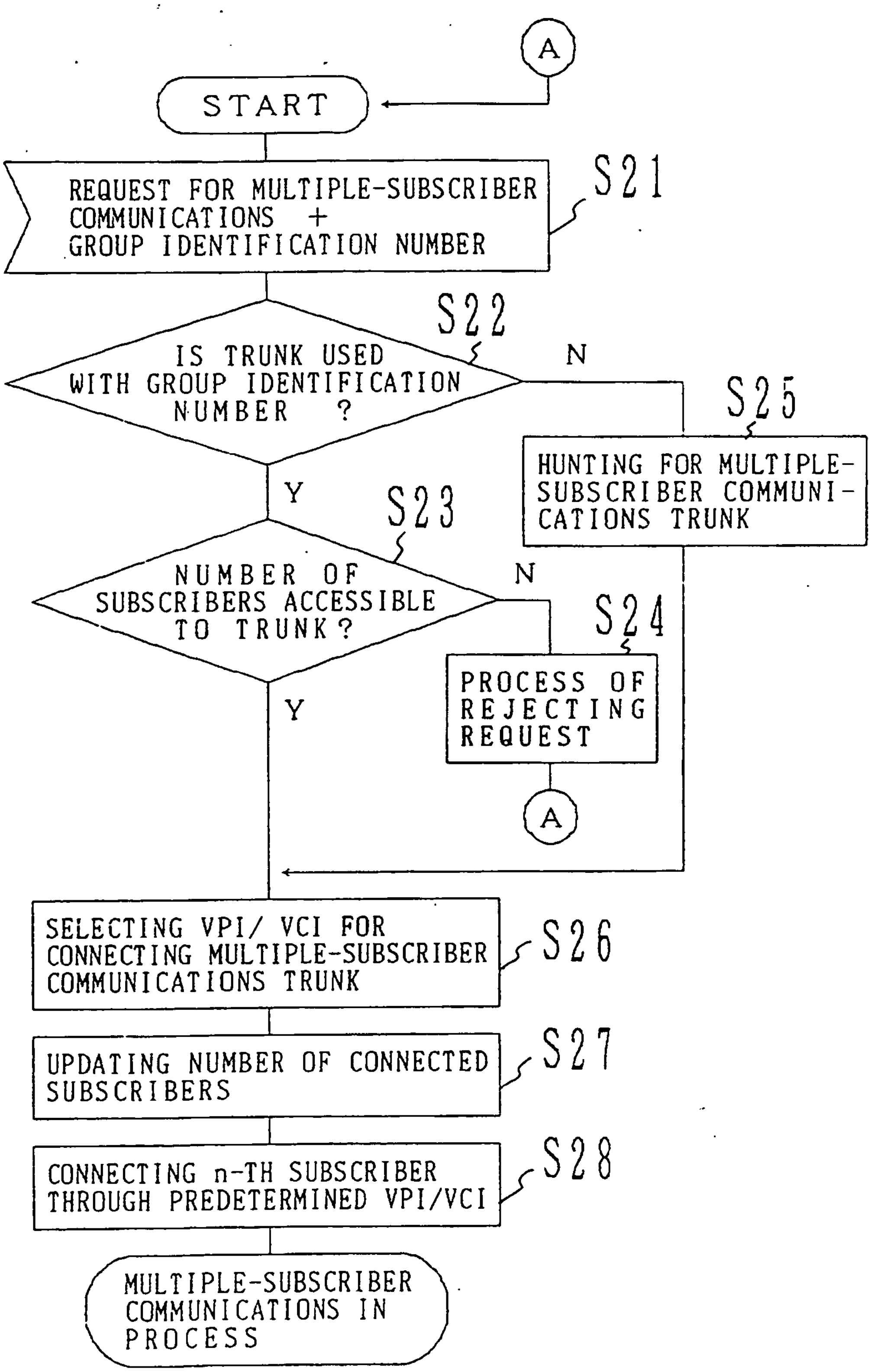
A
START
REQUEST FOR MULTIPLE-SUBSCRIBER COMMUNICATIONS + GROUP IDENTIFICATION NUMBER
S21
IS TRUNK USED WITH GROUP IDENTIFICATION NUMBER ?
S22
N
Y
S25
HUNTING FOR MULTIPLE-SUBSCRIBER COMMUNICATIONS TRUNK
NUMBER OF SUBSCRIBERS ACCESSIBLE TO TRUNK?
S23
N
Y
S24
PROCESS OF REJECTING REQUEST
A
SELECTING VPI/ VCI FOR CONNECTING MULTIPLE-SUBSCRIBER COMMUNICATIONS TRUNK
S26
UPDATING NUMBER OF CONNECTED SUBSCRIBERS
S27
CONNECTING n-TH SUBSCRIBER THROUGH PREDETERMINED VPI/VCI
S28
MULTIPLE-SUBSCRIBER COMMUNICATIONS IN PROCESS

F I G. 24

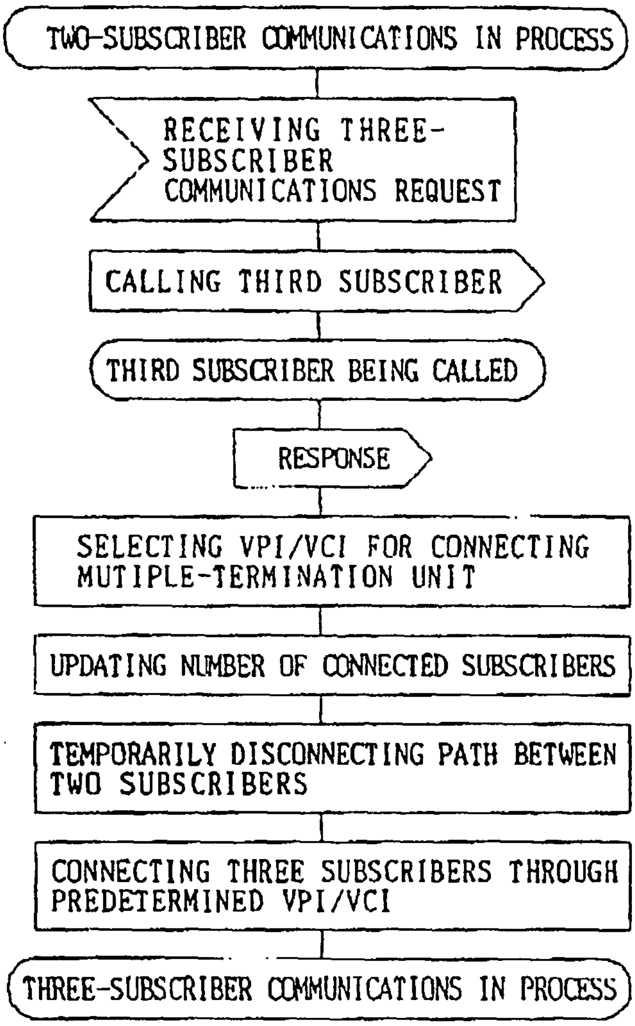
TWO-SUBSCRIBER COMMUNICATIONS IN PROCESS
RECEIVING THREE-SUBSCRIBER COMMUNICATIONS REQUEST
CALLING THIRD SUBSCRIBER
THIRD SUBSCRIBER BEING CALLED
RESPONSE
SELECTING VPI/VCI FOR CONNECTING MUTIPLE-TERMINATION UNIT
UPDATING NUMBER OF CONNECTED SUBSCRIBERS
TEMPORARILY DISCONNECTING PATH BETWEEN TWO SUBSCRIBERS
CONNECTING THREE SUBSCRIBERS THROUGH PREDETERMINED VPI/VCI
THREE-SUBSCRIBER COMMUNICATIONS IN PROCESS

FIG. 25

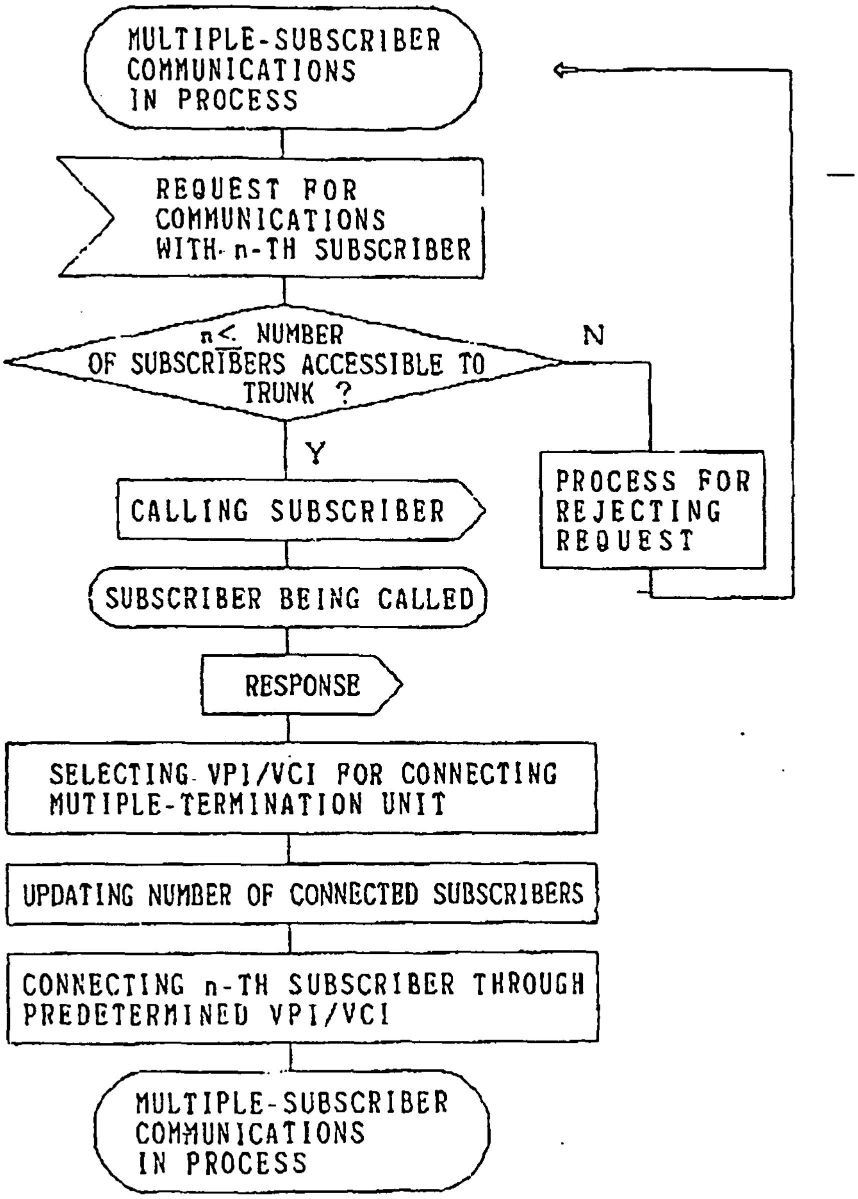
MULTIPLE-SUBSCRIBER COMMUNICATIONS IN PROCESS
REQUEST FOR COMMUNICATIONS WITH n-TH SUBSCRIBER
n≤ NUMBER OF SUBSCRIBERS ACCESSIBLE TO TRUNK ?
N
Y
PROCESS FOR REJECTING REQUEST
CALLING SUBSCRIBER
SUBSCRIBER BEING CALLED
RESPONSE
SELECTING VPI/VCI FOR CONNECTING MUTIPLE-TERMINATION UNIT
UPDATING NUMBER OF CONNECTED SUBSCRIBERS
CONNECTING n-TH SUBSCRIBER THROUGH PREDETERMINED VPI/VCI
MULTIPLE-SUBSCRIBER COMMUNICATIONS IN PROCESS

FIG. 26

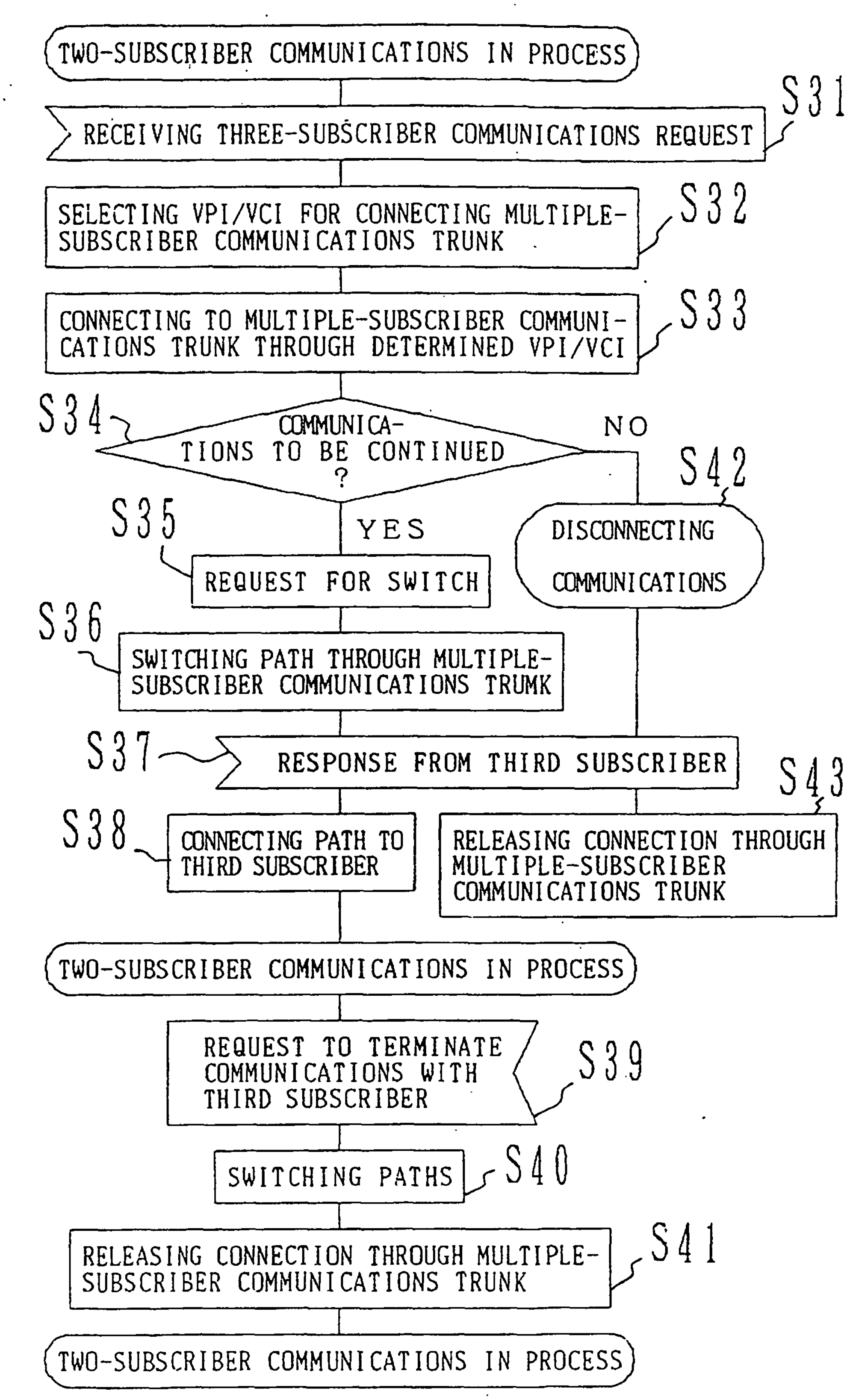
TWO-SUBSCRIBER COMMUNICATIONS IN PROCESS
RECEIVING THREE-SUBSCRIBER COMMUNICATIONS REQUEST
S31
SELECTING VPI/VCI FOR CONNECTING MULTIPLE-SUBSCRIBER COMMUNICATIONS TRUNK
S32
CONNECTING TO MULTIPLE-SUBSCRIBER COMMUNICATIONS TRUNK THROUGH DETERMINED VPI/VCI
S33
S34
COMMUNICATIONS TO BE CONTINUED ?
NO
S42
S35
YES
DISCONNECTING COMMUNICATIONS
REQUEST FOR SWITCH
S36
SWITCHING PATH THROUGH MULTIPLE-SUBSCRIBER COMMUNICATIONS TRUMK
S37
RESPONSE FROM THIRD SUBSCRIBER
S43
S38
CONNECTING PATH TO THIRD SUBSCRIBER
RELEASING CONNECTION THROUGH MULTIPLE-SUBSCRIBER COMMUNICATIONS TRUNK
TWO-SUBSCRIBER COMMUNICATIONS IN PROCESS
REQUEST TO TERMINATE COMMUNICATIONS WITH THIRD SUBSCRIBER
S39
SWITCHING PATHS
S40
RELEASING CONNECTION THROUGH MULTIPLE-SUBSCRIBER COMMUNICATIONS TRUNK
S41
TWO-SUBSCRIBER COMMUNICATIONS IN PROCESS

FIG. 27

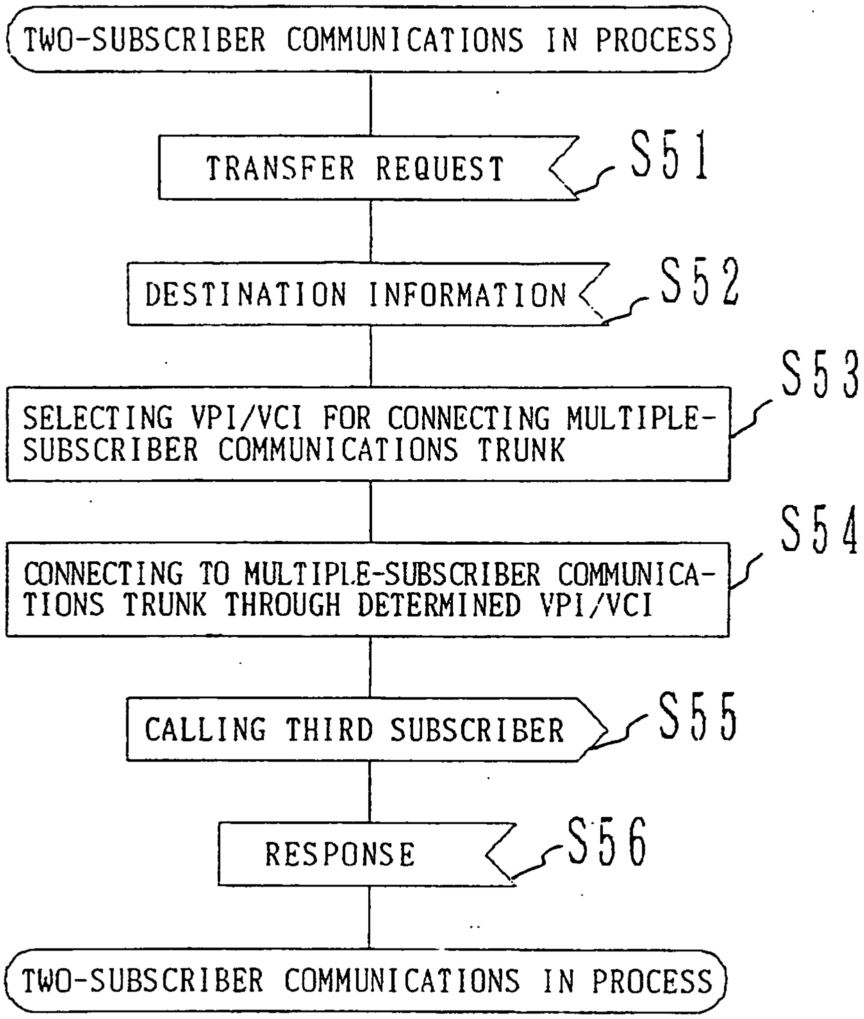
TWO-SUBSCRIBER COMMUNICATIONS IN PROCESS
TRANSFER REQUEST
S51
DESTINATION INFORMATION
S52
SELECTING VPI/VCI FOR CONNECTING MULTIPLE-SUBSCRIBER COMMUNICATIONS TRUNK
S53
CONNECTING TO MULTIPLE-SUBSCRIBER COMMUNICATIONS TRUNK THROUGH DETERMINED VPI/VCI
S54
CALLING THIRD SUBSCRIBER
S55
RESPONSE
S56
TWO-SUBSCRIBER COMMUNICATIONS IN PROCESS

FIG. 28

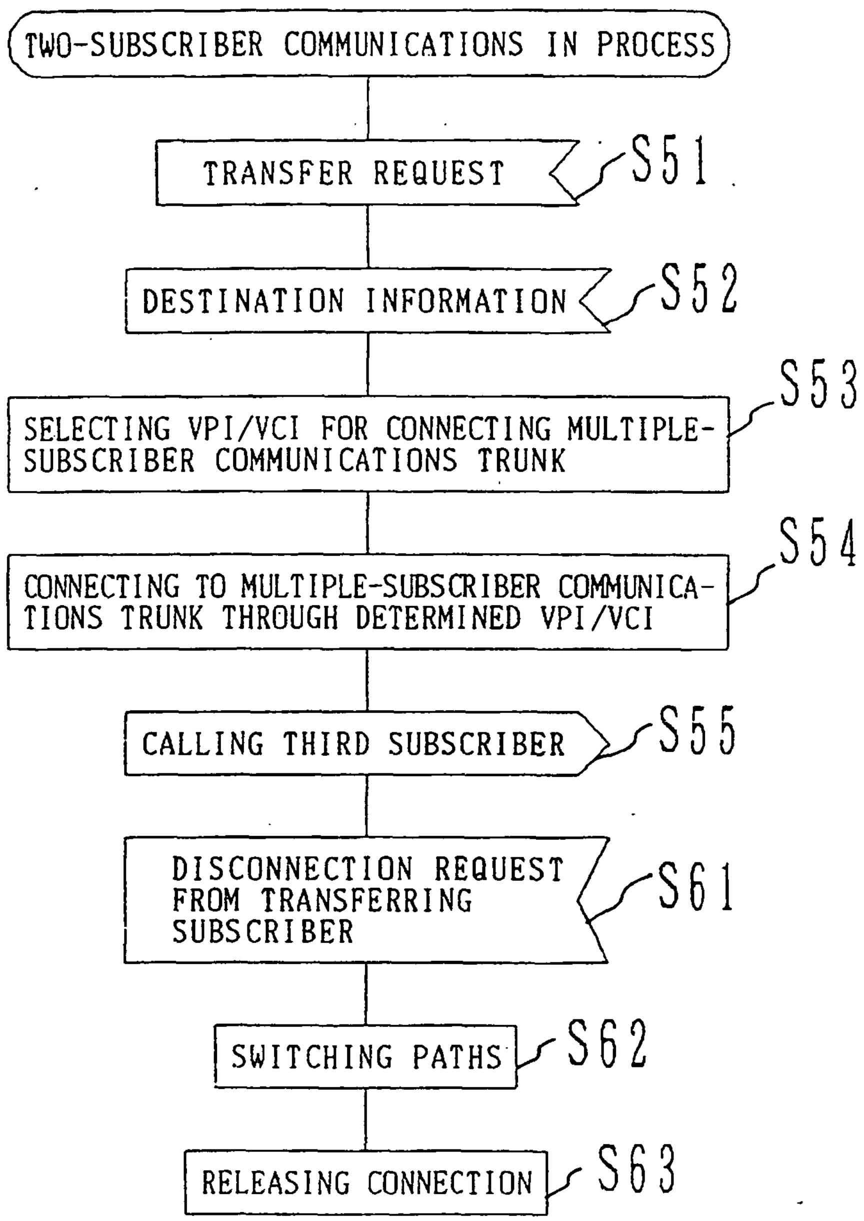
TWO-SUBSCRIBER COMMUNICATIONS IN PROCESS
TRANSFER REQUEST
S51
DESTINATION INFORMATION
S52
SELECTING VPI/VCI FOR CONNECTING MULTIPLE-SUBSCRIBER COMMUNICATIONS TRUNK
S53
CONNECTING TO MULTIPLE-SUBSCRIBER COMMUNICATIONS TRUNK THROUGH DETERMINED VPI/VCI
S54
CALLING THIRD SUBSCRIBER
S55
DISCONNECTION REQUEST FROM TRANSFERRING SUBSCRIBER
S61
SWITCHING PATHS
S62
RELEASING CONNECTION
S63

FIG. 29

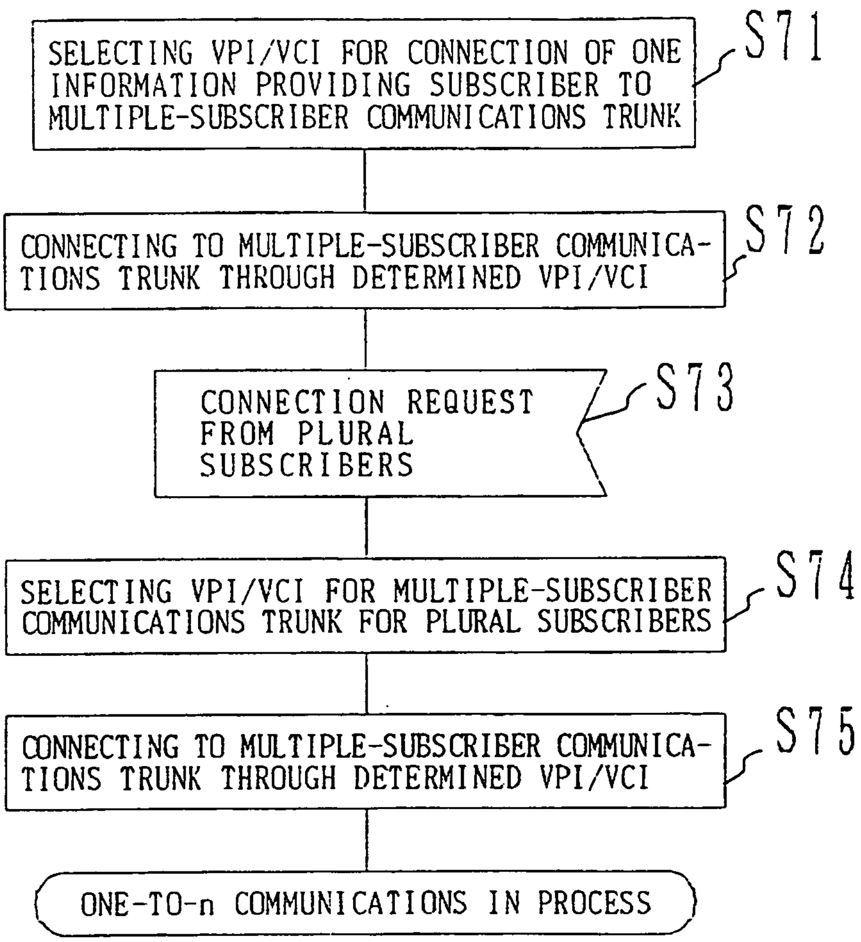
SELECTING VPI/VCI FOR CONNECTION OF ONE INFORMATION PROVIDING SUBSCRIBER TO MULTIPLE-SUBSCRIBER COMMUNICATIONS TRUNK
S71
CONNECTING TO MULTIPLE-SUBSCRIBER COMMUNICATIONS TRUNK THROUGH DETERMINED VPI/VCI
S72
CONNECTION REQUEST FROM PLURAL SUBSCRIBERS
S73
SELECTING VPI/VCI FOR MULTIPLE-SUBSCRIBER COMMUNICATIONS TRUNK FOR PLURAL SUBSCRIBERS
S74
CONNECTING TO MULTIPLE-SUBSCRIBER COMMUNICATIONS TRUNK THROUGH DETERMINED VPI/VCI
S75
ONE-TO-n COMMUNICATIONS IN PROCESS

FIG. 30

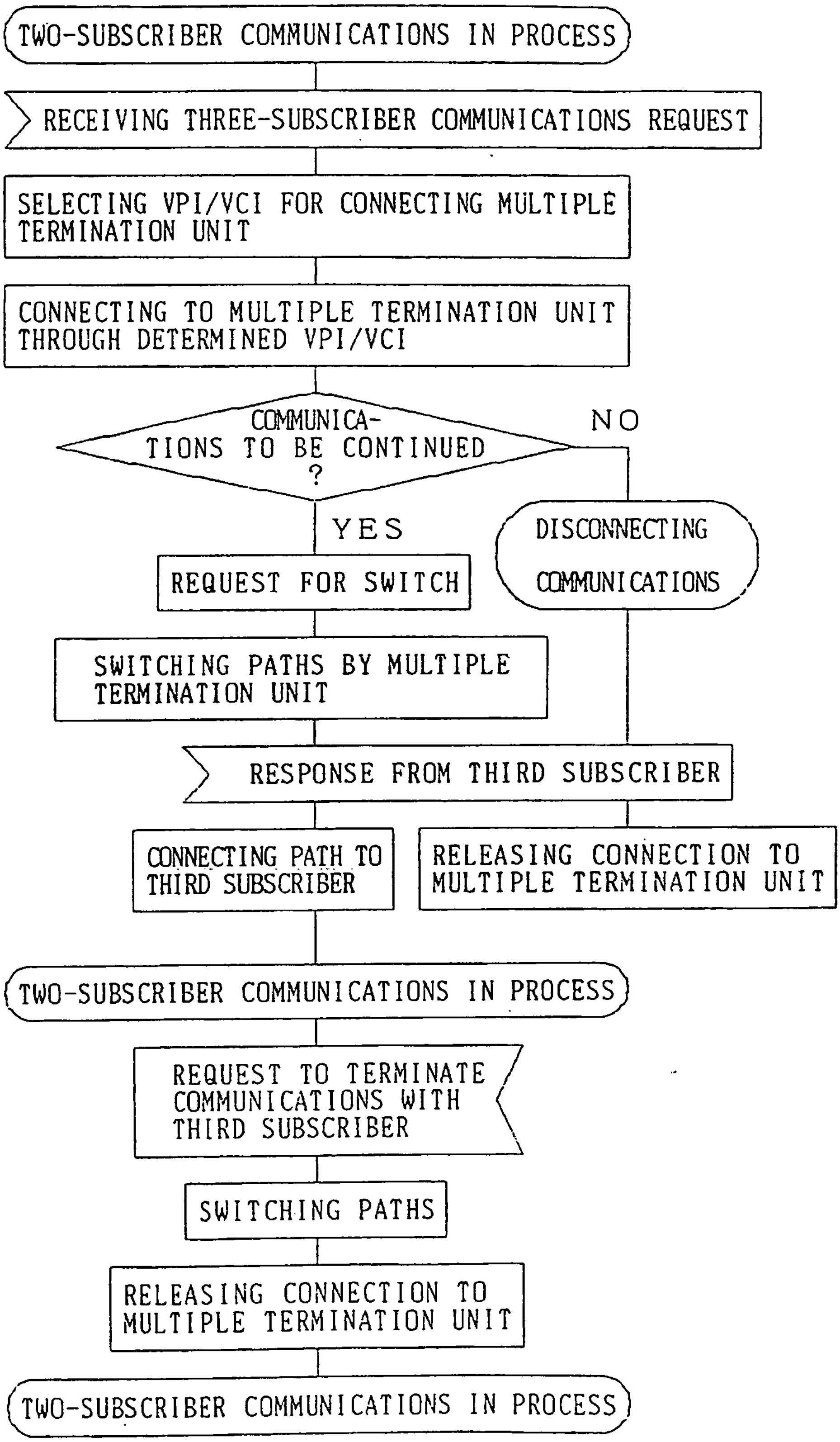
TWO-SUBSCRIBER COMMUNICATIONS IN PROCESS
RECEIVING THREE-SUBSCRIBER COMMUNICATIONS REQUEST
SELECTING VPI/VCI FOR CONNECTING MULTIPLE TERMINATION UNIT
CONNECTING TO MULTIPLE TERMINATION UNIT THROUGH DETERMINED VPI/VCI
COMMUNICATIONS TO BE CONTINUED ?
NO
YES
REQUEST FOR SWITCH
DISCONNECTING COMMUNICATIONS
SWITCHING PATHS BY MULTIPLE TERMINATION UNIT
RESPONSE FROM THIRD SUBSCRIBER
CONNECTING PATH TO THIRD SUBSCRIBER
RELEASING CONNECTION TO MULTIPLE TERMINATION UNIT
TWO-SUBSCRIBER COMMUNICATIONS IN PROCESS
REQUEST TO TERMINATE COMMUNICATIONS WITH THIRD SUBSCRIBER
SWITCHING PATHS
RELEASING CONNECTION TO MULTIPLE TERMINATION UNIT
TWO-SUBSCRIBER COMMUNICATIONS IN PROCESS

FIG. 31

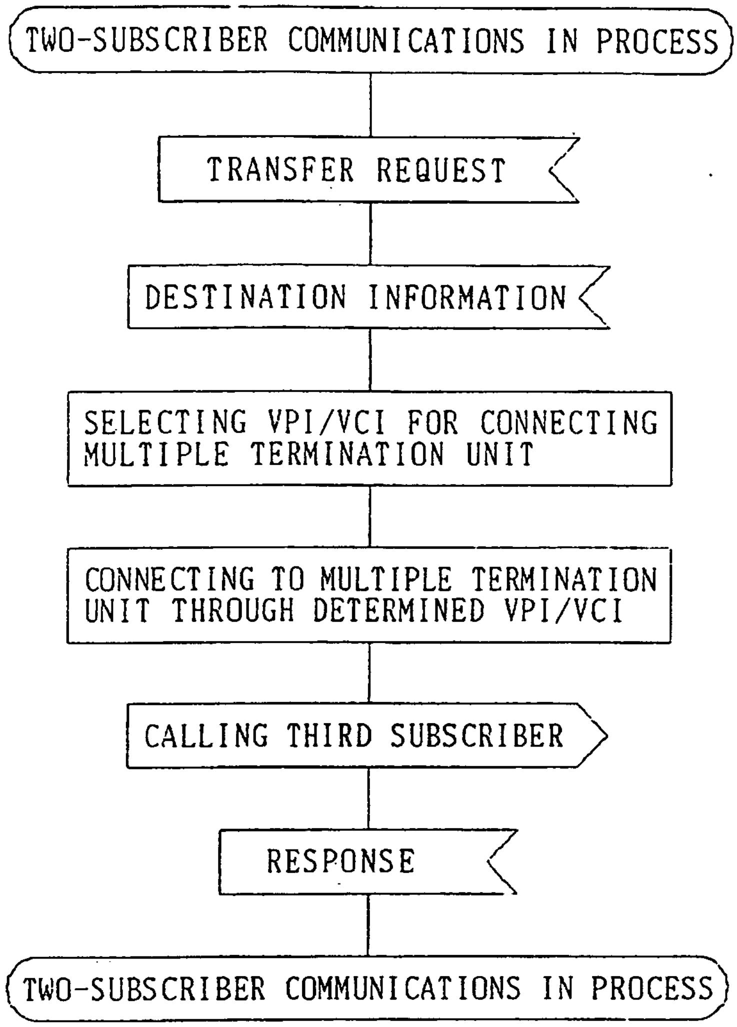
TWO-SUBSCRIBER COMMUNICATIONS IN PROCESS
TRANSFER REQUEST
DESTINATION INFORMATION
SELECTING VPI/VCI FOR CONNECTING MULTIPLE TERMINATION UNIT
CONNECTING TO MULTIPLE TERMINATION UNIT THROUGH DETERMINED VPI/VCI
CALLING THIRD SUBSCRIBER
RESPONSE
TWO-SUBSCRIBER COMMUNICATIONS IN PROCESS

FIG. 32

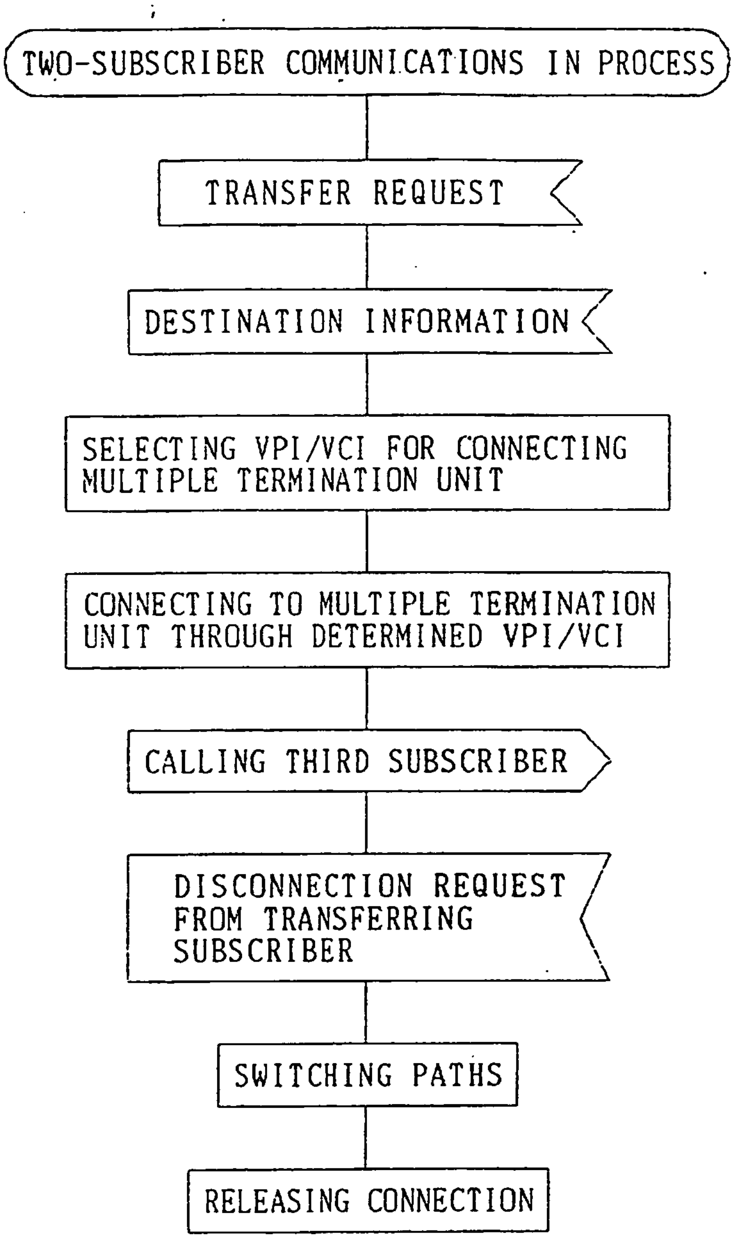
TWO-SUBSCRIBER COMMUNICATIONS IN PROCESS
TRANSFER REQUEST
DESTINATION INFORMATION
SELECTING VPI/VCI FOR CONNECTING MULTIPLE TERMINATION UNIT
CONNECTING TO MULTIPLE TERMINATION UNIT THROUGH DETERMINED VPI/VCI
CALLING THIRD SUBSCRIBER
DISCONNECTION REQUEST FROM TRANSFERRING SUBSCRIBER
SWITCHING PATHS
RELEASING CONNECTION

F I G. 33

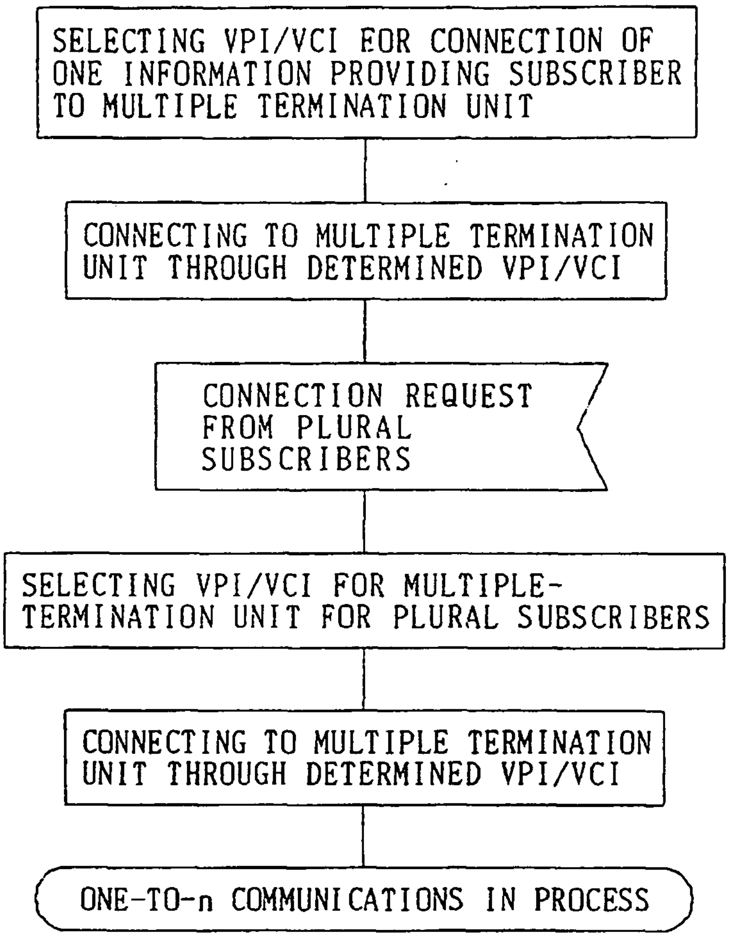
SELECTING VPI/VCI FOR CONNECTION OF ONE INFORMATION PROVIDING SUBSCRIBER TO MULTIPLE TERMINATION UNIT
CONNECTING TO MULTIPLE TERMINATION UNIT THROUGH DETERMINED VPI/VCI
CONNECTION REQUEST FROM PLURAL SUBSCRIBERS
SELECTING VPI/VCI FOR MULTIPLE-TERMINATION UNIT FOR PLURAL SUBSCRIBERS
CONNECTING TO MULTIPLE TERMINATION UNIT THROUGH DETERMINED VPI/VCI
ONE-TO-n COMMUNICATIONS IN PROCESS

FIG. 34

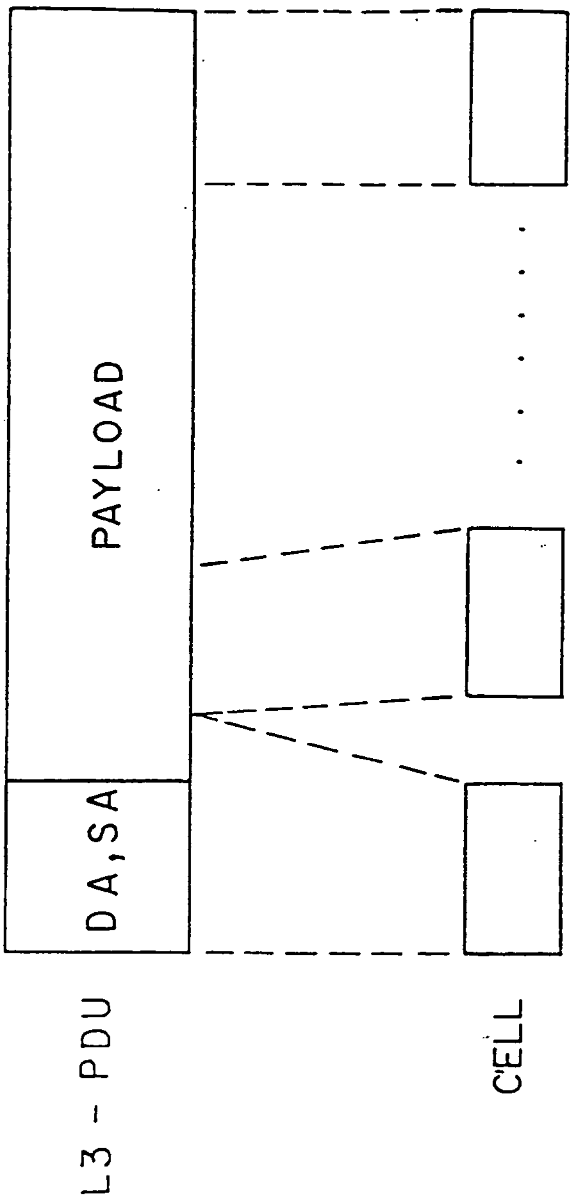


FIG 35

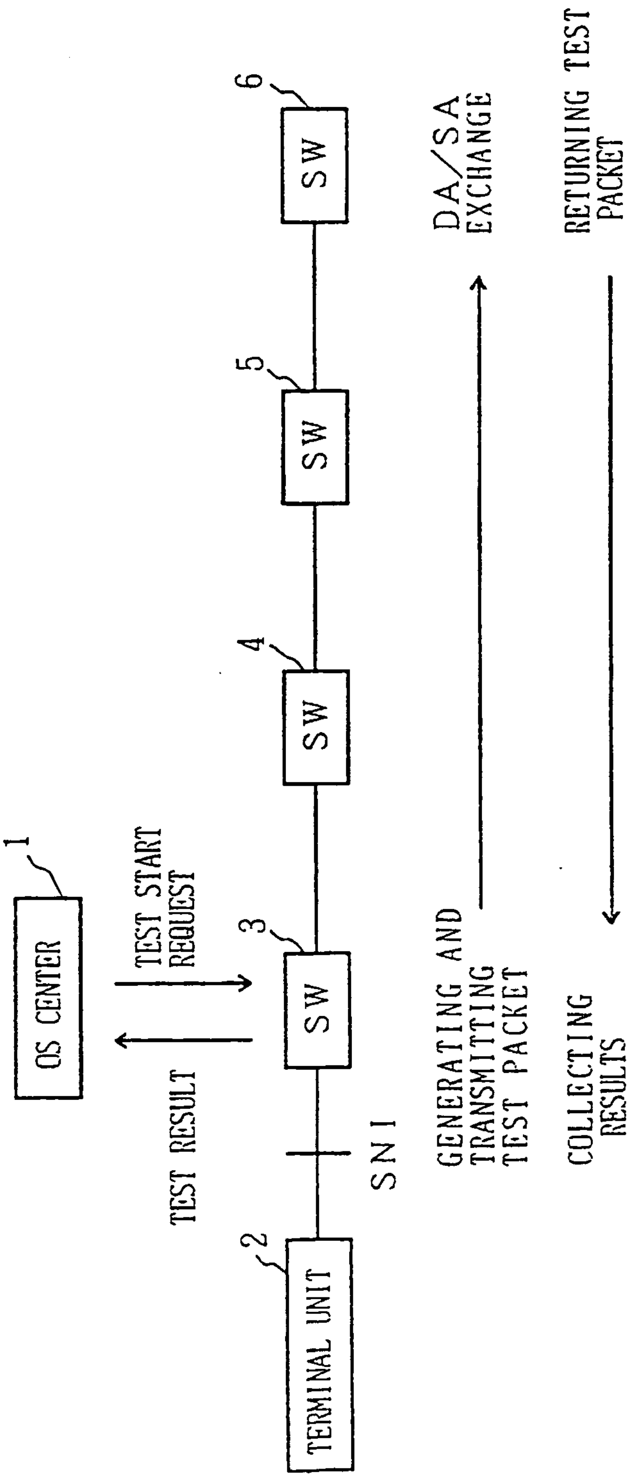
OS CENTER
1
TEST START REQUEST
TEST RESULT
TERMINAL UNIT
2
SNI
SW
3
SW
4
SW
5
SW
6
GENERATING AND TRANSMITTING TEST PACKET
DA/SA EXCHANGE
COLLECTING RESULTS
RETURNING TEST PACKET

FIG. 36

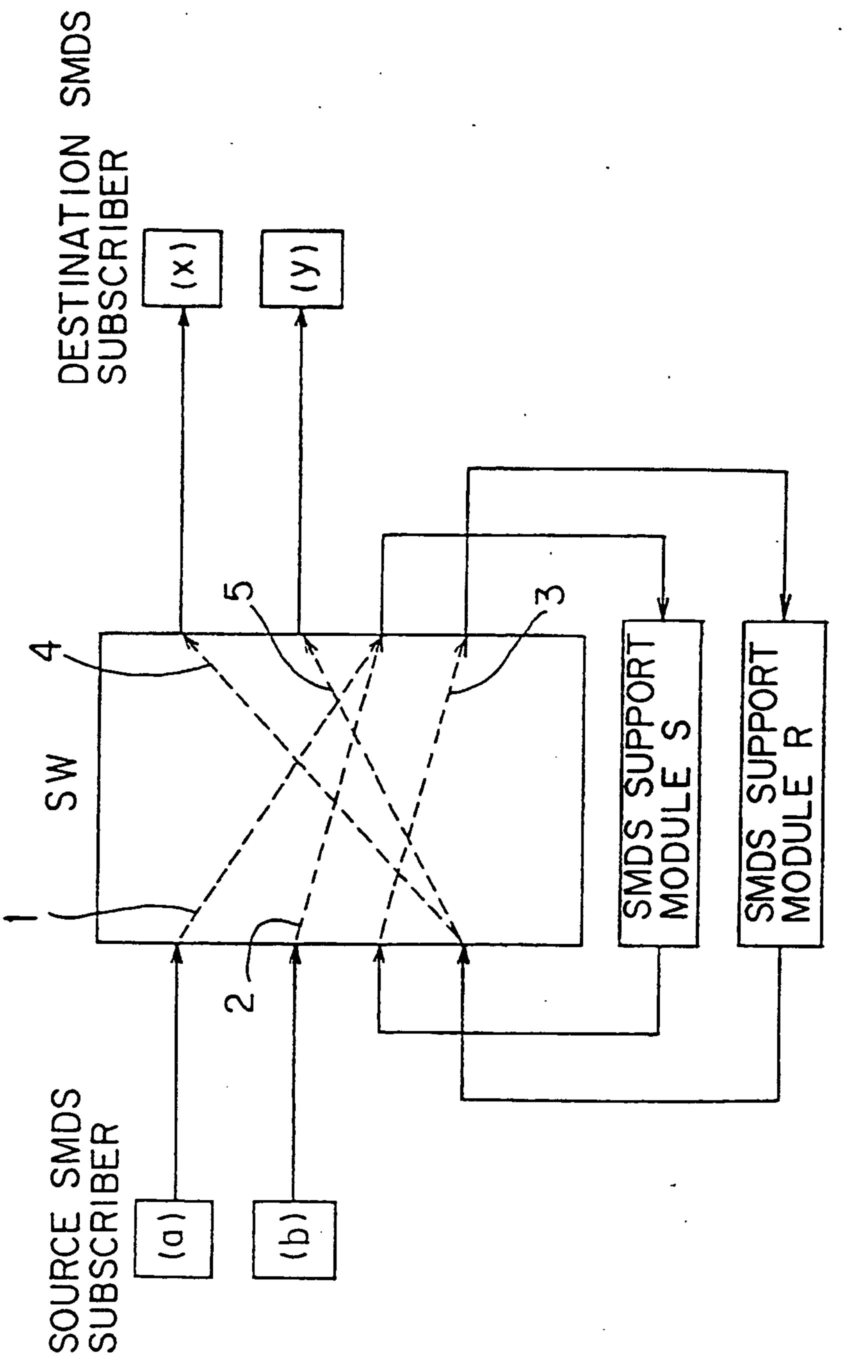
DESTINATION SMDS SUBSCRIBER
(x)
(y)
SW
4
5
3
1
2
SOURCE SMDS SUBSCRIBER
(a)
(b)
SMDS SUPPORT MODULE S
SMDS SUPPORT MODULE R

FIG. 37

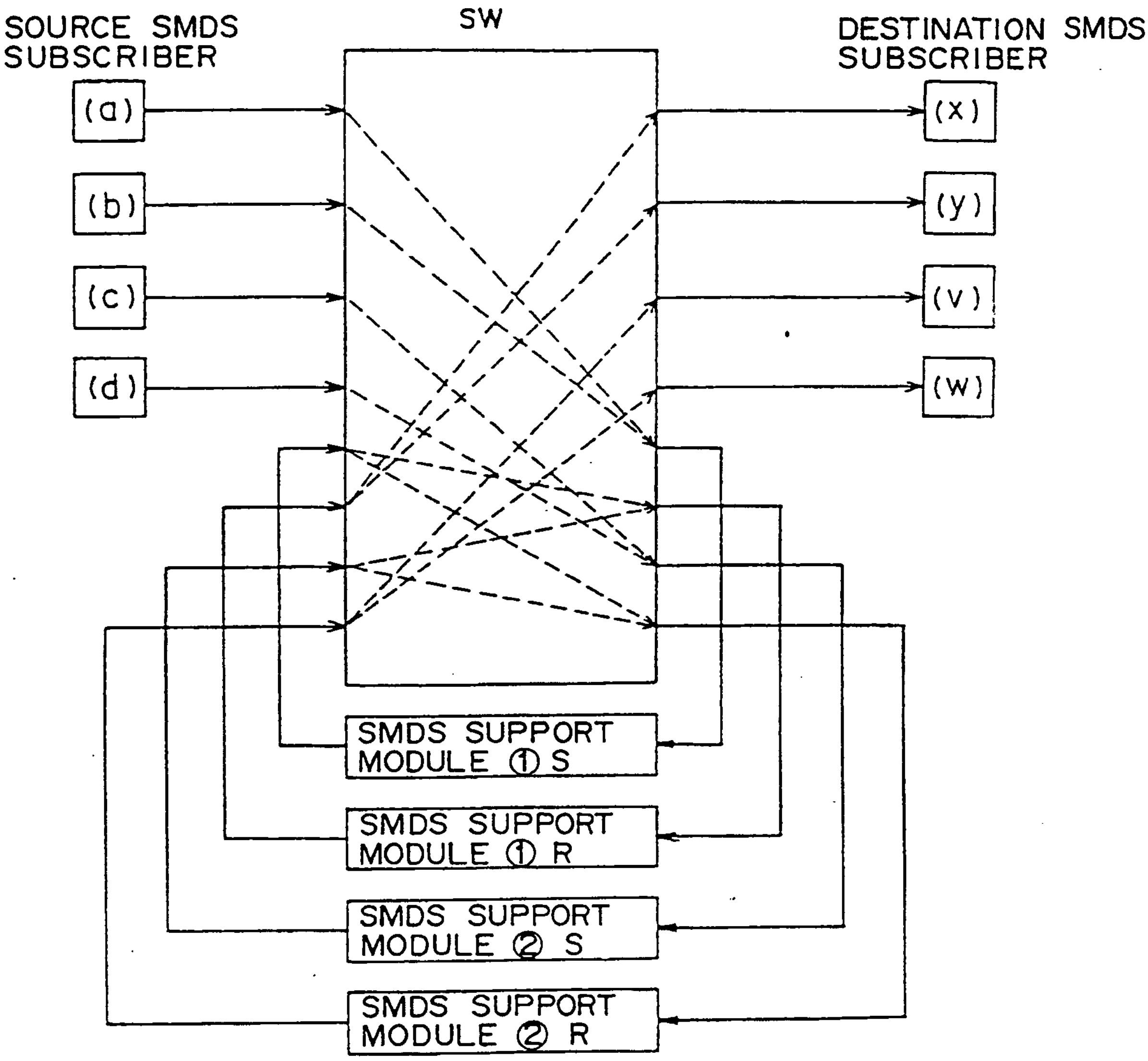
SOURCE SMDS SUBSCRIBER
SW
DESTINATION SMDS SUBSCRIBER
(a)
(b)
(c)
(d)
(x)
(y)
(v)
(w)
SMDS SUPPORT MODULE ① S
SMDS SUPPORT MODULE ① R
SMDS SUPPORT MODULE ② S
SMDS SUPPORT MODULE ② R

FIG. 38

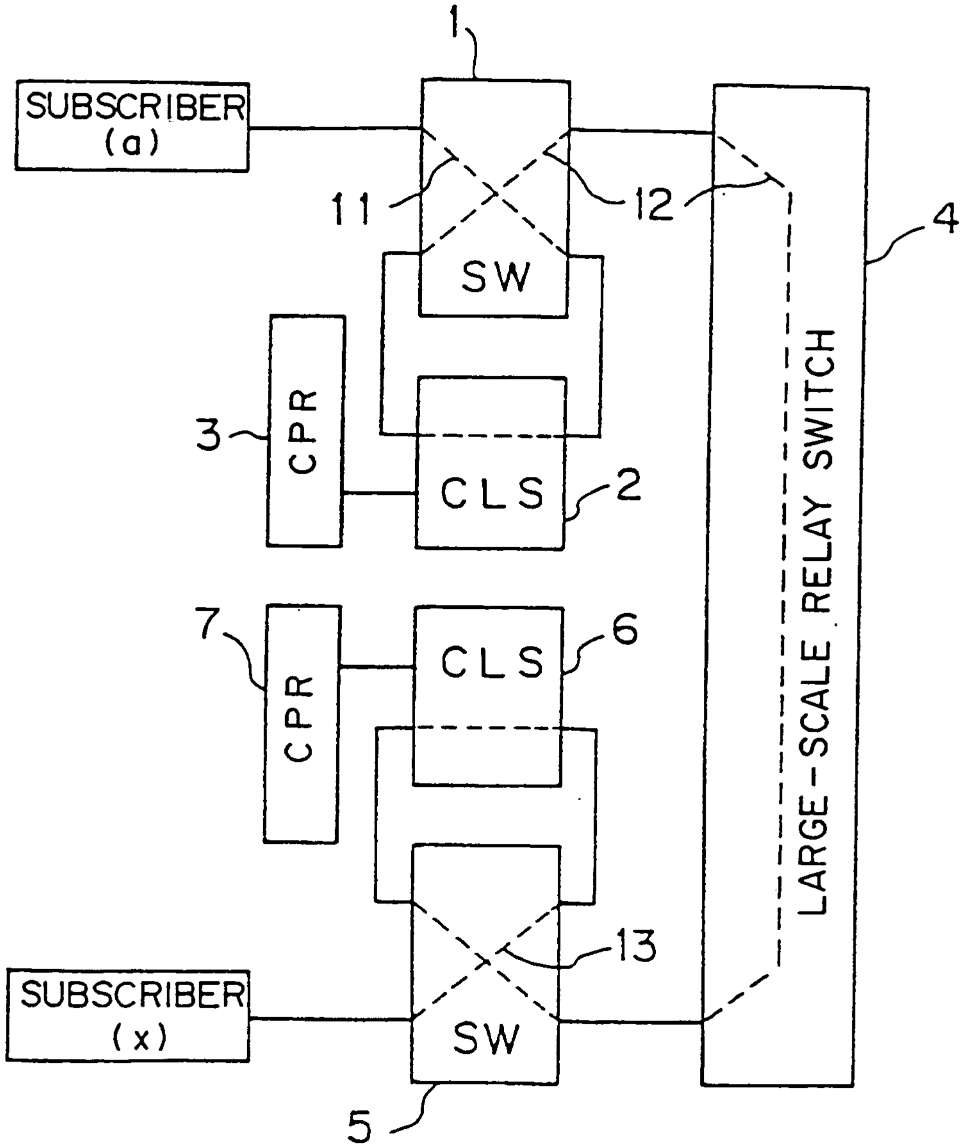
1
SUBSCRIBER (a)
11
12
4
SW
3
CPR
CLS
2
LARGE-SCALE RELAY SWITCH
7
CPR
CLS
6
13
SUBSCRIBER (x)
SW
5

FIG. 39

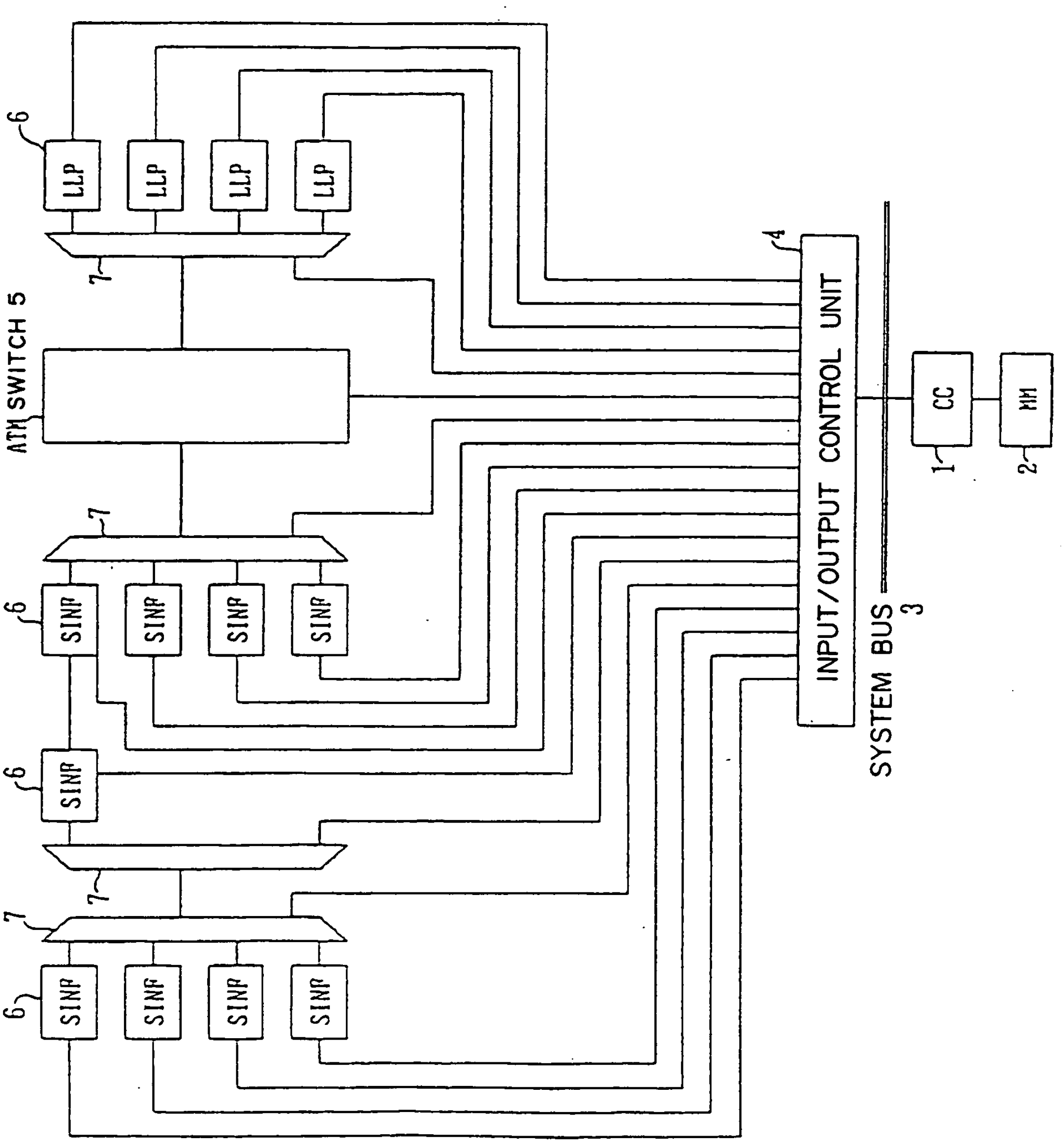
ATM SWITCH 5
LLP
LLP
LLP
LLP
SINF
SINF
SINF
SINF
SINF
SINF
SINF
SINF
SINF
INPUT/OUTPUT CONTROL UNIT
SYSTEM BUS
3
4
CC
MM
1
2
6
7

FIG. 40

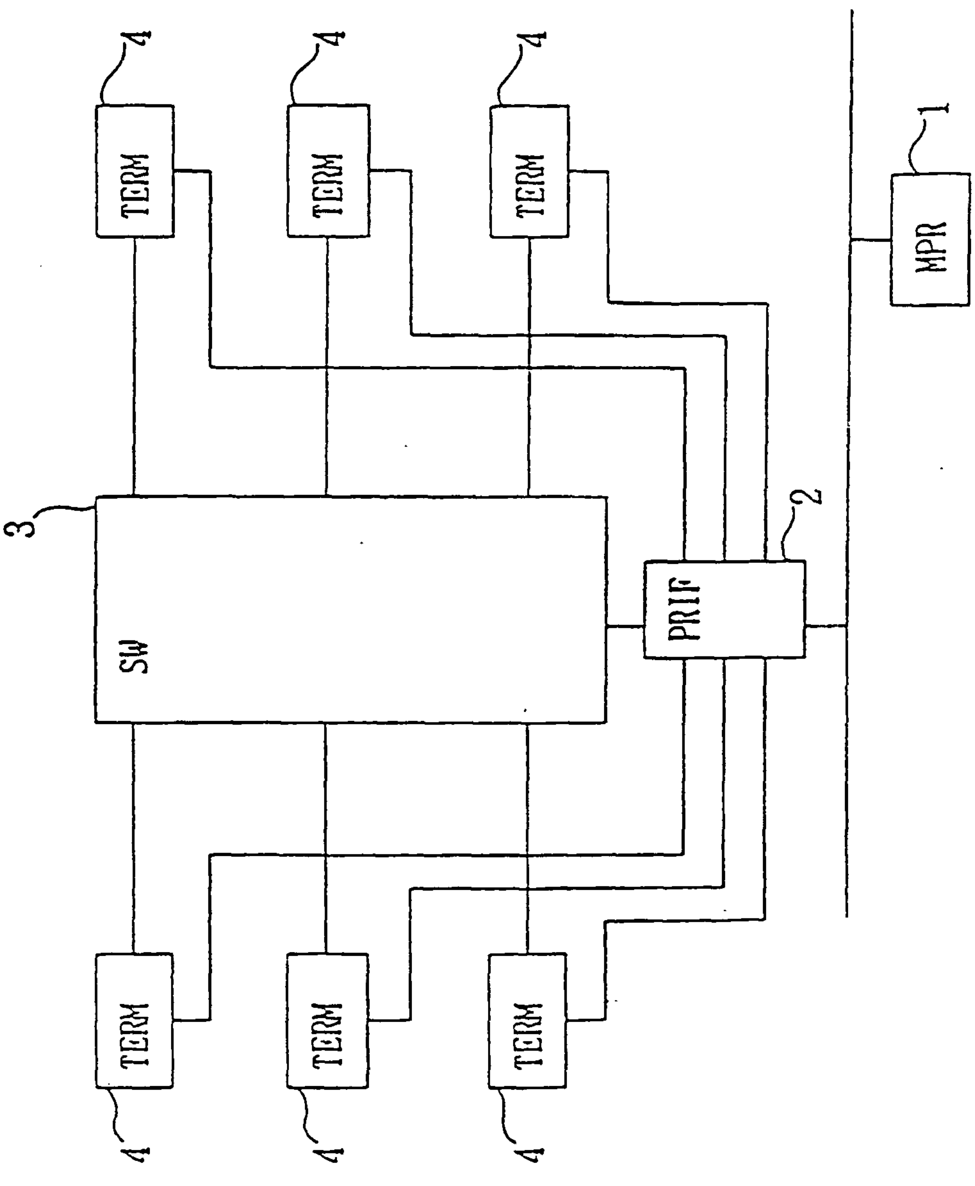


FIG. 41

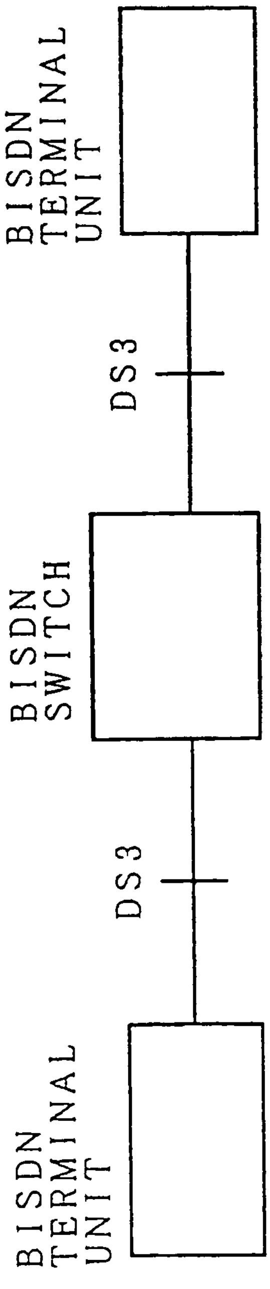
BISDN TERMINAL UNIT
DS3
BISDN SWITCH
DS3
BISDN TERMINAL UNIT

FIG. 42

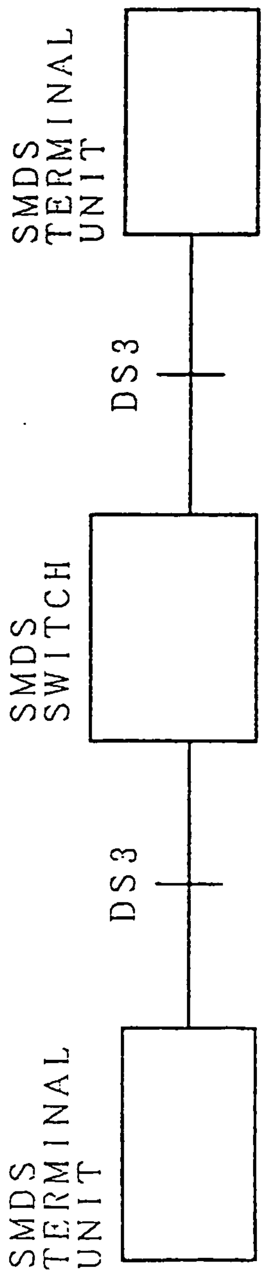


FIG. 43

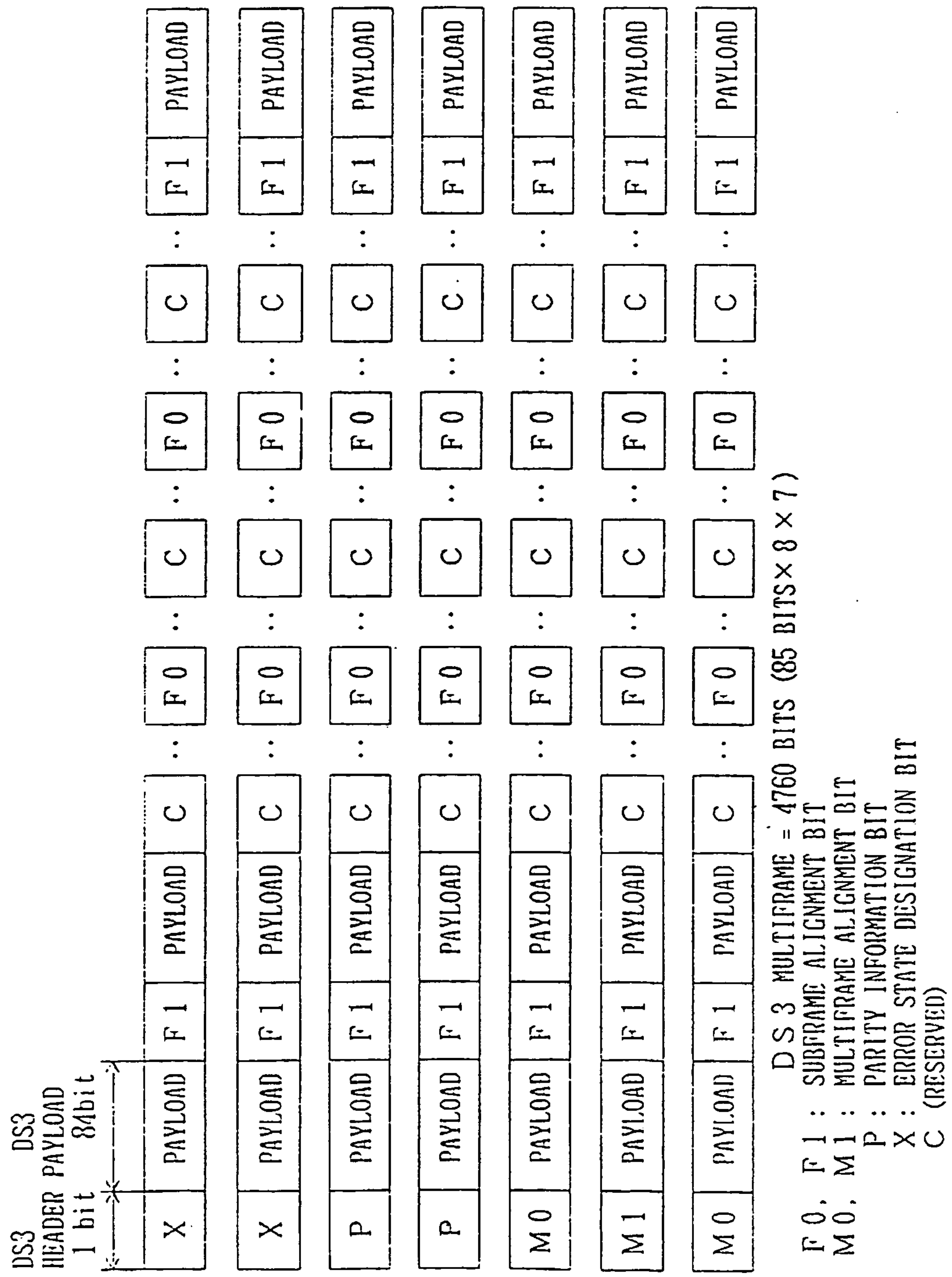
DS3 HEADER 1 bit
DS3 PAYLOAD 84bit
X
X
P
P
M0
M1
M0
PAYLOAD
F1
C
F0
DS3 MULTIFRAME = 4760 BITS (85 BITS × 8 × 7)
F0, F1 : SUBFRAME ALIGNMENT BIT
M0, M1 : MULTIFRAME ALIGNMENT BIT
P : PARITY INFORMATION BIT
X : ERROR STATE DESIGNATION BIT
C (RESERVED)

FIG. 44

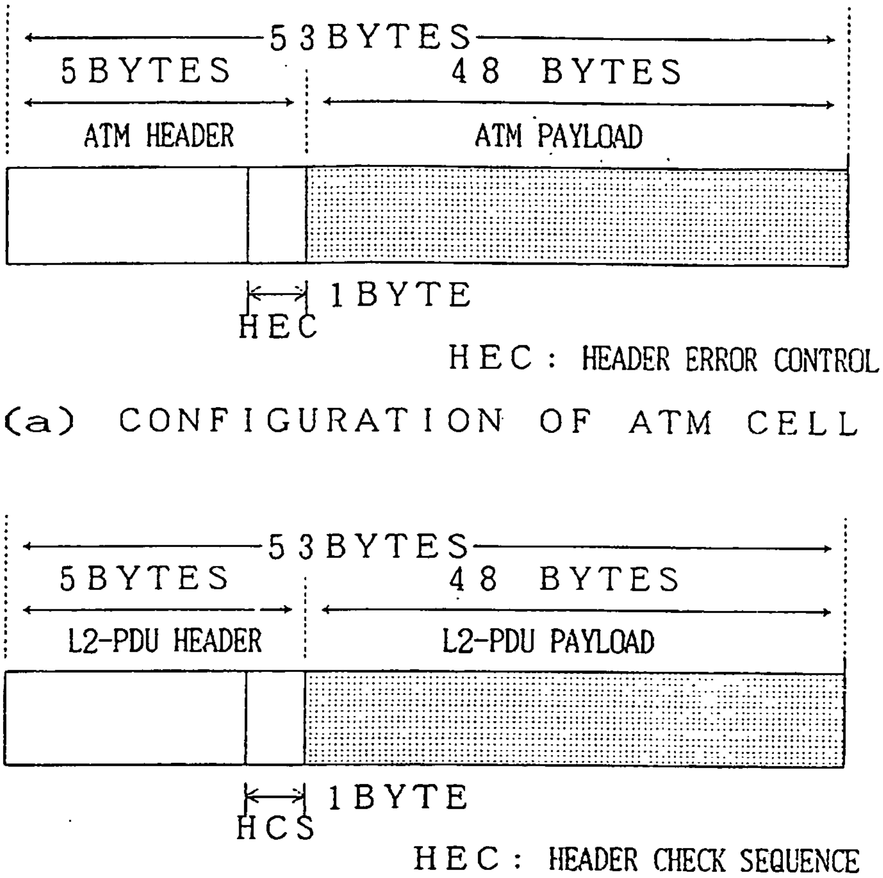


(a) CONFIGURATION OF ATM CELL

(b) CONFIGURATION OF SMDS CELL

FIG. 45

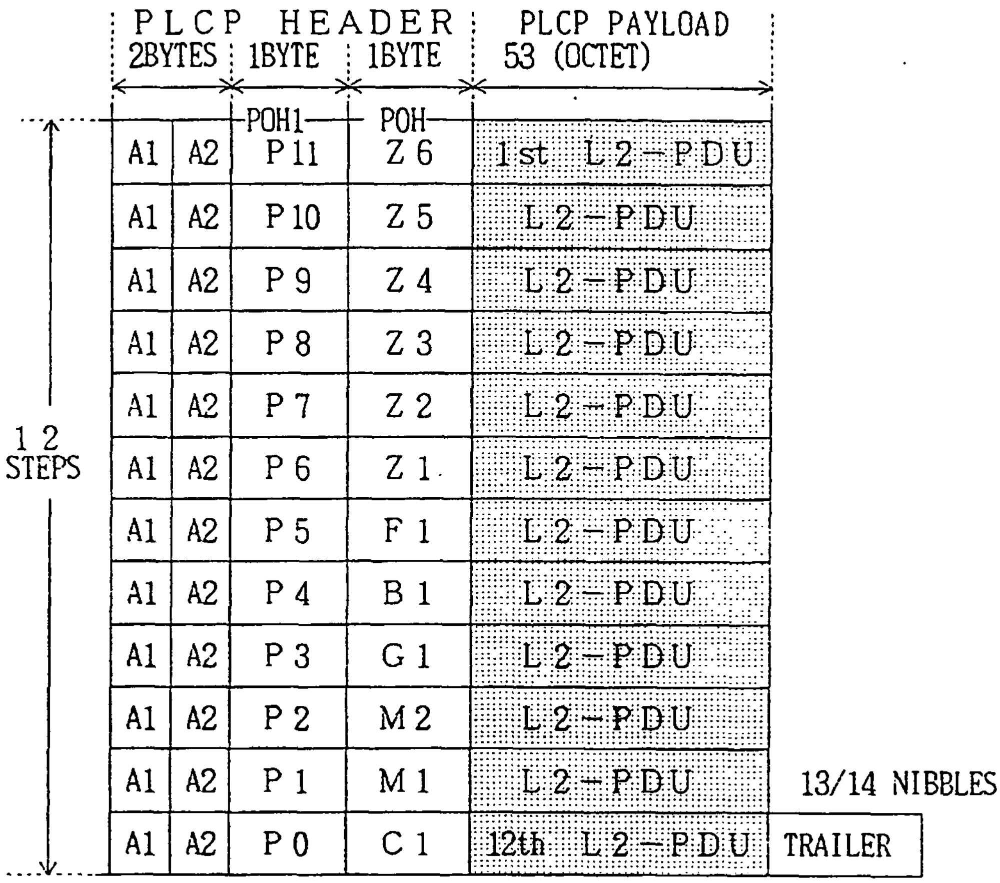


A1, A2 : FRAME ALIGNMENT
POHI (P11~P0) : PATH OVERHEAD IDENTIFIER OCTET
POH : PATH OVERHEAD OCTET
Z6~Z1 : GROSS OCTET
F1 : PLCP PATH USER CHANNEL
B1 : BIT INTERVAL PARITY 8
G1 : PLCP PATH STATUS
M2~M1 : SIP LEVEL 1 CONTROL INFORMATION
C1 : CYCLE STUFF COUNTER

FIG. 46

| ITEM | | BIT PATTERN | REMARKS |
|---|---|---|---|
| C1 | CYCLE STUFF COUNTER | | TL IS REPRESENTED BY 4 TYPES OF C1 AS SHOWN BELOW BECAUSE TRAILER LENGTH TL PERIODICALLY CHANGES IN DS3 PLCP FRAME. |
| | | 11111111 | ⟹ FIRST TYPE (TL=13) |
| | | 00000000 | ⟹ SECOND TYPE (TL=14) |
| | | 01100110 | ⟹ THIRD TYPE (TL=13 : NO STUFF) |
| | | 10011001 | ⟹ THIRD TYPE (TL=14 : STUFF) |
| TRAILER | | 1100 | LENGTH DEPENDS ON C1 BYTE VALUE. |

FIG. 47

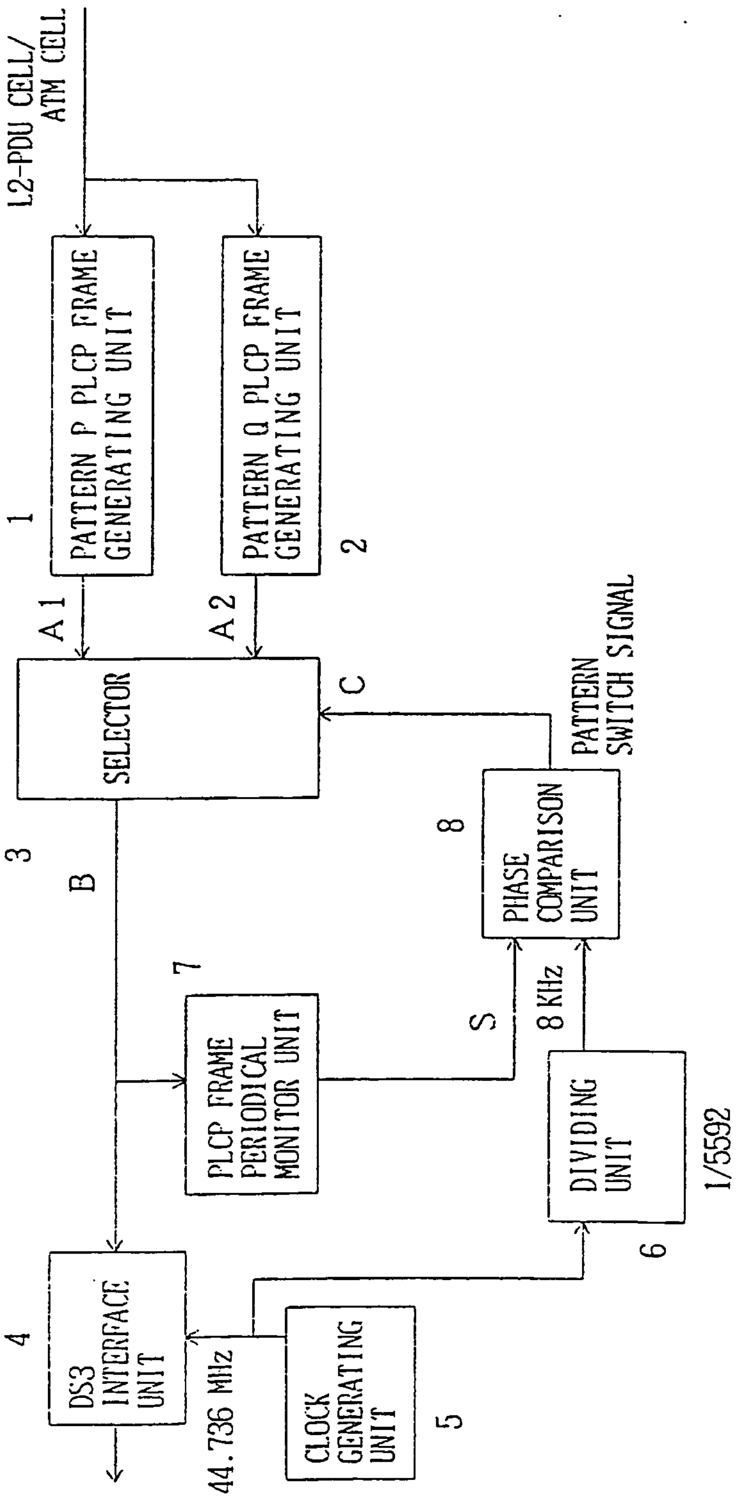
L2-PDU CELL/
ATM CELL
1
PATTERN P PLCP FRAME
GENERATING UNIT
PATTERN Q PLCP FRAME
GENERATING UNIT
2
A 1
A 2
SELECTOR
C
PATTERN
SWITCH SIGNAL
3
B
8
PHASE
COMPARISON
UNIT
7
PLCP FRAME
PERIODICAL
MONITOR UNIT
S
8 KHz
DIVIDING
UNIT
1/5592
6
4
DS3
INTERFACE
UNIT
44.736 MHz
CLOCK
GENERATING
UNIT
5

FIG. 48

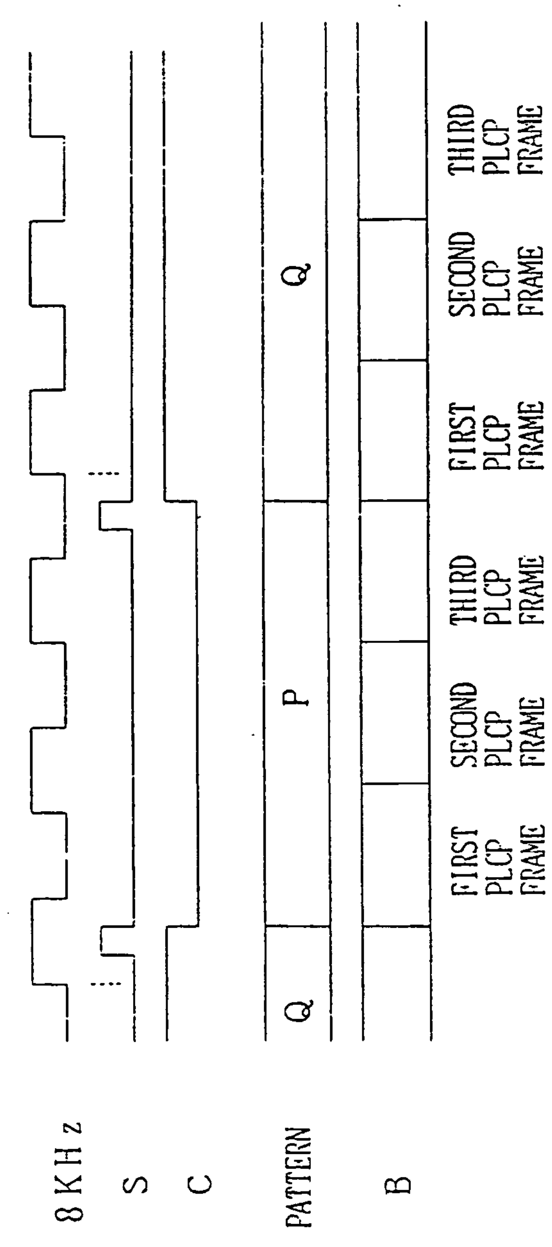
8KHz
S
C
PATTERN
B
Q
P
Q
FIRST PLCP FRAME
SECOND PLCP FRAME
THIRD PLCP FRAME
FIRST PLCP FRAME
SECOND PLCP FRAME
THIRD PLCP FRAME

FIG. 49

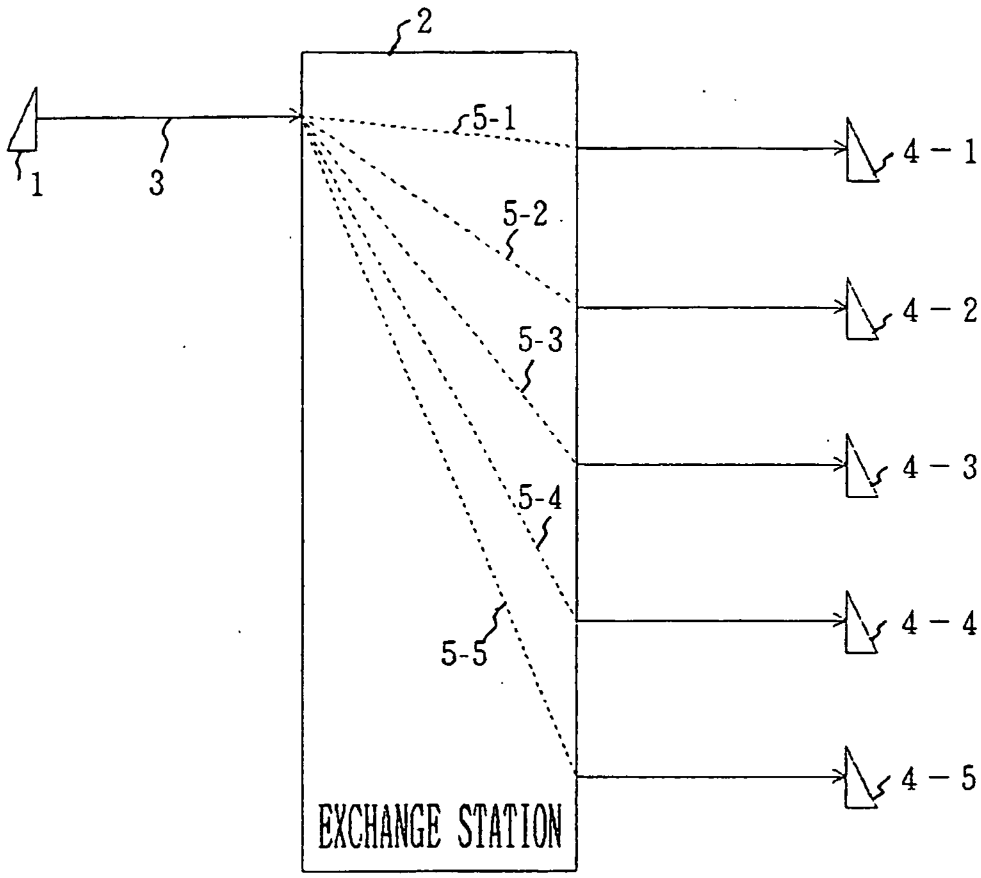


F I G. 50

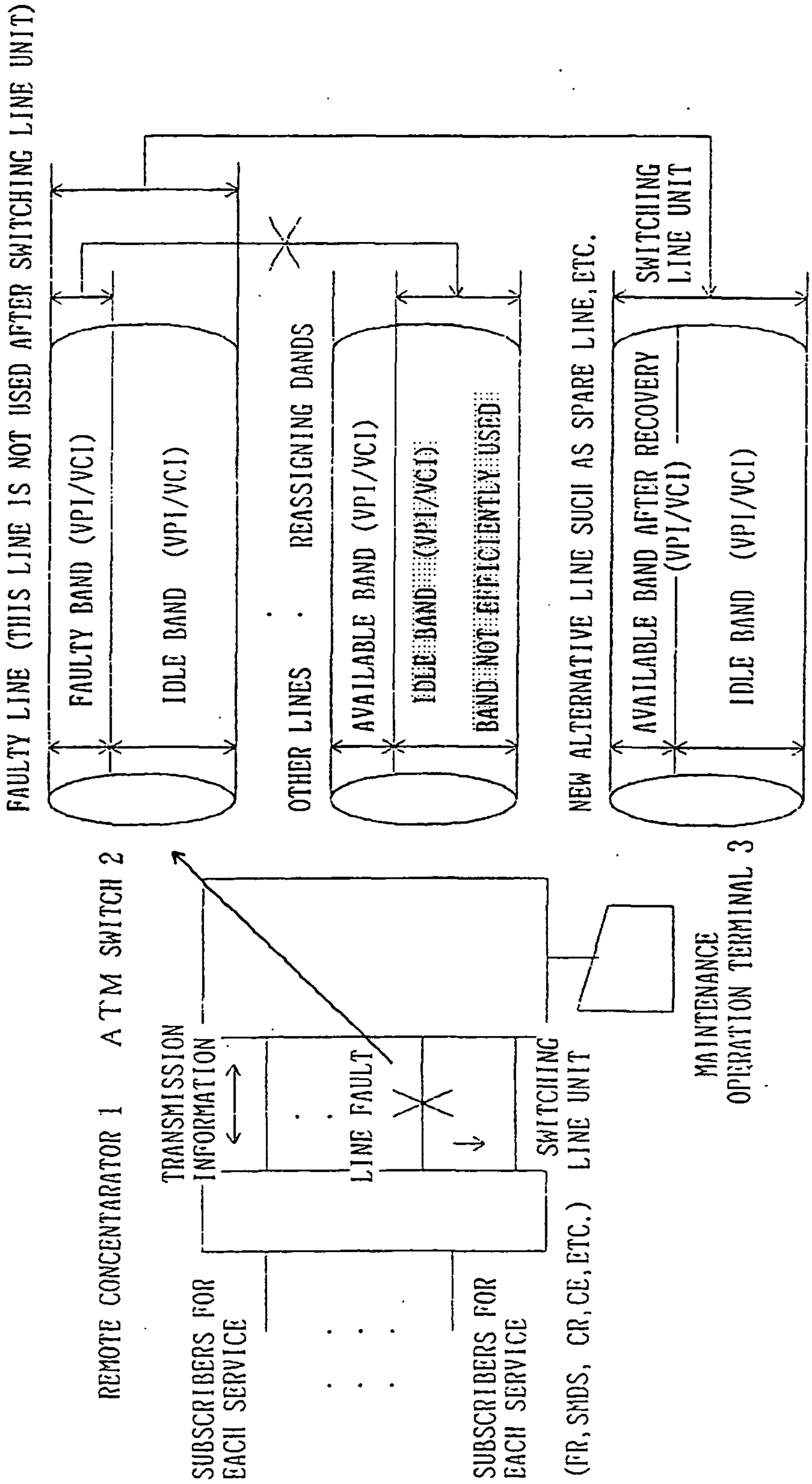

FAULTY LINE (THIS LINE IS NOT USED AFTER SWITCHING LINE UNIT)
FAULTY BAND (VPI/VCI)
IDLE BAND (VPI/VCI)
OTHER LINES
REASSIGNING DANDS
AVAILABLE BAND (VPI/VCI)
IDLE BAND (VPI/VCI)
BAND NOT EFFICIENTLY USED
NEW ALTERNATIVE LINE SUCH AS SPARE LINE, ETC.
SWITCHING LINE UNIT
AVAILABLE BAND AFTER RECOVERY (VPI/VCI)
IDLE BAND (VPI/VCI)
REMOTE CONCENTARATOR 1
ATM SWITCH 2
TRANSMISSION INFORMATION
LINE FAULT
SWITCHING LINE UNIT
MAINTENANCE OPERATION TERMINAL 3
SUBSCRIBERS FOR EACH SERVICE
SUBSCRIBERS FOR EACH SERVICE
(FR, SMDS, CR, CE, ETC.)


FIG. 51